# EUROPÄISCHE PATENTSCHRIFT

(11) **EP 1 157 301 B1**
(45) Veröffentlichungstag und Bekanntmachung des Hinweises auf die Patenterteilung: **09.02.2005**
(21) Anmeldenummer: 00912536.0
(22) Anmeldetag: 02.03.2000
(51) Int. Cl.: G02F 1/11, H01S 3/117, G02F 1/33, H01S 3/106

(54) **OPTISCHE MODULATIONSEINRICHTUNG**
OPTICAL MODULATION DEVICE
UNITE DE MODULATION OPTIQUE

(30) Priorität: 03.03.1999 DE 19909376
(43) Veröffentlichungstag der Anmeldung: 28.11.2001
(73) Patentinhaber: TRUMPF Laser GmbH + Co. KG, 78713 Schramberg (DE)
(72) Erfinder: KUMKAR, Malte, D-78713 Schramberg (DE)
(74) Vertreter: Beck, Jürgen, Dr. Dipl.-Phys.
(86) Internationale Anmeldenummer: PCT/EP2000/001802
(87) Internationale Veröffentlichungsnummer: WO 2000/052520

(56) Entgegenhaltungen:
- EP-A- 0 658 813
- US-A- 4 707 835
- US-A- 5 801 389
- PATENT ABSTRACTS OF JAPAN vol. 1998, no. 02, 30. Januar 1998 (1998-01-30) -& JP 09 281530 A (KOKUSAI DENSHIN DENWA CO LTD <KDD>), 31. Oktober 1997 (1997-10-31) -& US 5 883 734 A (AKIBA SHIGEYUKI ET AL) 16. März 1999 (1999-03-16)

## Beschreibung

Die Erfindung betrifft eine optische Modulationseinrichtung, zur Kopplung eines Eintrittsstrahlungsfeldes mit mindestens einem von zwei Austrittsstrahlungsfeldern, umfassend einen akustooptischen Modulator, durch dessen akustooptisch aktives Medium ein erstes Schallwellenfeld in einer Schallausbreitungsrichtung hindurchwandert und mittels einer ersten akustooptischen Modulation ein in einer Eintrittsrichtung einfallendes mit dem Eintrittsstrahlungsfeld gekoppeltes Strahlungsfeld im wesentlichen in einen sich in Richtung einer Strahlachse des einfallenden Strahlungsfeldes ausbreitenden transmittierten Ast und einen mit seiner Strahlachse in einem Beugungswinkel erster Ordnung zur Strahlachse des transmittierten Astes verlaufenden gebeugten Ast aufteilt, wobei eine Winkelhalbierende zwischen der Strahlachse des einfallenden Strahlungsfeldes und der Strahlachse des gebeugten Astes ungefähr parallel zur Schallausbreitungsrichtung des Schallwellenfeldes verläuft.

Derartige optische Modulationseinrichtungen sind beispielsweise aus dem Buch "Fundamentals of Photonics" von Bahaa E.A. Saleh und Malvin Carl Teich, John Wiley und Sons, New York, 1991, Seite 799 bis Seite 831 bekannt.

Bei diesen Modulationseinrichtungen besteht allerdings das Problem, daß dann, wenn diese Modulationseinrichtungen zum Schalten von Strahlungsfeldern eingesetzt werden sollen, Beugungseffizienzen von bis zu 100% erreicht werden müssen, die wenn überhaupt nur mit großem Aufwand erreichbar sind.

Der Erfindung liegt daher die Aufgabe zugrunde, eine optische Modulationseinrichtung der gattungsgemäßen Art derart zu verbessern, daß ein möglichst effizientes Schalten des einfallenden Strahlungsfeldes zwischen den Austrittsstrahlungsfeldern möglich ist.

Diese Aufgabe wird bei einer optischen Modulationseinrichtung der eingangs beschriebenen Art erfindungsgemäß dadurch gelöst, daß ein Strahlungsführungssystem vorgesehen ist, welches den bei der ersten akustooptischen Modulation entstehenden gebeugten Ast und den transmittierten Ast so umlenkt, daß diese mit ihren Strahlachsen ungefähr im Beugungswinkel erster Ordnung relativ zueinander verlaufend mit einem wandernden, ungefähr dieselbe Frequenz wie das erste Schallwellenfeld aufweisenden zweiten Schallwellenfeld zur Erzeugung einer zweiten akustooptischen Modulation wechselwirken, wodurch aus dem umgelenkten gebeugten und dem umgelenkten transmittierten Ast im wesentlichen jeweils ein gebeugter und ein transmittierter Ast entstehen, daß die Ausbreitungsrichtung des zweiten Schallwellenfeldes relativ zu dem umgelenkten gebeugten Ast und dem umgelenkten transmittierten Ast so ausgerichtet ist, daß der aus dem umgelenkten gebeugten Ast entstehende transmittierte Ast und der aus dem umgelenkten transmittierten Ast entstehende gebeugte Ast sich in ungefähr derselben Richtung ausbreiten, sich zumindest teilweise überlagern und dabei im wesentlichen dieselbe Frequenz aufweisen, so daß diese sich zumindest teilweise überlagernden Äste durch im wesentlichen konstruktive Interferenz ein erstes Strahlungsfeld bilden, und außerdem der aus dem umgelenkten transmittierten Ast entstehende transmittierte Ast und der aus dem umgelenkten gebeugten Ast entstehende gebeugte Ast sich in derselben Richtung ausbreiten, sich zumindest teilweise überlagern und dabei im wesentlichen dieselbe Frequenz aufweisen, so daß diese sich zumindest teilweise überlagernden Äste durch im wesentlichen destruktive Interferenz ein zweites Strahlungsfeld bilden, und daß das erste Strahlungsfeld mit dem ersten Austrittsstrahlungsfeld und das zweite Strahlungsfeld mit dem zweiten Austrittsstrahlungsfeld gekoppelt ist.

Der Vorteil der erfindungsgemäßen Lösung ist darin zu sehen, daß durch die erfindungsgemäße Durchführung der zweiten akustooptischen Modulation dergestalt, daß jeweils zwei sich überlagernde und dieselbe Frequenz aufweisende Äste entstehen, jeweils konstruktive und destruktive Interferenz einsetzbar ist, um das erste Strahlungsfeld und das zweite Strahlungsfeld aus den jeweiligen Ästen zu bilden.

Dadurch sind große Intensitätsvariationen zwischen dem ersten und zweiten Strahlungsfeld bei geringer Beugungseffizienz möglich. Beispielsweise ist es ausreichend, die erste akustooptische Modulation und die zweite akustooptische Modulation mit einer Beugungseffizienz von maximal 50% betreiben zu können, um das Eintrittsstrahlungsfeld vollständig in das erste Strahlungsfeld oder das zweite Strahlungsfeld einzukoppeln.

Dies läßt insbesondere eine Verwendung einfacher optischer Modulatoren und eine geringere Hochfrequenzleistung zur Erzeugung der Schallwellenfelder zu, so daß damit insgesamt die akustooptischen Modulatoren einfacher aufgebaut und betrieben werden können.

Besonders hohe Intensitäten des ersten Strahlungsfeldes lassen sich dann erhalten, wenn die das erste Strahlungsfeld bildenden Äste sich in wesentlichen Teilen überlagern.

Auch hinsichtlich der das zweite Strahlungsfeld bildenden Äste ist eine teilweise Überlagerung ausreichend, wobei zum Erreichen möglichst großer Intensitäten sich die das zweite Strahlungsfeld bildenden Äste ebenfalls möglichst in wesentlichen Teilen überlagern.

Hinsichtlich der Erzeugung des ersten und zweiten Schallwellenfeldes wäre es prinzipiell denkbar, unterschiedliche Schallgeneratoren mit unterschiedlichen Schallfrequenzgeneratoren zu verwenden.

Um jedoch sicherzustellen, daß die Frequenzen des ersten und zweiten Schallwellenfeldes möglichst nahe beieinanderliegen, oder sogar identisch sind, ist vorzugsweise vorgesehen, daß die Erzeugung des ersten und zweiten Schallwellenfeldes mit einem einzigen Schallfrequenzgenerator erfolgt.

Ferner ist zur Erreichung einer möglichst gleich großen Beugungseffizienz bei der ersten akustooptischen Modulation und der zweiten akustooptischen Modulation vorzugsweise vorgesehen, daß das erste und das zweite Schallwellenfeld im wesentlichen gleich große Amplituden aufweisen.

Bei einer erfindungsgemäßen Modulationseinrichtung sieht ein möglichst einfaches Konzept vor, daß die erste akustooptische Modulation und die zweite akustooptische Modulation in getrennten akustooptischen Modulatoren erfolgen, so daß durch diese Trennung der akustooptischen Modulatoren auch die Möglichkeit besteht, hinsichtlich der Beugungseffizienz bei den einzelnen akustooptischen Modulationen zu variieren.

Diese Lösung ist insbesondere dann günstig, wenn die Beugungseffizienz bei der ersten aktustooptischen Modulation oder der zweiten akustooptischen Modulation unterschiedlich gegenüber der Beugungseffizienz bei der jeweils anderen akustooptischen Modulation sein soll.

Insbesondere lassen sich mit dieser Lösung beliebige Intensitäten des ersten Strahlungsfeldes und des zweiten Strahlungsfeldes wählen.

Um jedoch in möglichst einfacher Art und Weise sicherstellen zu können, daß die erste und die zweite akustooptische Modulation mit derselben Frequenz und unter denselben Gesamtbedingungen erfolgen, ist vorzugsweise vorgesehen, daß die erste akustooptische Modulation und die zweite akustooptische Modulation in demselben akustooptischen Modulator erfolgen, in welchem sich dann eine einzige Schallwelle ausbreitet und ein einziges Gitter aus Wellenfronten erzeugt, an welchem die beiden akustooptischen Modulationen erfolgen.

Selbst bei Durchführen der zwei akustooptischen Modulationen in ein und demselben Modulator besteht die Möglichkeit, die erste akustooptische Modulation und die zweite akustooptische Modulation in demselben akustooptischen Modulator im wesentlichen räumlich trennbar erfolgen zu lassen, so daß auch eine einfache Trennung des ersten Strahlungsfeldes und des zweiten Strahlungfeldes vom einfallenden Strahlungsfeld möglich ist.

Insbesondere der Aufbau der Strahlungsführungseinrichtung und die Strahlungsführung selbst lassen sich dann noch weiter vereinfachen, wenn die erste akustooptische Modulation und die zweite akustooptische Modulation im wesentlichen in demselben Volumenbereich des akustooptischen Modulators erfolgen, so daß damit auch sichergestellt ist, daß für beide akustooptischen Modulationen dieselben Bedingungen bestehen.

Hinsichtlich der Ausrichtung der Strahlachsen bei den beiden akustooptischen Modulationen relativ zur jeweiligen Schallausbreitungsrichtung wurden bislang keine näheren Angaben gemacht. So sieht ein vorteilhaftes Ausführungsbeispiel vor, daß eine Strahlachse des einfallenden Strahlungsfeldes und eine Strahlachse des bei der ersten akustooptischen Modulation entstehenden gebeugten Astes sowie eine Strahlachse des transmittierten Astes eine zur ersten Schallausbreitungsrichtung ungefähr parallele erste Modulationsebene aufspannen und daß bei der zweiten akustooptischen Modulation die Strahlachsen der aus dem gebeugten Ast und dem transmittierten Ast entstehenden gebeugten und transmittierten Äste eine zur zweiten Schallausbreitungsrichtung ungefähr parallele zweite Modulationsebene aufspannen.

Dadurch, daß die erste akustooptische Modulation und die zweite akustooptische Modulation jeweils in einer Ebene erfolgen, lassen sich durch geeignete Positionierung der Ebenen die beiden akustooptischen Modulationen je nach Erfordernis trennen oder zusammenlegen.

So sieht ein vorteilhaftes Ausführungsbeispiel vor, daß die erste und die zweite Modulationsebene in einer gemeinsamen Ebene liegen, wodurch die Strahlführung bei der Erzeugung des umgelenkten gebeugten Astes und des umgelenkten transmittierten Astes vereinfacht wird, wobei damit nicht zwingend festgelegt ist, daß die beiden akustooptischen Modulationen nicht getrennt in dem akustooptischen Modulator erfolgen.

Ferner ist damit auch nicht festgelegt, daß zwingend ein akustooptischer Modulator eingesetzt werden muß. Es besteht auch dann, wenn die erste und zweite Modulationsebene in einer gemeinsamen Ebene liegen, die Möglichkeit, zwei voneinander getrennte akustooptische Modulatoren einzusetzen.

Eine weitere vorteilhafte Lösung sieht vor, daß die erste und zweite Modulationsebene parallelversetzt zueinander angeordnet sind. Diese Anordnung der beiden Modulationsebenen schafft die Möglichkeit, in einfacher Weise das erste Strahlungsfeld und das zweite Strahlungsfeld vom einfallenden Strahlungsfeld zu trennen, auch wenn beide Modulationen in einem einzigen akustooptischen Modulator erfolgen.

Eine andere günstige Möglichkeit der Trennung zwischen dem einfallenden Strahlungsfeld einerseits und dem ersten Strahlungsfeld und dem zweiten Strahlungsfeld, die nach der zweiten akustooptischen Modulation entstehen, andererseits, besteht darin, die erste Modulationsebene und die zweite Modulationsebene in einem Winkel zueinander verlaufen zu lassen.

Auch diese Lösung erfordert nicht zwingend die Durchführung der ersten akustooptischen Modulation und der zweiten akustooptischen Modulation in einem einzigen akustooptischen Modulator. Auch bei dieser Lösung können die beiden akustooptischen Modulatoren getrennt voneinander angeordnet sein.

Dann, wenn beide akustooptischen Modulationen in einem akustooptischen Modulator erfolgen, ist vorteilhafterweise vorgesehen, daß die erste Modulationsebene und die zweite Modulationsebene sich schneiden und eine parallel zur Schallausbreitungsrichtung des Schallwellenfeldes verlaufende Schnittlinie aufweisen.

Eine besonders günstige Lösung sieht dabei vor, daß die Schnittlinie durch den Volumenbereich des akustooptischen Modulators hindurchläuft, in welchem die erste akustooptische Modulation und die zweite akustooptische Modulation erfolgen, so daß für die beiden akustooptischen Modulationen im wesentlichen möglichst dasselbe Gitter aus Wellenfronten verantwortlich ist.

Hinsichtlich der Ausbildung des Strahlungsführungssystems wurden im Zusammenhang mit der bisherigen Erläuterung der einzelnen Ausführungsbeispiele keine näheren Angaben gemacht. So sieht eine vorteilhafte Ausführungsform vor, daß das Strahlungsführungssystem den bei der ersten akustooptischen Modulation entstehenden gebeugten Ast und den transmittierten Ast von der ersten Modulationsebene in die zweite Modulationsebene umsetzt und dann in der zweiten Modulationsebene als umgelenkten gebeugten Ast und als umgelenkten transmittierten Ast der zweiten akustooptischen Modulation zuführt.

Dabei kann beim Einsetzen zweier akustooptischer Modulatoren das Strahlungsführungssystem so ausgebildet sein, daß es den gebeugten Ast und den transmittierten Ast von dem ersten akustooptischen Modulator umlenkt und dem zweiten akustooptischen Modulator zuführt.

Im Falle eines einzigen akustooptischen Modulators ist vorzugsweise das Strahlungsführungssystem so ausgebildet, daß es den bei der ersten akustooptischen Modulation entstehenden gebeugten Ast und den transmittierten Ast in denselben akustooptischen Modulator als umgelenkten gebeugten Ast und umgelenkten transmittierten Ast zurückführt.

Besonders günstige Bedingungen für die zweite akustooptische Modulation liegen dann vor, wenn zu der zweiten akustooptischen Modulation der gebeugte Ast ungefähr parallel zu dem bei der ersten akustooptischen Modulation entstehenden transmittierten Ast verläuft.

Ferner ist vorzugsweise vorgesehen, daß zu der zweiten akustooptischen Modulation der transmittierte Ast ungefähr parallel zu dem bei der ersten akustooptischen Modulation entstehenden gebeugten Ast verläuft.

Diese Bedingungen hinsichtlich des parallelen Verlaufs der verschiedenen Äste lassen sich jedoch nur dann erfüllen wenn entweder die erste und zweite Modulationsebene parallelversetzt sind oder in einer Ebene zusammenfallen.

Hinsichtlich der Strahlungsführungseigenschaften des Strahlungsführungssystems wurden im Zusammenhang mit der bisherigen Erläuterung der einzelnen Ausführungsbeispiele keine näheren Angaben gemacht.

So sieht eine besonders vorteilhafte Ausführungsform des erfindungsgemäßen Strahlungsführungssystems vor, daß dieses den gebeugten Ast und den transmittierten Ast so umlenkt, daß in beiden Ästen der optische Weg zwischen der ersten akustooptischen Modulation und der zweiten akustooptischen Modulation ungefähr gleich groß ist.

Zweckmäßigerweise ist der optische Weg des Strahlungsführungssystems so wählbar, daß die relative Phasenlage der einzelnen Äste der miteinander interferierenden Äste zur Bildung des ersten Strahlungsfeldes und des zweiten Strahlungsfeldes definiert festlegbar ist.

Ein erfindungsgemäßes Strahlungsführungssystem kann dabei in unterschiedlichster Art und Weise realisiert sein.

Eine Realisierung kann durch Lichtleiter erfolgen, wobei beispielsweise für den gebeugten Ast 40B und den transmittierten Ast 40T jeweils ein eigener Lichtleiter vorgesehen sein kann.

Die Zurückführung der einzelnen Äste ist beispielsweise auch dadurch möglich, daß der transmittierte Ast in ein Ende eines Lichtleiters eingekoppelt wird und der gebeugte Ast in das andere Ende und jeweils dann die zurückgeführten Äste an den entgegengesetzten Enden wieder austreten.

Eine andere Lösung sieht vor, daß das Strahlungsführungssystem mindestens zwei Strahlumlenkungen aufweist, welche die mit dem Beugungswinkel auseinanderlaufenden Äste wieder mit dem Beugungswinkel aufeinander zu laufen läßt, beispielsweise als zurückgeführte Äste.

Vorzugsweise sind die Strahlumlenkungen durch Reflektorflächen gebildet.

Vorzugsweise ist dabei vorgesehen, daß die zwei Reflektorflächen in einem Winkel von weniger als 90° zueinander verlaufen.

Eine andere Lösung sieht einen Reflektor und eine Abbildungsoptik, beispielsweise eine Teleskopoptik umfassend mindestens zwei Linsen, vor.

Hinsichtlich der Ausbildung des Strahlungsrückführungssystems wurden bislang keine näheren Angaben gemacht.

Eine vorteilhafte Ausführungsform sieht vor, daß das Strahlungsrückführungssystem die zurückgeführten Äste so ausrichtet, daß diese in dem akustooptischen Modulator aufeinanderzu verlaufen, so daß die aus diesen wieder entstehenden transmittierten und gebeugten Äste möglichst nahe beieinanderliegend entstehen.

Vorzugsweise erfolgt dies so, daß sich die Äste in dem akustooptischen Modulator zumindest bereichsweise, noch besser im wesentlichen vollständig, wieder schneiden.

In einem Fall ist dabei vorgesehen, wenn der jeweils zurückgeführte Ast im akustooptischer Modulator parallel zum jeweils anderen Ast verläuft.

Eine besonders günstige Lösung, insbesondere im Hinblick auf die Ausbildung eines räumlich möglichst einheitlichen zurücklaufenden ersten Strahlungsfeldes und eines räumlich möglichst einheitlichen zweiten Strahlungsfeldes sieht vor, daß das erste Strahlungsrückführungssystem die zurückgeführten Äste so in dem optisch aktiven Volumen des akustooptischen Modulators verlaufen läßt, daß diese sich ungefähr im Verzweigungsbereich einer Aufteilung in dem transmittierten und dem gebeugten Ast zumindest teilweise schneiden, wobei der jeweils eine zurückgeführte Ast vorzugsweise ungefähr deckungsgleich, jedoch mit entgegengesetzter Ausbreitungsrichtung zum jeweils anderen Ast in dem optisch aktiven Volumenbereich innerhalb des akustooptischen Modulators verläuft. Damit fallen auch die aus den zurückgeführten Ästen wieder entstehenden transmittierten und gebeugten Äste im wesentlichen miteinander zusammen.

Eine andere alternative Lösung sieht vor, daß das Strahlungsführungssystem die zurückgeführten Äste als in dem akustooptischen Modulator auseinanderlaufende Äste zurückführt, das heißt, daß die jeweils zurückgeführten Äste, gebildet beispielsweise durch Reflexion sowohl des transmittierten Astes als auch des gebeugten Astes, als auseinanderlaufende Äste in dem akustooptisch aktiven Medium innerhalb des akustooptischen Modulators verlaufen.

Auch bei dieser relativen Orientierung der zurückgeführten Äste ist es denkbar, den transmittierten Ast und den gebeugten Ast jeweils in einen Lichtleiter einzukoppeln und am anderen Ende mit entsprechender Ausrichtung wieder aus diesem austreten zu lassen.

Vorzugsweise ist ein besonders einfaches Strahlungsführungssystem so aufgebaut, daß es einen einzigen Reflektor aufweist.

Der eine Reflektor ist vorzugsweise so ausgerichtet, daß ein auf diesen auftreffendes Strahlungsfeld in einem Rückreflexionswinkel zurückreflektiert wird, welcher dem Beugungswinkel erster Ordnung des akustooptischen Modulators entspricht.

Vorzugsweise ist dabei der Reflektor so ausgebildet, daß er eine ebene Reflektorfläche aufweist, welche entsprechend dem Rückreflexionswinkel ausgerichtet ist.

Die Reflektorfläche kann Teil eines vom akustooptischen Modulator separaten Reflektors sein.

Eine andere vorteilhafte Lösung sieht vor, daß der akustooptische Modulator auf einer für das in diesen einfallende Strahlungsfeld austrittsseitigen Seitenfläche den Reflektor trägt.

Im einfachsten Fall läßt sich ein derartiger Reflektor auf der austrittsseitigen Seitenfläche des akustooptischen Modulators dann herstellen, wenn die Seitenfläche des akustooptischen Modulators mit einer Reflektorschicht bedeckt, vorzugsweise beschichtet, ist.

Bei all den Varianten der erfindungsgemäßen Lösung, bei welchen die zurückgeführten Äste ebenfalls als auseinanderlaufende Äste in den optisch aktiven Volumenbereich des akustooptischen Modulators eintreten, besteht zwar ein Versatz der sowohl das zurücklaufende Strahlungsfeld als auch das ausgekoppelte Strahlungsfeld bildenden Äste in Richtung quer zu ihrer Ausbreitungsrichtung.

Dieser Versatz liegt vorzugsweise jedoch innerhalb des Querschnitts des sich insgesamt ausbildenden Strahlungsfeldes, so daß sich dieser dann nicht nennenswert auswirkt, wenn die Reflektorschicht nahe bei einer Verzweigung der Äste im akustooptischen Modulator angeordnet ist, das heißt, der akustooptische Modulator sich in Ausbreitungsrichtung des einfallenden Strahlungsfeldes eine möglichst begrenzte und lediglich für eine ausreichende Wechselwirkung notwendige Ausdehnung aufweist.

Eine vorteilhafte Möglichkeit zur Trennung von Eintrittsstrahlungsfeld und Austrittsstrahlungsfeldern trotz zusammenfallender Modulationsebenen sieht vor, daß eine Trennung des Eintrittsstrahlungsfeldes von mindestens einem der Austrittsstrahlungsfelder dadurch erreichbar ist, daß das erste Strahlungsfeld im Abstand von dem einfallenden Strahlungsfeld und somit von diesem getrennt verläuft. Damit läuft das erste Strahlungsfeld nicht ungefähr in Richtung des einfallenden Strahlungsfeldes zurück oder überlappt mit diesem, sondern das erste Strahlungsfeld ist völlig getrennt vom einfallenden Strahlungsfeld.

Noch vorteilhafter ist es dabei auch, wenn das zweite Strahlungsfeld im Abstand von dem vom einfallenden Strahlungsfeld weggebeugten Ast verläuft.

Mit dieser Lösung ist bereits durch die Trennung des ersten und des zweiten Strahlungsfeldes vom einfallenden Strahlungsfeld die Trennung von Eintrittsstrahlungsfeld und Austrittsstrahlungsfeld sichergestellt, da keinerlei optische Komponenten erforderlich sind, um eine derartige Trennung herbeizuführen.

Besonders einfach läßt sich dies bei einem Ausführungsbeispiel der erfindungsgemäßen Lösung dadurch erreichen, daß der zurückgeführte transmittierte Ast und der zurückgeführte gebeugte Ast in einem Bereich des akustooptischen Modulators in Wechselwirkung treten, der gegenüber dem Bereich der Aufteilung des einfallenden Strahlungsfeldes in den gebeugten und transmittierten Ast in Richtung ungefähr parallel zur Ausbreitungsrichtung der Schallwelle versetzt angeordnet ist, das heißt, daß ein Versatz sowohl in Richtung der Ausbreitungsrichtung der Schallwelle als auch in entgegengesetzter Richtung zur Ausbreitungsrichtung der Schallwelle möglich ist und durch diesen parallelen Versatz der zurückgeführte transmittierte und der zurückgeführte gebeugte Ast wieder miteinander in Wechselwirkung treten können und aus dieser Wechselwirkung dann das erste Strahlungsfeld und das zweite Strahlungsfeld entstehen, die räumlich getrennt und insbesondere nicht überlappend von dem einfallenden Strahlungsfeld verlaufen, so daß unmittelbar das erste Strahlungsfeld und das zweite Strahlungsfeld das erste Austrittsstrahlungsfeld bzw. zweite Austrittsstrahlungsfeld bilden können.

Eine besonders vorteilhafte Ausführungsform sieht vor, daß das Strahlungsrückführsystem und der akustooptische Modulator so zusammenwirken, daß aus dem akustooptischen Modulator ein erstes Strahlungsfeld und ein zweites Strahlungsfeld austreten, welche sich in Richtungen ausbreiten, die mindestens eine entgegengesetzt zur Ausbreitungsrichtung des einfallenden Strahlungsfeldes verlaufende Richtungskomponente aufweisen.

Eine besonders günstige Anordnung von akustooptischem Modulator und Strahlungsrückführsystem sieht vor, daß das aus dem akustooptischen Modulator auf einer dem Strahlungsrückführungssystem gegenüberliegenden Seite austretende erste Strahlungsfeld ungefähr parallel zum einfallenden Strahlungsfeld verläuft und daß das zweite Strahlungsfeld in einem Beugungswinkel erster Ordnung gegenüber dem ersten Strahlungsfeld verläuft.

Mit einer derartigen Anordnung lassen sich besonders günstige Verhältnisse durch zweimalige, jeweils auf dem gleichen Prinzip beruhende Beugungseffekte erzielen, die insgesamt zusammen mit dem Strahlungsrückführsystem Überlagerungseffekte erzeugen lassen, die den eines "Anti-Resonant Ring Interferometer" entsprechen.

Um beispielsweise bei der voranstehenden Anordnung das aus dem ersten Strahlungsfeld zu bildende Austrittsstrahlungsfeld von dem Eintrittsstrahlungsfeld zu trennen, ist vorzugsweise vorgesehen, daß in der Modulatoreinheit aus dem Eintrittsstrahlungsfeld mindestens ein in einer Richtung polarisiertes einfallendes Strahlungsfeld erzeugbar ist.

Um beispielsweise bei der voranstehend erläuterten Polarisierung Intensitätsverluste bei unpolarisiertem Licht zu vermeiden ist vorzugsweise vorgesehen, daß aus dem Eintrittsstrahlungsfeld zwei einfallende Strahlungsfelder mit senkrecht zueinander stehenden Polarisationsrichtungen erzeugbar sind.

Eine besonders günstige Trennung von Eintrittsstrahlungsfeld und mindestens einem der Austrittsstrahlungsfelder ist dadurch möglich, daß die aus dem Eintrittsstrahlungsfeld entstehenden polarisierten ersten Strahlungsfelder bis zur Bildung der Austrittsstrahlungsfelder eine Polarisationsdrehung um insgesamt ±90° erfahren.

Eine derartige Polarisationsdrehung kann beispielsweise dadurch erreicht werden, daß das jeweilige einfallende Strahlungsfeld in einem polarisationsbeeinflussenden Element eine Polarisationsdrehung um 45° erfährt und das aus dem akustooptischen Modulator austretende erste Strahlungsfeld durch dasselbe polarisationsbeeinflussende Element eine weitere Drehung um 45° erfährt.

Alternativ dazu ist es aber auch denkbar, polarisationsbeeinflussende Elemente zu verwenden, die die Polarisationsrichtung des einfallenden Strahlungsfeldes um 90° drehen und die Polarisationsrichtung des diese durchsetzenden ersten Strahlungsfeldes unbeeinflusst lassen.

Ein Ausführungsbeispiel einer Modulatoreinheit, welche das Eintrittsstrahlungsfeld von mindestens einem der Austrittsstrahlungsfelder trennt, sieht eine optische Diode vor, auf welche das Eintrittsstrahlungsfeld trifft und aus welcher dann auch das zurücklaufende erste Strahlungsfeld in Form eines der Austrittsstrahlungsfelder austritt.

Ein besonders vorteilhaftes erfindungsgemäßes Ausführungsbeispiel sieht vor, daß ein Strahlungsrückführungssystem die sich im akustooptischen Modulator in ihren Austrittsrichtungen ausbreitenden und in das Strahlungsrückführungssystem einfallenden Äste jeweils unter einem Winkel zu den Austrittsrichtungen zum akustooptischen Modulator zurückführt, welcher ungefähr dem Beugungswinkel erster Ordnung entspricht, daß das Strahlungsrückführungssystem so angeordnet ist, daß es den sich im akustooptischen Modulator in Austrittsrichtung ausbreitenden transmittierten Ast und den entsprechenden sich in Austrittsrichtung ausbreitenden gebeugten Ast so in den akustooptischen Modulator zurückführt, daß der zurückgeführte transmittierte Ast und der zurückgeführte gebeugte Ast ungefähr parallel zum sich in Austrittsrichtung ausbreitenden gebeugten Ast bzw. ungefähr parallel zum sich in Austrittsrichtung ausbreitenden transmittierten Ast in dem akustooptischen Modulator verlaufen, und daß die aus dem zurückgeführten transmittierten Ast und dem zurückgeführten gebeugten Ast jeweils entstehenden transmittierten und gebeugten Äste sich zu einem ersten Strahlungsfeld und einem zweiten Strahlungsfeld überlagern, von dem jedes mit einem der Austrittsstrahlungsfelder gekoppelt ist.

Der Vorteil dieses Ausführungsbeispiels ist darin zu sehen, daß durch die erfindungsgemäße Ausbildung des Strahlungsrückführungssystems jeder rückgeführte Ast ungefähr parallel zu dem jeweils anderen Ast in dem akustooptischen Modulator verläuft und in diesem wiederum in einen transmittierten Ast und einen gebeugten Ast aufgeteilt wird, so daß aus dem akustooptischen Modulator ein zum einfallenden Strahlungsfeld ungefähr paralleles, sich jedoch in entgegengesetzter Richtung ausbreitendes erstes oder rücklaufendes Strahlungsfeld austritt, das die Äste des Strahlungsfeldes aufweist, welche auf ihrem Weg von dem einfallenden Strahlungsfeld zum ersten Strahlungsfeld durch einmalige Beugung im akustooptischen Modulator entstanden sind, während ein zweites, aus dem akustooptischen Modulator austretendes Strahlungsfeld sich ungefähr parallel zum gebeugten Ast und somit im Beugungswinkel erster Ordnung zum ersten Strahlungsfeld ausbreitet und die Äste aufweist, die auf ihrem Weg von dem einfallenden Strahlungsfeld zum zweiten Strahlungsfeld entweder durch keinerlei Beugung oder durch zweimalige Beugung zustande gekommen sind, wobei das erste Austrittstrahlungsfeld aus dem ersten Strahlungsfeld und das zweite Austrittsstrahlungsfeld aus dem zweiten Strahlungsfeld gebildet sind.

Bei der erfindungsgemäßen Lösung kann beispielsweise der akustooptische Modulator zusammen mit dem Strahlungsrückführungssystem als eine Art antiresonantes Ringinterferometer betrieben werden, wobei bereits bei einer Beugungseffizienz des akustooptischen Modulators von ungefähr 50% eine vollständige Einkopplung des einfallenden Strahlungsfeldes in das erste, rücklaufende Strahlungsfeld möglich ist, da sich die einmal gebeugten Äste konstruktiv überlagern, während sich der transmittierte Ast und der zweimal gebeugte Ast, die sich zur Bildung des zweiten Strahlungsfeldes destruktiv überlagern, gegenseitig auslöschen können, wodurch bereits ein einfach aufgebauter und mit einfachen Mitteln betriebener akustooptischer Modulator einsetzbar ist.

Unter dem Betreiben des akustooptischen Modulators mit dem Strahlungsrückführsystem als "eine Art Antiresonantes Ring Interferometer" ist zu verstehen, daß der Ausgangspunkt der Betrachtungen das bekannte "Anti-Resonant Ring Interferometer" darstellt, zusätzlich jedoch in Betracht zu ziehen ist, daß sich das akustische Gitter zeitlich fortbewegt und somit für die zurückgeführten Äste ein durch die Laufzeit verändertes akustisches Gitter entsteht. Ferner ist noch die Frequenzverschiebung im gebeugten Ast und die Weglänge der durch das Strahlungsrückführsystem wieder zum akustooptischen Modulator zurückgeführten Äste zu berücksichtigen.

Darüber hinaus läßt der akustooptische Modulator dann, wenn er nicht mit einer Schallwelle beaufschlagt ist und somit die Beugungseffizienz null aufweist, ein im wesentlichen vollständiges Einkoppeln des einfallenden Strahlungsfeldes in das zweite aufgeteilte Strahlungsfeld aufgrund der sich ausschließlich ausbildenden transmittierten Äste zu.

Die erfindungsgemäße Lösung schafft somit die Möglichkeit, trotz eines oder zweier einfach aufgebauter akustooptischer Modulatoren, welcher lediglich Werte der Beugungseffizienz im Bereich von ungefähr 0% bis ungefähr 50% erreichen muß, effizient zwischen maximaler Kopplung des Eintrittsstrahlungsfeldes mit dem ersten Austrittsstrahlungsfeld oder dem zweiten Austrittsstrahlungsfeld zu wechseln.

Prinzipiell wäre es denkbar, den oder die akustooptischen Modulatoren lediglich bei zwei unterschiedlichen Beugungseffizienzen zu betreiben. Um die erwünschten Modulationseffekte, das heißt ein Umschalten vom ersten Austrittsstrahlungsfeld in das zweite Austrittsstrahlungsfeld, zu erzielen.

Beispielsweise wäre es denkbar, den ersten und zweiten akustooptischen Modulator entweder bei einer Beugungseffizienz von ungefähr 0% oder ungefähr 50% zu betreiben.

Es ist jedoch aber auch im Rahmen der erfindungsgemäßen Lösung denkbar, daß der akustooptische Modulator im Bereich zwischen einer Beugungseffizienz von ungefähr 0% und ungefähr 50% betreibbar ist, so daß alle möglichen unterschiedlichen Kopplungsgrade zwischen dem Eintrittsstrahlungsfeld und den beiden Austrittsstrahlungsfeldern einstellbar sind.

Die erfindungsgemäße Modulationseinrichtung kann prinzipiell beliebig eingesetzt werden, wenn es darum geht, Strahlungsfelder zu modulieren. Beispielsweise läßt sich die erfindungsgemäße Modulationseinrichtung als externes Element einsetzen mit welchen eine externe Modulation von Strahlungsfeldern und/oder eine Mischung von Strahlungsfeldern und/oder auch eine Frequenzverschiebung von Strahlungsfeldern durchführbar ist.

Die erfindungsgemäße Modulationseinrichtung läßt sich insbesondere dann vorteilhaft einsetzen, wenn diese in einem Verstärkerstrahlungsfeld eines Laserverstärkers angeordnet ist, so daß dann die Vorteile der akustooptischen Modulation zum Aus- und Einkoppeln von Strahlungsfeldern eingesetzt werden können.

Eine besonders günstige Lösung sieht vor, daß die Modulationseinrichtung von einem Verstärkerstrahlungsfeld eines rückgekoppelten Laserverstärkersystems durchsetzt ist.

Dabei besteht die Möglichkeit, die erfindungsgemäße Modulationseinrichtung als separate Baugruppe in das Laserverstärkersystem zu integrieren.

Besonders günstig läßt sich die erfindungsgemäße Modulationseinrichtung dann einsetzen, wenn diese Teil eines rückgekoppelten Laserverstärkersystems ist, das heißt, nicht nur das Verstärkerstrahlungsfeld moduliert, sondern unmittelbar auch zur Rückkopplung desselben dient.

Dies läßt sich besonders einfach dann realisieren, wenn das Strahlungsführungssystem der erfindungsgemäßen Modulationseinrichtung ein Verstärkerstrahlungsrückführsystem des rückgekoppelten Laserverstärkersystems ist.

Darüber hinaus betrifft die Erfindung aber auch ein Laserverstärkersystem umfassend einen rückgekoppelten optischen Verstärker mit zwei Verstärkerstrahlungsrückführsystemen, einen sich zwischen den Verstärkerstrahlungsrückführsystemen erstreckenden und ein laseraktives Medium durchsetzenden optischen Volumenbereich, innerhalb von welchem sich ein Verstärkerstrahlungsfeld ausbildet, das heißt entsteht oder verstärkt wird, einen von dem optisch aktiven Volumenbereich und dem Strahlungsfeld durchsetzten akustooptischen Modulator, von welchem sich akustische Wellenfronten in einer Schallausbreitungsrichtung ausbreiten und ein Gitter erzeugen, mittels welchem ein einfallendes Verstärkerstrahlungsfeld jeweils in einen transmittierten Ast und ein zum transmittierten Ast in einem Beugungswinkel erster Ordnung verlaufenden gebeugten Ast aufteilbar ist.

Derartige Laserverstärkersysteme sind beispielsweise aus dem Buch "Solid-State Laser Engineering" von Walter Koechner, Springer Series in Optical Sciences, ISBN 3-540-60237-2, 1996, seiten 494 bis 499 bekannt.

Bei einem derartigen Laserverstärkersystem wird der akustooptische Modulator so eingesetzt, daß der transmittierte Ast im Resonator rückgekoppelt wird und durch Aufteilung des einfallenden Strahlungsfeldes in den transmittierten Ast und den gebeugten Ast die Resonatorverluste moduliert werden können. Dabei hängt die Modulationstiefe der Verluste von der maximal erreichbaren Beugungseffizienz des akustooptischen Modulators ab.

Bei einem anderen derartigen Laserverstärkersystem wird der akustooptische Modulator im Resonator gleichfalls in Transmission betrieben, zum Auskopplen der Laserleistung wird jedoch der gebeugte Ast eingesetzt. Bei diesem Ausführungsbeispiel ist der gebeugte Ast einerseits frequenzverschoben und andererseits ist die Auskopplung von der maximal erreichbaren Beugungseffizienz des akustooptischen Modulators abhängig. Weiterhin werden bei derartigen Resonatoren im Allgmeinen zwei gebeugte Strahlen ausgekoppelt, wenn nicht Ringresonatoren eingesetzt werden, in denen die Strahlung nur in einer Richtung umläuft.

Ferner sind derartige Systeme aus Bonnet et al., Optics Communications 123 (1996), Seite 790-800 bekannt.

Bei solchen Laserverstärkersystemen wird der gebeugte Ast des akustooptischen Modulators im Resonator zurückgekoppelt und der transmittierte Ast dient zur Auskopplung oder trägt zum Verlust bei. Bei diesem Ausführungsbeispiel ist der in den Resonator rückgekoppelte Ast frequenzverschoben und andererseits ist die Rückkopplung von der maximal erreichbaren Beugungseffizienz des akustooptischen Modulators abhängig.

Der Erfindung liegt daher die Aufgabe zugrunde, ein Laserverstärkersystem der gattungsgemäßen Art derart zu verbessern, daß dieses ohne aufwendige Ausführung oder aufwendiges Betreiben des akustooptischen Modulators eine möglichst effiziente Aufteilung des Strahlungsfeldes zuläßt.

Diese Aufgabe wird bei einem Laserverstärkersystem der vorstehend beschriebenen Art erfindungsgemäß dadurch gelöst, daß eine Modulationseinrichtung entsprechend einem der vorstehend beschriebenen Ausführungsbeispiele vorgesehen ist, deren Strahlungsführungssystem das erste Verstärkerstrahlungsrückführsystem bildet und deren einfallendes Strahlungsfeld das Verstärkerstrahlungsfeld ist.

Diese Lösung hat ebenfalls den Vorteil, daß mit einfachem Aufbau des akustooptischen Modulators eine Modulation des Verstärkerstrahlungsfeldes mit großer Effizienz möglich ist.

Beispielsweise ist es dabei denkbar, daß eines der Austrittsstrahlungsfelder der Modulationseinrichtung in den optischen Verstärker rückkoppelbar ist.

Wenn die erfindungsgemäße Modulationseinrichtung zum Auskoppeln eines Strahlungsfeldes vorgesehen ist, wird vorzugsweise dieses so eingesetzt, daß das andere der Austrittsstrahlungsfelder aus dem Laserverstärkersystem auskoppelbar ist.

Alternativ zu den vorstehend beschriebenen Lösungen des erfindungsgemäßen Laserverstärkersystems oder ergänzend dazu sieht eine besonders günstige Lösung vor, daß ein erstes der Verstärkerstrahlungsrückführsysteme die sich im akustooptischen Modulator längs ihrer Strahlachsen ausbreitenden und in das erste Verstärkerstrahlungsrückführsystem einfallenden Äste, die in dem akustooptischen Modulator bei der ersten akustooptischen Modulation entstehen, zum akustooptischen Modulator zurückführt, daß ein Winkel zwischen diesen ungefähr dem Beugungswinkel erster Ordnung entspricht, daß das erste Verstärkerstrahlungsrückführsystem so angeordnet ist, daß es den sich im akustooptischen Modulator bei der ersten akustooptischen Modulation gebildeten transmittierten Ast und den entsprechenden gebeugten Ast so in den akustooptischen Modulator zurückführt, daß der zurückgeführte transmittierte Ast ungefähr denselben Winkel mit der Schallausbreitungsrichtung einschließt wie der bei der ersten akustooptischen Modulation gebildete gebeugte Ast und daß der zurückgeführte gebeugte Ast ungefähr denselben Winkel mit der Schallausbreitungsrichtung einschließt wie der bei der ersten akustooptischen Modulation gebildete transmittierte Ast und daß der zurückgeführte transmittierte Ast und der zurückgeführte gebeugte Ast so in dem akustooptischen Modulator verlaufen, daß die aus dem zurückgeführten transmittierten Ast und dem zurückgeführten gebeugten Ast jeweils entstehenden transmittierten und gebeugten Äste sich zu einem ersten Strahlungsfeld und zu einem zweiten Strahlungsfeld überlagern.

Der Vorteil der erfindungsgemäßen Lösung ist darin zu sehen, daß das einfallende Strahlungsfeld durch die erfindungsgemäße Ausbildung des ersten Verstärkerstrahlungsrückführsystems in zwei aus dem akustooptischen Modulator austretende Strahlungsfelder aufgeteilt wird, indem das als erste Strahlungsfeld bezeichnete die Äste aufweist, welche auf ihrem Weg vom einfallenden Strahlungsfeld zum ersten Strahlungsfeld durch einmalige Beugung und einmalige Transmission entstanden sind, während das als zweites Strahlungsfeld bezeichnete die Äste aufweist, welche auf ihrem Weg vom einfallenden Strahlungsfeld zum zweiten Strahlungsfeld entweder durch keinerlei Beugung oder durch zweimalige Beugung zustande gekommen sind, wobei das erste Strahlungsfeld mit der Ausbreitungsrichtung der Schallwellen im akustooptischen Modulator ungefähr den gleichen Winkel einschließt wie das einfallende Strahlungsfeld und das zweite Strahlungsfeld mit der Ausbreitungsrichtung der Schallwellen ungefähr einen gegenüber dem einfallenden Strahlungsfeld um den Beugungswinkel erster Ordnung geänderten Winkel einschließt, so daß beispielsweise bei der erfindungsgemäßen Ausbildung des ersten Verstärkerstrahlungsrückführsystems auch unterschiedliche Ausrichtungen des ersten Strahlungsfeldes und des zweiten Strahlungsfeldes relativ zum einfallenden Strahlungsfeld erzielbar sind.

Bei der erfindungsgemäßen Lösung kann vorzugsweise der akustooptische Modulator zusammen mit dem ersten Verstärkerstrahlungsrückführsystem als eine Art "Antiresonantes Ring Interferometer" betrieben werden, wobei bereits bei einer Beugungseffizienz des akustooptischen Modulators von ungefähr 50% eine nahezu vollständige Einkopplung in das erste, rücklaufende Strahlungsfeld möglich ist, da sich die einmal gebeugten und einmal transmittierten Äste konstruktiv überlagern können, während sich der zweimal transmittierte Ast und der zweimal gebeugte Ast zur Bildung des zweiten Strahlungsfeldes destruktiv überlagern und damit gegenseitig auslöschen können, wodurch bereits ein einfach aufgebauter und mit einfachen Mitteln betriebener akustooptischer Modulator einsetzbar ist.

Die Tatsache, daß ein akustooptischer Modulator mit geringer Beugungseffizienz effizient einsetzbar ist, ermöglicht größere Freiheit in Materialauswahl und Design.

Unter dem Betreiben des akustooptischen Modulators zusammen mit dem ersten Verstärkerstrahlungsrückführsystem als "eine Art Antiresonantes Ringinterferometer" ist zu verstehen, daß der Ausgangspunkt der Betrachtungen das bekannte "Antiresonant Ring Interferometer" oder auch Sagnac Interferometer darstellt, in dem der akustooptische Modulator als Strahlteiler eingesetzt wird, zusätzlich jedoch in Betracht zu ziehen ist, daß der Strahlteiler durch ein sich zeitlich fortbewegendes Volumengitter gegeben ist und somit keine definierte strahlteilende Fläche vorliegt und sich außerdem für die zurückgeführten Äste durch die Laufzeit ein verändertes Gitter entsteht. Ferner ist noch die Frequenzverschiebung im gebeugten Ast und die Weglänge der zurückgeführten Äste zu berücksichtigen.

Wird der akustooptische Modulator nicht mit einer Schallwelle beaufschlagt und weist somit die Beugungseffizienz Null auf, wirkt der akustooptische Modulator mit dem Verstärkerstrahlungsrückführungssystem aufgrund der sich ausschließlich ausbildenden transmittierten Äste nicht mehr als Antiresonantes Ring Interferometer und es erfolgt, ein im wesentlichen vollständiges Einkoppeln des einfallenden Strahlungsfeldes in das zweite, abgeteilte Strahlungsfeld.

Die erfindungsgemäße Lösung schafft somit die Möglichkeit, trotz eines einfach aufgebauten akustooptischen Modulators, welcher lediglich eine Beugungseffizienz von ungefähr 0% bis 50% erreichen muß, effizient zwischen maximale Kopplung mit dem ersten Strahlungsfeld oder dem zweiten Strahlungsfeld zu wechseln.

Prinzipiell wäre es denkbar, den akustooptischen Modulator bei zwei unterschiedlichen Beugungseffizienzen zu betreiben, um die gewünschten Modulationseffekte zu erzielen. Beispielsweise wäre es denkbar, den akustooptischen Modulator bei einer Beugungseffizienz von ungefähr 0% und ungefähr 50% zu betreiben.

Besonders günstig ist es jedoch, wenn der akustooptische Modulator im Bereich einer Beugungseffizienz von ungefähr 0% und ungefähr 50% betreibbar ist, so daß alle möglichen, unterschiedlichen Kopplungsgrade des einfallenden Strahlungsfeldes mit dem ersten und dem zweiten Strahlungsfeld einstellbar sind.

Bei der erfindungsgemäßen Lösung kann der akustooptische Modulator zusammen mit dem ersten Verstärkerstrahlungsrückführsystem ein Interferometer bilden, bei dem im Gegensatz zu dem als eine Art Antiresonates Ring Interferometer bezeichneten Beispiel die beiden zurückgeführten Äste nicht in entgegengesetzter Richtung nahezu den identischen Weg vom Modulator über das erste Verstärkerstrahlungsrückführsystem wieder in den Modulator zurücklegen, sondern derart verlaufen, daß sich das erste Strahlungsfeld räumlich vom einfallenden trennen läßt.

Bezüglich der Möglichkeiten zur vorteilhaften Kopplung des einfallenden Strahlungsfeldes mit dem ersten und dem zweiten Strahlungsfeld, für die akustooptische Modulatoren mit einer Beugungseffizienz von ungefähr 0% bis ungefähr 50% ausreichend sind, treffen die selben Aussagen wie beim Aufbau als eine Art Antiresonantes Ring Interferometer zu.

Eine Betrachtung der Symmetrie solcher Anordnungen zeigt, daß sich in entgegengesetzter Richtung zu einem der zuvor betrachteten austretenden Strahlungsfeldern ein weiteres einfallendes Strahlungsfeld einkoppeln läßt, daß dann wieder in prinzipiell gleicher Weise in zwei austretende Strahlungsfelder aufgeteilt wird, wovon eines dieser austretenden Strahlungsfelder in nahezu entgegengesetzter Richtung zu dem zuvor betrachteten einfallenden Strahlungsfeld verläuft.

Bei einer Anordnung nach einer von Art Antiresonantem Ring Interferometer können also zwei einfallende Strahlungsfelder eingekoppelt werden, die sich jeweils in ein erstes Strahlungsfeld und ein zweites Strahlungsfeld aufteilen lassen, wobei das erste Strahlungsfeld jeweils nahezu in entgegengesetzter Richtung zum entsprechenden einfallenden Strahlungsfeld verläuft, während das zweite Strahlungsfeld jeweils in nahezu entgegengesetzter Richtung zum jeweils anderen einfallenden Strahlungsfeld verläuft, so daß das erste Strahlungsfeld des einen einfallenden Strahlungsfeldes jeweils in nahezu gleicher Richtung wie das zweite Strahlungsfeld des anderen einfallenden Strahlungsfeldes austritt.

Für die von der Art Antiresonanten Ring Interferometers abweichende Anordnung, bei der das austretende erste Strahlungsfeld räumlich vom entsprechenden einfallenden Strahlungsfeld zu separieren ist, sind entsprechend jeweils zwei Paare von einfallenden Strahlungsfeldern denkbar, für die sich erreichen läßt, daß das erste Strahlungsfeld des einen einfallenden Strahlungsfeld in etwa der gleichen Richtung verläuft, wie das zweite Strahlungsfeld des anderen einfallenden Strahles des gleichen Paares und jeweils in nahezu entgegengesetzter Richtung zu einem der einfallenden Strahlungsfeldes des anderen Paares.

Hinsichtlich der Art, wie der rückgekoppelte Verstärker betrieben werden soll, wurden im Zusammenhang mit der bisherigen Erläuterung der einzelnen vorteilhaften Ausführungsformen der erfindungsgemäßen Lösung keine näheren Angaben gemacht.

So sieht eine vorteilhafte Ausführungsform vor, daß eine Rückführung des ersten Strahlungsfeldes zu dem laseraktiven Medium erfolgt, d.h. daß das erste, frequenzverschobene Strahlungsfeld zu dem laseraktiven Medium zurückgeführt wird und somit keine Rückkopplung des im akustooptischen Modulator entstehenden Strahlungsfeldes in Form eines identischen Strahlungsfeldes erfolgt, sondern eine Rückkopplung in Form eines frequenzverschobenen Strahlungsfeldes, wodurch sich von einem bekannten optischen Stehwellenresonator abweichende Eigenschaften ausbilden können.

Prinzipiell wäre es denkbar, daß das erste Strahlungsfeld über separate Rückkopplungselemente in das laseraktive Medium zurückgekoppelt wird.

Besonders günstig läßt sich die Rückkopplung des ersten Strahlungsfeldes jedoch dann erreichen, wenn das erste Strahlungsfeld durch die das einfallende Strahlungsfeld zu dem akustooptischen Modulator führenden Elemente zu dem laseraktiven Medium zurückgeführt wird.

Dadurch läßt sich in vorteilhafter Weise ohne zusätzliche optische Elemente eine Rückführung des ersten Strahlungsfeldes erreichen.

Vorzugsweise ist dies dann möglich, wenn das erste Strahlungsfeld innerhalb des akustooptischen Modulators in einem Bereich entsteht, welcher innerhalb des optisch aktiven Volumenbereichs liegt, so daß das erste Strahlungsfeld so entsteht, daß es örtlich im wesentlichen mit dem einfallenden Strahlungsfeld zusammenfällt, sich jedoch in entgegengesetzter Richtung zu diesem ausbreitet.

Eine andere vorteilhafte Lösung besteht darin, das zweite Verstärkerstrahlungsrückführsystem so auszubilden, daß das erste Strahlungsfeld durch dieses wieder in das einfallende Strahlungsfeld rückgeführt wird.

Eine derartige Rückführung des ersten Strahlungsfeldes in das laseraktive Medium ist insbesondere dann möglich, wenn aufgrund von Beugungseffekten bei mit endlicher Beugungseffizienz arbeitendem akustooptischen Modulator das erste Strahlungsfeld eine Leistung größer Null aufweist.

Eine besonders hohe Rückkopplung mittels des ersten Strahlungsfeldes entsteht dann, wenn der akustooptische Modulator mit einer Beugungseffizienz von ungefähr 50% arbeitet.

Eine weitere vorteilhafte Lösung bei dem erfindungsgemäßen Laserverstärkersystem sieht vor, daß eine Rückführung des zweiten Strahlungsfeldes zu dem laseraktiven Medium erfolgt. Eine derartige Rückführung hat den Vorteil, daß das zweite Strahlungsfeld nicht frequenzverschoben ist und somit die Möglichkeit schafft, eine Rückkopplung mit einem frequenzidentischen Strahlungsfeld zu erreichen.

Eine derartige Rückkopplung kann in unterschiedlichster Art und Weise erfolgen. Besonders günstig ist es, wenn das zweite Strahlungsfeld durch Rückführung zum akustooptischen Modulator und über diesen sowie das erste Verstärkerstrahlungsrückführsystem in das laseraktive Medium zurückgeführt ist, damit läßt sich in besonders günstiger Weise ohne viele zusätzliche Komponenten eine Rückführung erreichen.

Besonders günstig ist es, wenn das zweite Strahlungsfeld durch Reflexion in sich selbst in das laseraktive Medium zurückgeführt ist, so daß im wesentlichen die selben optischen Komponenten zum Einsatz kommen können, die zur Entstehung des zweiten Strahlungsfeldes beitragen.

Eine derartige Rückführung des zweiten Strahlungsfeldes erfolgt immer dann, wenn das entstehende zweite Strahlungsfeld nicht die Leistung Null aufweist.

Eine insbesondere im wesentlichen vollständige Rückkopplung mit dem laseraktiven Medium tritt dann auf, wenn im wesentlichen die gesamte Leistung des einfallenden Strahlungsfeldes sich im zweiten Strahlungsfeld wiederfindet, so daß durch Rückreflexion dieses zweiten Strahlungsfeldes in sich selbst oder durch Rückführung dieses zweiten Strahlungsfeldes über das aktive Medium zum ersten Strahlungsfeld wieder die im wesentlichen gesamte Leistung in das laseraktive Medium eintritt.

Dies ist insbesondere dann der Fall, wenn der akustooptische Modulator mit einer Beugungseffizienz von ungefähr Null oder ungefähr 100% arbeitet.

Um insbesondere Laserstrahlung günstig auskoppeln zu können, sieht eine besonders vorteilhafte Ausführungsform des erfindungsgemäßen Laserverstärkersystems vor, daß das erste oder das zweite Strahlungsfeld das zu dem laseraktiven Medium zurückgeführte Strahlungsfeld bildet und daß das jeweils andere Strahlungsfeld das ausgekoppelte Strahlungsfeld bildet.

Mit dieser Lösung besteht die Möglichkeit, eines der beiden Strahlungsfelder als ausgekoppeltes Strahlungsfeld einzusetzen und das andere zur Rückkopplung zu dem laseraktiven Medium.

Welches der beiden Strahlungsfelder letztlich ausgekoppelt wird oder nicht, hängt von den einzelnen Realisierungsformen des erfindungsgemäßen Laserverstärkersystems ab.

Bei einigen Realisierungsformen ist es vorteilhaft, das erste Strahlungsfeld und somit das frequenzverschobene Strahlungsfeld wieder in das laseraktive Medium zurückzukoppeln, während bei anderen Ausführungsformen, insbesondere dann, wenn eine optimale Rückkopplung erwünscht ist, das zweite Strahlungsfeld, welches frequenzverschoben ist, auszukoppeln, so daß eine frequenzidentische Rückkopplung in das laseraktive Medium realisierbar ist.

Hinsichtlich der Art und Weise, wie das erste Verstärkerstrahlungsrückführsystem auf die sich im akustooptischen Modulator bildenden Äste wirkt, sind unterschiedliche Lösungen denkbar.

Hinsichtlich der Lage der zurückgeführten Äste im akustooptischen Modulator sind die unterschiedlichsten Lösungen denkbar.

Eine Möglichkeit sieht vor, die zurückgeführten Äste in dem akustooptischen Modulator so auszurichten, daß eines der entstehenden Strahlungsfelder, vorzugsweise das erste Strahlungsfeld, in das laseraktive Medium einkoppelbar ist.

Vorzugsweise breitet sich das erste Strahlungsfeld dabei im wesentlichen mit dem einfallenden Strahlungsfeld überlappend in Richtung des laseraktiven Mediums aus, so daß dieses durch die selben optischen Elemente geführt werden kann, wie das einfallende Strahlungsfeld.

Bei dieser Lösung ist bei Rückkopplung des ersten Strahlungsfeldes in das laseraktive Medium das zweite Strahlungsfeld direkt als ausgekoppeltes Strahlungsfeld einsetzbar.

Soll dagegen eine Rückkopplung des zweiten Strahlungsfeldes in das laseraktive Medium erfolgen, wird beispielsweise das erste Strahlungsfeld durch Polarisationseffekte, insbesondere Aufspaltung des Strahlungsfeldes in zwei orthogonal zueinander orientierte Polarisationskomponenten sowie Polarisationsdrehungen oder Phasenschiebungen zwischen den Polarisationskomponenten, vom einfallenden Strahlungsfeld getrennt.

Eine andere Möglichkeit ist die, die zurückgeführten Äste in dem akustooptischen Modulator so auszurichten, daß das erste Strahlungsfeld räumlich vom einfallenden Strahlungsfeld zu trennen ist, indem zwischen beiden Strahlungsfelder mindestens ein Winkelversatz oder ein Abstand besteht.

Bei dieser Lösung ist vorzugsweise das erste Strahlungsfeld als ausgekoppeltes Strahlungsfeld verwendet, während das zweite Strahlungsfeld durch Rückreflexion in das einfallende Strahlungsfeld einkoppelbar ist.

Eine andere vorteilhafte Lösung sieht vor, das zweite Verstärkerstrahlungsrückführsystem so auszubilden, daß das zweite Strahlungsfeld durch dieses wieder in das einfallende Strahlungsfeld rückgeführt wird.

Eine vorteilhafte Ausführungsform sieht vor, daß das erste Verstärkerstrahlungsrückführsystem die zurückgeführten Äste so ausrichtet, daß diese in dem akustooptischen Modulator aufeinanderzu verlaufen, so daß die aus diesen wieder entstehenden transmittierten und gebeugten Äste möglichst nahe beieinanderliegend entstehen.

Vorzugsweise erfolgt dies so, daß sich die zurückgeführten Äste in dem optisch aktiven Volumenbereich innerhalb des akustooptischen Modulators zumindest bereichsweise, noch besser im wesentlichen vollständig, wieder schneiden.

Ein derartiges Strahlungsführungssystem kann dabei in unterschiedlichster Art und Weise ausgebildet sein.

Die Zurückführung der einzelnen Äste wäre beispielsweise dadurch möglich, daß der transmittierte Ast in ein Ende eines Lichtwellenleiters eingekoppelt wird und der gebeugte Ast in das andere Ende und jeweils dann die zurückgeführten Äste an den entgegengesetzten Enden wieder austreten.

Eine andere Lösung sieht vor, daß das erste Verstärkerstrahlungsrückführsystem mindestens zwei Strahlumlenkungen aufweist, welche die mit dem Beugungswinkel auseinanderlaufende Äste als zurückgeführte Äste wieder mit dem Beugungswinkel aufeinanderzu zulaufen läßt.

Vorzugsweise sind die Strahlumlenkungen als Reflektorflächen ausgebildet.

Vorzugsweise ist dabei vorgesehen, daß die zwei Reflektorflächen einen Winkel von weniger als 90° miteinander einschließen.

Eine andere Lösung sieht einen Reflektor und eine Abbildungsoptik, beispielsweise umfassend zwei Linsen vor.

Im einfachsten Fall ist es dabei ausreichend, wenn der jeweils zurückgeführte Ast im akustooptischen Modulator parallel zum jeweils anderen Ast verläuft.

Eine besonders günstige Lösung, insbesondere im Hinblick auf die Ausbildung eines möglichst räumlich einheitlichen zurücklaufenden Strahlungsfeldes und eines möglichst räumlich einheitlichen ausgekoppelten Strahlungsfeldes sieht vor, daß das erste Verstärkerstrahlungsrückführsystem die zurückgeführten Äste so in dem optisch aktiven Volumen des akustooptischen Modulators verlaufen läßt, daß diese sich ungefähr im Bereich einer Aufteilung in den transmittierten und den gebeugten Äste zumindest teilweise schneiden, wobei jeweils der eine zurückgeführte Ast vorzugsweise ungefähr deckungsgleich jedoch mit entgegengesetzter Ausbreitungsrichtung zum jeweils anderen Ast in dem optisch aktiven Volumenbereich innerhalb des akustooptischen Modulators verläuft. Damit fallen auch die aus den zurückgeführten Ästen wieder entstehenden transmittierten und gebeugten Äste im wesentlichen miteinander zusammen.

Eine andere alternative Lösung sieht vor, daß das Verstärkerstrahlungsrückführsystem die zurückgeführten Äste als im akustooptischen Modulator auseinanderlaufende Äste zurückführt, das heißt, daß die jeweils zurückgeführten Äste, gebildet beispielsweise Reflexion des transmittierten Astes als auch des gebeugten Astes, als auseinanderlaufende Äste in dem optisch aktiven Volumenbereich innerhalb des akustooptischen Modulators verlaufen.

Auch bei dieser relativen Orientierung der zurückgeführten Äste ist es denkbar, den transmittierten Ast und den gebeugten Ast jeweils in einen Lichtleiter einzukoppeln und am anderen Ende mit entsprechender Ausrichtung wieder aus diesem austreten zu lassen.

Vorzugsweise ist ein besonders einfaches Verstärkerstrahlungsrückführsystem so aufgebaut, daß es einen einzigen Reflektor aufweist.

Der eine Reflektor ist vorzugsweise so ausgerichtet, daß ein auf diesen auftreffendes Strahlungsfeld in einem Rückreflexionswinkel zurückreflektiert wird, welcher dem Beugungswinkel erster Ordnung des akustooptischen Modulators entspricht.

Vorzugsweise ist dabei der Reflektor so ausgebildet, daß er eine ebene Reflektorfläche aufweist, welche entsprechend dem Rückreflexionswinkel ausgerichtet ist.

Die Reflektorfläche kann Teil eines vom akustooptischen Modulator separaten Reflektors sein.

Eine andere vorteilhafte Lösung sieht vor, daß der akustooptische Modulator auf einer für das in diesen einfallende Strahlungsfeld austrittsseitige Seitenfläche den Reflektor trägt.

Im einfachsten Fall läßt sich ein derartiger Reflektor auf der austrittsseitigen Seitenfläche des akustooptischen Modulators dann herstellen, wenn die Seitenfläche des akustooptischen Modulators mit einer Reflektorschicht bedeckt, vorzugsweise bedampft, ist.

Bei all den Varianten der erfindungsgemäßen Lösung, bei welchen die zurückgeführten Äste ebenfalls als auseinanderlaufende Äste in den optisch aktiven Volumenbereich des akustooptischen Modulators eintreten, besteht zwar ein Versatz der sowohl zurücklaufende Strahlungsfeld als auch das ausgekoppelte Strahlungsfeld bildende Äste in Richtung quer zu ihrer Ausbreitungsrichtung.

Dieser Versatz liegt vorzugsweise jedoch innerhalb des Querschnitts des sich insgesamt ausbildenden Strahlungsfeldes, so daß sich dieser dann nicht nennenswert auswirkt, wenn die Reflektorschicht nahe bei einer Verzweigung der Äste im akustooptischen Modulator angeordnet ist, das heißt, der akustooptische Modulator sich in Ausbreitungsrichtung des einfallenden Strahlungsfeldes eine möglichst begrenzte und lediglich für eine ausreichende Wechselwirkung notwendige Ausdehnung aufweist.

Das erfindungsgemäße Laserverstärkersystem entsprechend allen bisher beschriebenen Ausführungsbeispielen kann mit unterschiedlichsten Betriebsmodi betrieben werden.

So ist beispielsweise denkbar, das Laserverstärkersystem als Laserstrahlungsquelle einzusetzen, wobei der akustooptische Modulator dazu dient, die Güte innerhalb des Resonators zu variieren.

Beispielsweise wäre es in diesem Fall auch denkbar, die Auskopplung des nutzbaren Laserstrahls in jeder bekannten Art und Weise zu realisieren. Beispielsweise ist es auch möglich, die Auskopplung durch einen zweiten akustooptischen Modulator, welcher beispielsweise in erfindungsgemäßer Weise auch mit dem zweiten Verstärkerstrahlungsrückführsystem zusammenwirken könnte, zu realisieren.

Ein anderes vorteilhaftes Ausführungsbeispiel sieht vor, daß eines der aus dem akustooptischen Modulator austretenden Strahlungsfelder die nutzbare Laserstrahlung liefert, wobei entweder eine teilweise Auskopplung der sich im Resonator aufbauenden Laserstrahlung oder eine vollständige Auskopplung erfolgen kann.

Ein anderes vorteilhaftes Ausführungsbeispiel eines erfindungsgemäßen Laserverstärkersystems wird ebenfalls als Laserstrahlungsquelle eingesetzt, wobei in diesem Fall der akustooptische Modulator dazu eingesetzt wird, den Auskopplungsgrad in unterschiedlicher Weise zu variieren.

Ein diesen Effekt vorteilhaft ausnutzendes Ausführungsbeispiel sieht vor, die Pulsenergie, die in einem normalen gütegeschalteten Puls enthalten wäre, auf eine Gruppe von mehreren Pulsen aufzuteilen, das heißt, das Laserverstärkersystem in einem sogenannten Burst Mode zu betreiben.

Schließlich sieht eine weitere Anwendungsmöglichkeit des erfindungsgemäßen Laserverstärkersystems vor, dieses ebenfalls als Laserstrahlquelle mit Modenkopplung zu betreiben, wobei die Möglichkeit besteht, die Tatsache auszunutzen, daß das zurücklaufende Strahlungsfeld gegenüber dem einfallenden Strahlungsfeld frequenzverschoben ist.

Weiterhin läßt sich das Laserverstärkersystem vorteilhaft zur Verstärkung eines von extern eingekoppelten Strahlungsfeldes, wie dies beim Injection Seeding oder bei regenerativen Verstärkern erfolgt, einsetzen. Auch bei derartiger Verstärkung im Vielfachdurchgang läßt sich die Tatsache ausnutzen, daß das zurücklaufende Strahlungsfeld gegenüber dem einfallenden frequenzverschoben ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein erstes Ausführungsbeispiel einer erfindungsgemäßen Modulationseinrichtung;
- Fig. 2: eine ausschnittsweise schematische Darstellung eines zweiten Ausführungsbeispiels einer erfindungsgemäßen Modulationseinrichtung;
- Fig. 3: eine Gesamtdarstellung des zweiten Ausführungsbeispiels der erfindungsgemäßen Modulationseinrichtung;
- Fig. 4: eine ausschnittsweise schematische Darstellung ähnlich Fig. 2 eines dritten Ausführungsbeispiels der erfindungsgemäßen Modulationseinrichtung;
- Fig. 5: eine Gesamtdarstellung des dritten Ausführungsbeispiels der erfindungsgemäßen Modulationseinrichtung;
- Fig. 6: eine schematische ausschnittsweise Darstellung eines vierten Ausführungsbeispiels ähnlich Fig. 1 der erfindungsgemäßen Modulationseinrichtung;
- Fig. 7: eine Darstellung eines fünften Ausführungsbeispiels einer erfindungsgemäßen Modulationseinrichtung;
- Fig. 8: eine ausschnittsweise vergrößerte Darstellung des fünften Ausführungsbeispiels im Bereich des akustooptischen Modulators mit dem Strahlungsrückführsystem;
- Fig. 9: eine Darstellung einer ersten Variante des fünften Ausführungsbeispiels der erfindungsgemäßen Modulationseinrichtung;
- Fig. 10: eine Darstellung einer zweiten Variante des fünften Ausführungsbeispiels der erfindungsgemäßen Modulationseinrichtung;
- Fig. 11: eine ausschnittsweise vergrößerte Darstellung eines sechsten Ausführungsbeispiels der erfindungsgemäßen Modulationseinrichtung;

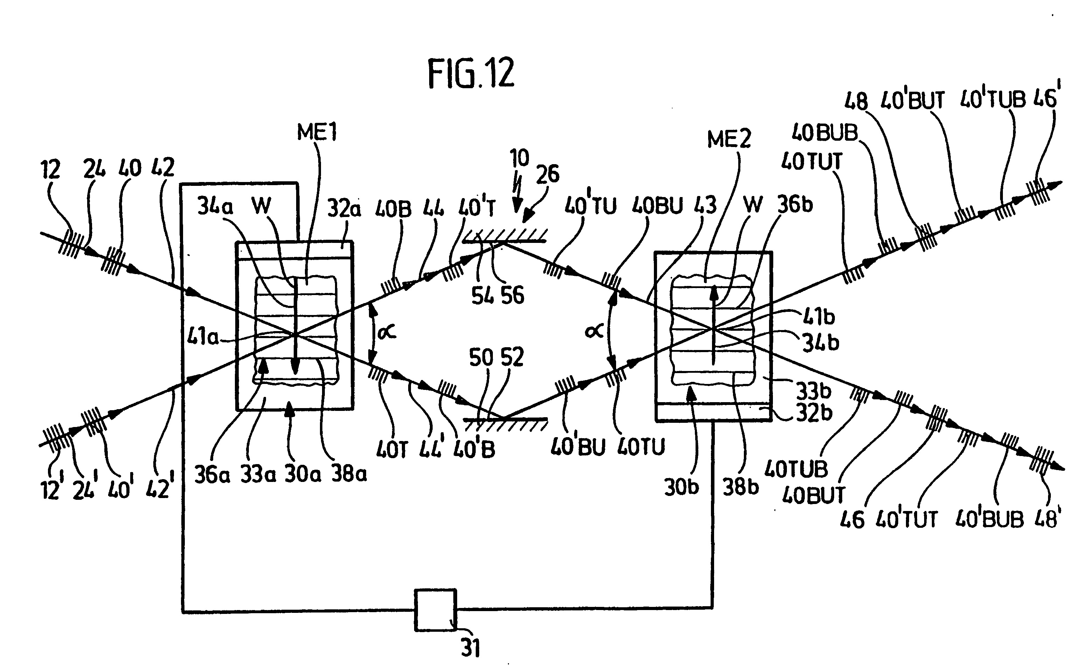

- Fig. 12: eine Darstellung eines siebten Ausführungsbeispiels der erfindungsgemäßen Modulationseinrichtung;
- Fig. 13: eine schematische Darstellung eines ersten Ausführungsbeispiels eines Laserverstärkersystems mit einer darin integrierten erfindungsgemäßen Modulationseinrichtung;
- Fig. 14: eine schematische Darstellung einer ersten Variante des ersten Ausführungsbeispiels des erfindungsgemäßen Laserverstärkersystems;
- Fig. 15: eine schematische Darstellung einer zweiten Variante des ersten Ausführungsbeispiels eines erfindungsgemäßen Laserverstärkersystems;
- Fig. 16: eine schematische Darstellung einer dritten Variante des ersten Ausführungsbeispiels des erfindungsgemäßen Laserverstärkersystems;
- Fig. 17: eine schematische Darstellung einer vierten Variante des ersten Ausführungsbeispiels des erfindungsgemäßen Laserverstärkersystems;
- Fig. 18: eine Darstellung einer fünften Variante des ersten Ausführungsbeispiels erfindungsgemäßen Laserverstärkersystems;
- Fig. 19: eine Darstellung eines zweiten Ausführungsbeispiels eines erfindungsgemäßen Laserverstärkersystems;
- Fig. 20: eine ausschnittsweise vergrößerte Darstellung im Bereich des akustooptischen Modulators des zweiten Ausführungsbeispiels des erfindungsgemäßen Laserverstärkersystems;
- Fig. 21: eine schematische Darstellung einer ersten Variante des zweiten Ausführungsbeispiels des erfindungsgemäßen Laserverstärkersystems und
- Fig. 22: eine schematische Darstellung einer zweiten Variante des zweiten Ausführungsbeispiels des erfindungsgemäßen Laserverstärkersystems.

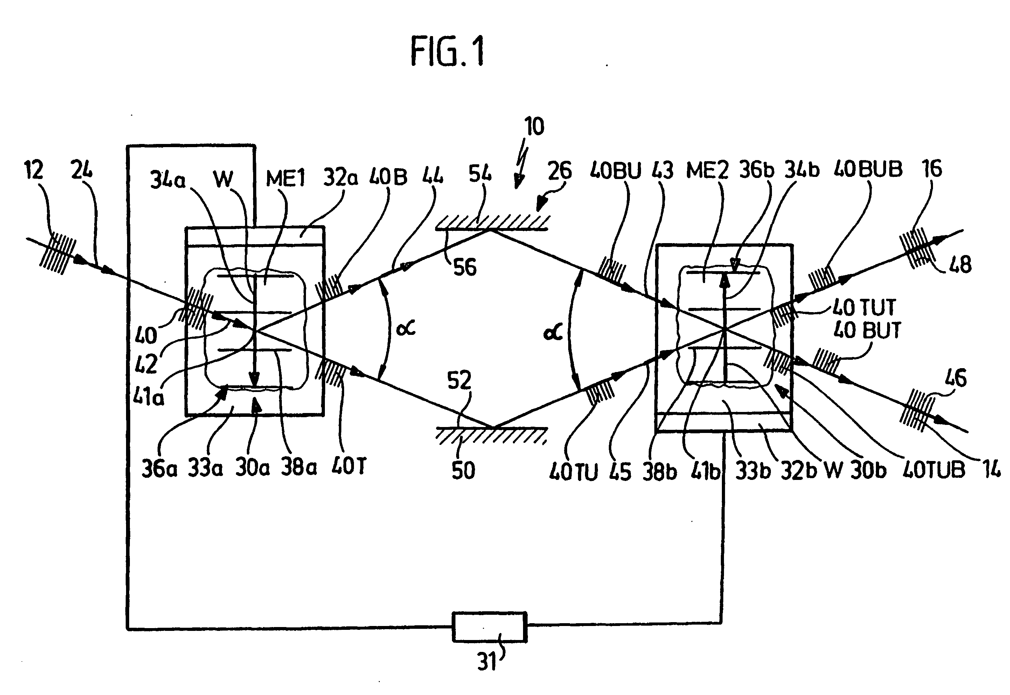

Ein erstes Ausführungsbeispiel einer als Ganzes mit 10 bezeichneten erfindungsgemäßen Modulatoreinrichtung, dargestellt in Fig. 1, dient dazu, ein Eintrittsstrahlungsfeld 12 zwischen einem ersten Austrittsstrahlungsfeld 14 und einem zweiten Austrittsstrahlungsfeld 16 zu schalten, wobei beispielsweise die erfindungsgemäße Modulationseinrichtung so betrieben werden kann, daß in einem ersten möglichen Schaltzustand ausschließlich das erste Austrittsstrahlungsfeld 14 austritt und in einem zweiten möglichen Schaltzustand ausschließlich das zweite Austrittsstrahlungsfeld 16. Es ist aber auch denkbar, weitere Schaltzustände vorzusehen, beispielsweise einen dritten möglichen Schaltzustand, bei dem beide Austrittsstrahlungsfelder 14 und 16 aus der erfindungsgemäßen Modulationseinrichtung 10 austreten.

Das Eintrittsstrahlungsfeld 12 breitet sich in einer Eintrittsrichtung 24 bis zu einem ersten akustooptischen Modulator 30a aus, dessen optisch aktives Medium 33a mit einer von einem Schallfrequenzgenerator 31 gespeisten Schallquelle 32a gekoppelt ist, die in dem akustooptisch aktiven Medium 33a eine sich in einer ersten Schallausbreitungsrichtung 34a ausbreitende erste Schallwelle 36a erzeugt, welche ein Gitter 38a von ersten Wellenfronten bildet.

Das Eintrittsstrahlungsfeld 12 wird somit bezüglich des ersten akustooptischen Modulators 30a zu einem in diesen einfallenden Strahlungsfeld 40, welches sich in einer Strahlachse 42 ausbreitet und nach Eintritt in den akustooptischen Modulator auf das Gitter 38a erster Wellenfronten der ersten Schallwelle 36a auftrifft.

Durch dieses Gitter 38a von Wellenfronten erfolgt in einem ersten Verzweigungsbereich 41a durch eine erste akustooptische Modulation ein Aufteilen des einfallenden Strahlungsfeldes 40 in einen sich längs der Strahlachse 42 weiter ausbreitenden transmittierten Ast 40T sowie einen gegenüber der Eintrittsrichtung 42 um einen Beugungswinkel α, welcher einem Beugungswinkel erster Ordnung bezüglich des Gitters 38a der ersten Wellenfronten entspricht, gebeugten und sich in einer Beugungsrichtung erster Ordnung längs einer Strahlachse 44 ausbreitenden gebeugten Ast 40B.

Die Strahlachse 42 des einfallenden Strahlungsfeldes 40 und die Strahlachse 44 verlaufen dabei gegenüber der ersten Schallausbreitungsrichtung 34a so, daß die erste Schallausbreitungsrichtung 34a parallel zu einer Winkelhalbierenden zwischen der Strahlachse 42 und der Strahlachse 44 verläuft.

Die Strahlachse 44 des bei der ersten akustooptischen Modulation entstehenden gebeugten Astes 40B spannt gemeinsam mit der Strahlachse 42 eine erste Modulationsebene ME1 auf, welche bei der Darstellung in Fig. 1 der Zeichnungsebene entspricht.

Sowohl der transmittierte Ast 40T als auch der gebeugte Ast 40B breiten sich beide innerhalb des ersten akustooptischen Modulators 30a weiter in einer Austrittsrichtung zu einem Strahlungsführungssystem 26 hin aus, wobei aus Gründen der Anschaulichkeit die Brechung an Grenzflächen des ersten akustooptischen Modulators 30a vernachlässigt ist.

Das Strahlungsführungssystem 26 weist beispielsweise einen ersten Spiegel 50 mit einer ersten Spiegelfläche 52 und einen zweiten Spiegel 54 mit einer zweiten Spiegelfläche 56 auf, wobei im vorliegenden Ausführungsbeispiel des Strahlungsführungssystems die Spiegelflächen 52 und 56 der Spiegel 50 und 54 einander zugewandt angeordnet sind und vorzugsweise so angeordnet sind, daß der sich in Richtung des Strahlungsführungssystems 26 ausbreitende transmittierte Ast 40T auf die Spiegelfläche 52 auftrifft und der sich in Richtung des Strahlungsführungssystems 26 ausbreitende gebeugte Ast 40B auf die zweite Spiegelfläche 56 auftrifft, wobei beispielsweise beide Spiegelflächen 52 und 56 parallel zueinander verlaufen.

Ferner sind die Spiegel 50 und 54 relativ zu dem transmittierten Ast 40T und dem gebeugten Ast 40B und relativ zueinander so angeordnet, daß die zunächst ausgehend vom ersten akustooptischen Modulator 30a im Winkel α auseinanderlaufenden Äste 40T und 40B so reflektiert und damit umgelenkt werden, daß sie wieder im Winkel α aufeinander zu verlaufen, und zwar in Form eines umgelenkten transmittierten Astes 40TU und eines umgelenkten gebeugten Astes 40BU.

Dieser umgelenkte transmittierte Ast 40TU und der umgelenkte gebeugte Ast 40BU breiten sich wiederum im Winkel α zueinander in Richtung aufeinanderzu aus und fallen dabei in einen zweiten akustooptischen Modulator 30B ein, wobei sich diese beiden umgelenkten Äste 40TU und 40BU in einem zweiten Verzweigungsbereich 41b im zweiten akustooptischen Modulator 30B schneiden.

Vorzugsweise verläuft dabei eine Strahlachse 45 des umgelenkten transmittierten Astes 40TU ungefähr parallel zur Strahlachse 44 des gebeugten Astes 40B und eine Strahlachse 43 des umgelenkten gebeugten Astes 40BU ungefähr parallel zur Strahlachse 42 des transmittierten Astes 40T.

Auch der zweite akustooptische Modulator 30b umfaßt ein akustooptisch aktives Medium 33b, welches mit einer von dem Schallfrequenzgenerator 31 gespeisten Schallquelle 32b versehen ist, welche in diesem akustooptisch aktiven Medium 33b eine sich in einer zweiten Schallausbreitungsrichtung 34b ausbreitende Schallwelle 36b mit ungefähr derselben Frequenz wie die erste Schallwelle 36a erzeugt, die ihrerseits ein zweites Gitter 38b aus Wellenfronten bildet, an welchem eine zweite akustooptische Modulation erfolgt, wobei durch diese zweite akustooptische Modulation sowohl aus dem umgelenkten transmittierten Ast 40TU als auch aus dem umgelenkten gebeugten Ast 40BU jeweils ein transmittierter und gebeugter Ast erzeugt werden.

So entsteht durch die zweite akustooptische Modulation aus dem umgelenkten transmittierten Ast 40TU ein transmittierter umgelenkter transmittierter Ast 40TUT und ein gebeugter umgelenkter transmittierter Ast 40TUB, wobei sich der transmittierte umgelenkte transmittierte Ast 40TUT mit unveränderter Ausbreitungsrichtung gegenüber dem umgelenkten transmittierten Ast 40TU längs der Strahlachse 45 ausbreitet, während der gebeugte umgelenkte transmittierte Ast 40TUB im Beugungswinkel α zur Strahlachse 45 des transmittierten umgelenkten transmittierten Astes 40TUT sich längs der Strahlachse 43 ausbreitet und zwar so, daß eine Winkelhalbierende zwischen der Strahlachse 43 des gebeugten umgelenkten transmittierten Astes 40TUB und der Strahlachse 45 des in den zweiten akustooptischen Modulator 30b einfallenden umgelenkten transmittierten Ast 40TU parallel zur zweiten Ausbreitungsrichtung 34b der zweiten Schallwelle 36B verläuft. Dabei spannen die Strahlachsen 43 und 45 eine zweite Modulationsebene ME2 auf, welche im einfachsten Fall ebenfalls der Zeichnungsebene in Fig. 1 entspricht.

Ferner erfolgt durch die zweite akustooptische Modulation eine Aufteilung des umgelenkten gebeugten Astes 40BU in einen transmittierten umgelenkten gebeugten Ast 40BUT, welcher sich in Fortsetzung der Einfallsrichtung des umgelenkten gebeugten Astes 40BU in den zweiten akustooptischen Modulator 30b ausbreitet und somit parallel zum gebeugten umgelenkten transmittierten Ast 40TUB, und in einen gebeugten umgelenkten gebeugten Ast 40BUB, welcher im Beugungswinkel α erster Ordnung zum einfallenden umgelenkten gebeugten Ast 40BU verläuft und somit parallel zum transmittierten umgelenkten transmittierten Ast 40TUT.

Bei der erfindungsgemäßen akustooptischen Modulationseinrichtung 10 hat der durch die erste akustooptische Modulation im ersten akustooptischen Modulator 30a erzeugte gebeugte Ast 40B aufgrund der Beugung in Rückwärtsrichtung gegenüber der ersten Schallausbreitungsrichtung 34a eine Frequenzverschiebung um -F gegenüber dem einfallenden Strahlungsfeld 40, so daß ausgehend davon, daß das einfallende Strahlungsfeld 40 die Frequenz F₀ aufweist, der gebeugte Ast 40B die Frequenz F₀-F aufweist.

Diese Frequenz behält der gebeugte Ast 40B bei, wobei bei der zweiten akustooptischen Modulation im zweiten Schallwellenfeld 36B der gebeugte umgelenkte gebeugte Ast 40BUB aufgrund der Beugung durch die zweite akustooptische Modulation eine weitere Frequenzverschiebung um +F erfährt, wenn der gebeugte umgelenkte gebeugte Ast 40BUB bezüglich der zweiten Schallausbreitungsrichtung 34b in Vorwärtsrichtung gebeugt wird, so daß insgesamt der gebeugte umgelenkte gebeugte Ast 40BUB eine Frequenz von F₀-F+F und somit wiederum eine Frequenz von F₀ aufweist.

Dagegen bleibt die Frequenz des transmittierten umgelenkten gebeugten Astes 40BUT erhalten, so daß dieser die Frequenz F₀-F aufweist.

Da der transmittierte Ast 40T bei der ersten akustooptischen Modulation im ersten akustooptischen Modulator 30a keine Beugung erfahren hat, bleibt dessen Frequenz unverändert, so daß dieser die Frequenz F₀ aufweist. Die Frequenz bleibt auch bei der zweiten akustooptischen Modulation im zweiten akustooptischen Modulator 30b erhalten, wenn aus dem umgelenkten transmittierten Ast 40TU der transmittierte umgelenkte transmittierte Ast 40TUT gebildet wird, so daß dieser ebenfalls die Frequenz F₀ aufweist.

Andererseits erfolgt eine Frequenzverschiebung bei der Bildung des gebeugten umgelenkten transmittierten Astes 40TUB im Rahmen der zweiten akustooptischen Modulation im zweiten akustooptischen Modulator 30b, wobei gegenüber der zweiten Schallausbreitungsrichtung 34b eine Beugung in Rückwärtsrichtung erfolgt, so daß der gebeugte umgelenkte transmittierte Ast 40TUB eine Frequenzverschiebung von -F erhalten hat und dessen Frequenz F₀-F ist.

Damit haben der transmittierte umgelenkte transmittierte Ast 40TUT und der gebeugte umgelenkte gebeugte Ast 40BUB, die sich parallel zueinander ausbreiten, dieselbe Frequenz und breiten sich außerdem in wesentlichen Teilen überlappend zueinander aus, so daß diese abhängig von der relativen Phasenlage zueinander interferieren und ein zweites Strahlungsfeld 48 bilden, welches bei diesem Ausführungsbeispiel dem zweiten Austrittsstrahlungsfeld 16 entspricht.

Ist dabei die Phasenlage beider Äste vorzugsweise so, daß diese relativ zueinander um ungefähr 180° verschoben ist, so löschen sich diese durch destruktive Interferenz dann aus, wenn die Amplituden der beiden Äste 40TUT und 40BUB gleich groß sind und das zweite Austrittsstrahlungsfeld 16 hat die Amplitude 0.

Dies ist beispielsweise dann der Fall, wenn sowohl bei der ersten akustooptischen Modulation im ersten akustooptischen Modulator 30a als auch bei der zweiten akustooptischen Modulation im zweiten akustooptischen Modulator 30b jeweils eine Modulation mit einer Beugungseffizienz von ungefähr 50 % erfolgt.

Ferner haben auch der transmittierte umgelenkte gebeugte Ast 40BUT und der gebeugte umgelenkte transmittierte Ast 40TUB dieselbe Frequenz nämlich F₀-F, da beide aufgrund einer einmaligen Beugung in Rückwärtsrichtung gegenüber der jeweiligen Schallausbreitungsrichtung 34a bzw. 34b entstanden sind, so daß sich diese beiden Äste 40BUT und 40TUB aufgrund ihrer sich im wesentlichen überlagernden Ausbreitung in der gleichen Richtung ebenfalls durch Interferenz miteinander wechselwirken und dann, wenn vorzugsweise die Phasendifferenz zwischen beiden 0 ist, eine positive Wechselwirkung ergeben. Aus den Ästen 40BUT und 40TUB wird durch konstruktive Interferenz das erste Strahlungsfeld 46 gebildet, welches bei diesem ersten Ausführungsbeispiel dem ersten Austrittsstrahlungsfeld 14 entspricht und im Fall einer Beugungseffizienz von ungefähr 50% bei beiden akustooptischen Modulationen maximal ist.

Beim Durchführen der ersten akustooptischen Modulation und der zweiten akustooptischen Modulation mit der Beugungseffizienz von ungefähr 50% besteht somit die Möglichkeit, das Eintrittsstrahlungsfeld 12 im wesentlichen ausschließlich in das erste Austrittsstrahlungsfeld 14 einzukoppeln, während das zweite Austrittsstrahlungsfeld 16 verschwindet.

Wird dagegen in beiden akustooptischen Modulatoren 30a und 30b die Schallquelle 32a und 32b abgeschaltet, so verschwindet in beiden akustooptischen Modulatoren 30a und 30b das jeweilige Gitter 38a und 38b der Wellenfronten und es findet weder eine erste akustooptische Modulation noch eine zweite akustooptische Modulation statt, so daß das Eintrittsstrahlungsfeld 12 ohne akustooptische Modulation den ersten akustooptischen Modulator 30a passiert, von dem Spiegel 50 umgelenkt wird und ohne akustooptische Modulation den zweiten akustooptischen Modulator 30b passiert und als zweites Austrittsstrahlungsfeld 16 austritt. Damit wird in diesem Fall das Eintrittsstrahlungsfeld 12 ausschließlich in das zweite Austrittsstrahlungsfeld 16 eingekoppelt.

Somit besteht die Möglichkeit, entweder durch Einschalten der Schallquellen 32a und 32b und Betreiben der ersten akustooptischen Modulation und der zweiten akustooptischen Modulation mit einer Beugungseffizienz von 50% oder Ausschalten der Schallquellen 32a und 32b das Eintrittsstrahlungsfeld 12 wechselweise entweder in das erste Austrittsstrahlungsfeld 14 oder das zweite Austrittsstrahlungsfeld 16 einzukoppeln.

Bei allen übrigen Arten des Betreibens der akustooptischen Modulatoren 30a und 30b mit Werten der Beugungseffizienz abweichend von ungefähr 50% oder auch unterschiedlichen Werten der Beugungseffizienz können beliebige Zwischenzustände zwischen einem ausschließlichen Einkoppeln des Eintrittsstrahlungsfeldes 12 in eines der Austrittsstrahlungsfelder 14 oder 16 eingestellt werden.

Um sicherzustellen, daß die beiden Schallquellen 32a und 32b Schallwellen 36a und 36b mit derselben Frequenz erzeugen, ist vorzugsweise ein einziger Frequenzgenerator vorgesehen, welcher die beiden Schallquellen 32a und 32b ansteuert.

Bei den von den Schallquellen 32a und 32b erzeugten Schallwellen kann es sich dabei um Scherwellen oder Kompressionswellen oder Mischungen derartiger Wellen handeln.

Vorzugsweise werden mit den Schallquellen 32a und 32b Scherwellen darstellende Schallwellen 36a und 36b in einem isotropen Material, beispielsweise Quarzglas erzeugt, in welchem dann die Gitter 38a und 38b entstehen, die für die erste akustooptische Modulation und die zweite akustooptische Modulation verantwortlich sind.

Bei dem in Fig. 1 dargestellten ersten Ausführungsbeispiel ist es nicht zwingend notwendig, daß die erste Modulationsebene ME1 und die zweite Modulationsebene ME2 in einer gemeinsamen Ebene, nämlich der Zeichnungsebene liegen. Es ist genauso denkbar, daß die Modulationsebenen ME1 und ME2 beispielsweise in einem Winkel zueinander verlaufen.

Die Anordnung der Modulationsebenen ME1 und ME2 hängt primär davon ab, wie das Strahlungsführungssystem zwischen dem ersten akustooptischen Modulator 30a und dem zweiten akustooptischen 30b ausgebildet und aufgebaut ist.

Werden beispielsweise für das Strahlungsführungssystem 26 anstelle der Reflektoren 50 und 54 Lichtleiter verwendet, so können die Modulationsebenen ME1 und ME2 eine beliebige Ausrichtung relativ zueinander haben.

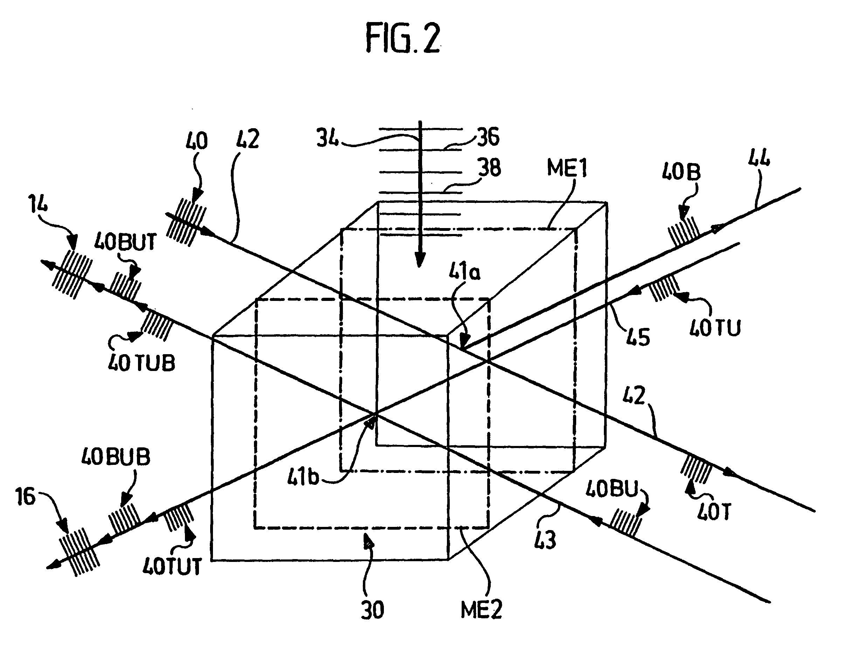

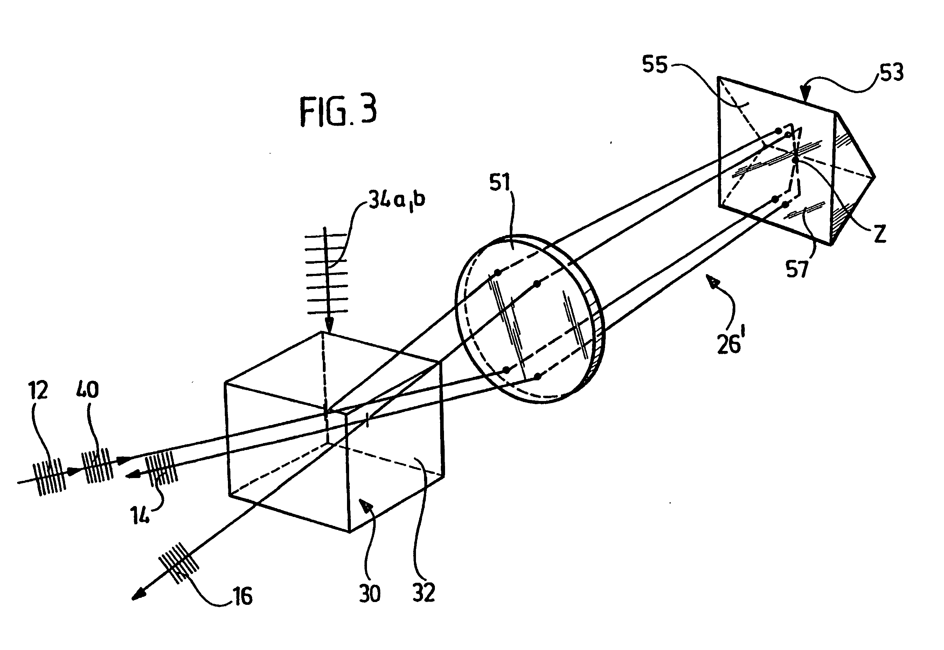

Beispielsweise ist es, wie bei einem zweiten Ausführungsbeispiel, dargestellt in Fig. 2 und 3 vorgesehen, die erste Modulationsebene ME1 und die zweite Modulationsebene ME2 in einen einzigen akustooptischen Modulator 30 zu legen, der sowohl den ersten akustooptischen Modulator 30a des ersten Ausführungsbeispiels als auch den zweiten akustooptischen Modulator 30b des zweiten Ausführungsbeispiels darstellt. Dieser akustooptische Modulator ist von einem sich in einer einzigen Ausbreitungsrichtung 34 ausbreitenden Schallwellenfeld 36 durchsetzt, dessen Wellenfronten ein einziges Gitter 38 bilden, das sowohl das erste Gitter 38a als auch das zweite Gitter 38b darstellt, da beide Modulationsebenen ME1 und ME2 von dem Gitter 38 durchsetzt sind.

Aus dem in der ersten Modulationsebene ME1 einfallenden Strahlungsfeld 40, welches sich längs der Strahlachse 42 ausbreitet, wird somit durch Beugung der gebeugte Ast 40B, welcher sich längs der Strahlachse 44 ausbreitet als auch der transmittierte Ast 40T, welcher sich in Fortsetzung der Strahlachse 42 weiter ausbreitet, gebildet. Diese beiden Äste 40B und 40T werden, wie in Fig. 3 dargestellt, durch das Strahlungsführungssystem 26' so in den Modulator 30 zurückgeführt, daß sich der umgelenkte gebeugte Ast 40BU und der umgelenkte transmittierte Ast 40TU in der zweiten Modulationsebene ME2 aufeinanderzu ausbreiten und aufgrund der akustooptischen Modulation sich dann einerseits die Äste 40BUB und 40TUT und andererseits die Äste 40TUB und 40BUT bilden, die das zweite Austrittsstrahlungsfeld 16 bzw. das erste Austrittsstrahlungsfeld 14 ergeben.

Da nunmehr in dem akustooptischen Modulator 30 das Schallwellenfeld 36 in einer einzigen Ausbreitungsrichtung 34 durch das Medium 32 des akustooptischen Modulators wandert, ist allerdings das Strahlungsführungssystem 26' so auszubilden, daß die Winkelhalbierende zwischen der Strahlachse 45 des umgelenkten transmittierten Astes 40TU und der Strahlachse 43 des ersten Austrittsstrahlungsfeldes parallel zur Schallausbreitungsrichtung 34 verläuft und außerdem der gebeugte umgelenkte transmittierte Ast 40TUB durch Beugung in Rückwärtsrichtung relativ zur Schallausbreitungsrichtung 34 entsteht, so daß sich einerseits der gebeugte umgelenkte transmittierte Ast 40TUB und der transmittierte umgelenkte gebeugte Ast 40BUT zum ersten Austrittsstrahlungsfeld 14 überlagern und andererseits der gebeugte umgelenkte gebeugte Ast 40BUB und der transmittierte umgelenkte transmittierte Ast 40TUT zum zweiten Austrittsstrahlungsfeld 16 mit derselben Frequenz überlagern können, wie im Zusammenhang mit dem ersten Ausführungsbeispiel beschrieben.

Um dies zu erreichen, ist das Strahlungsführungssystem 26' so ausgebildet, daß es eine Linse 51 umfaßt, welche den gebeugten Ast 40B und den transmittierten Ast 40T so umlenkt, daß sich dies in einem Zwischenschnittpunkt Z schneiden und dann erneut wieder in den Verzweigungsbereich 41b in der zweiten Modulationsebene ME2 mit dem Beugungswinkel erster Ordnung schneiden. Um ferner die Äste 40B und 40T von der ersten Modulationsebene ME1 zu der zweiten Modulationsebene ME2 in demselben akustooptischen Modulator 30 zurückzuführen, ist ein Umlenkprisma 53 vorgesehen, welches zwei Spiegelflächen 55 und 57 aufweist, zwischen welchen der Zwischenschnittpunkt Z liegt.

Im übrigen wird bezüglich der Funktionsweise des zweiten Ausführungsbeispiels vollinhaltlich auf das erste Ausführungsbeispiel Bezug genommen.

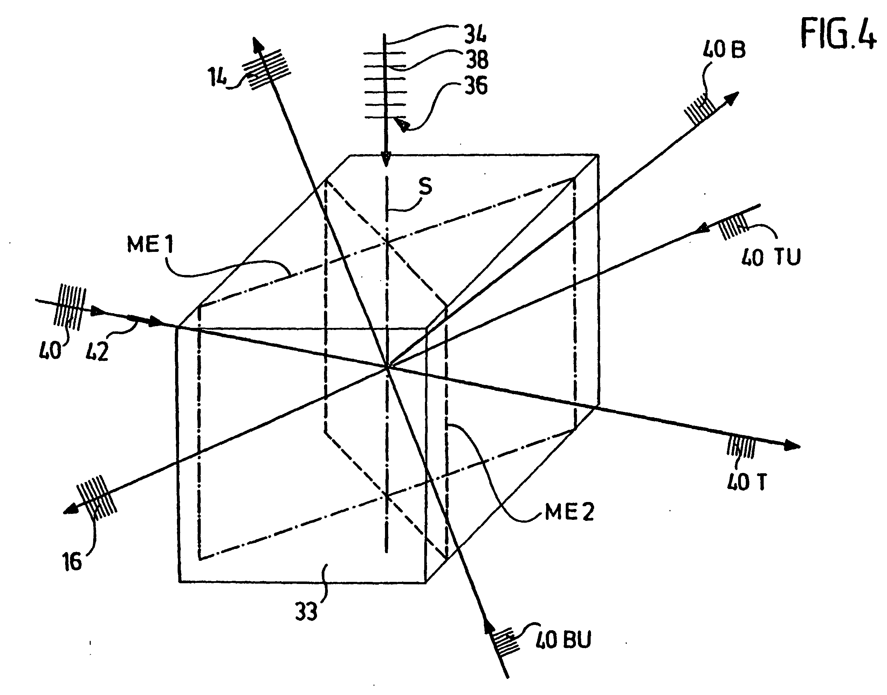

Alternativ zum zweiten Ausführungsbeispiel ist es bei einem dritten Ausführungsbeispiel, wie in Fig. 4 dargestellt, möglich, die Modulationsebenen ME1 und ME2 als sich schneidende Ebenen auszuführen, welche sich längs einer Schnittlinie S schneiden, die im wesentlichen parallel zur Schallausbreitungsrichtung 34 verläuft.

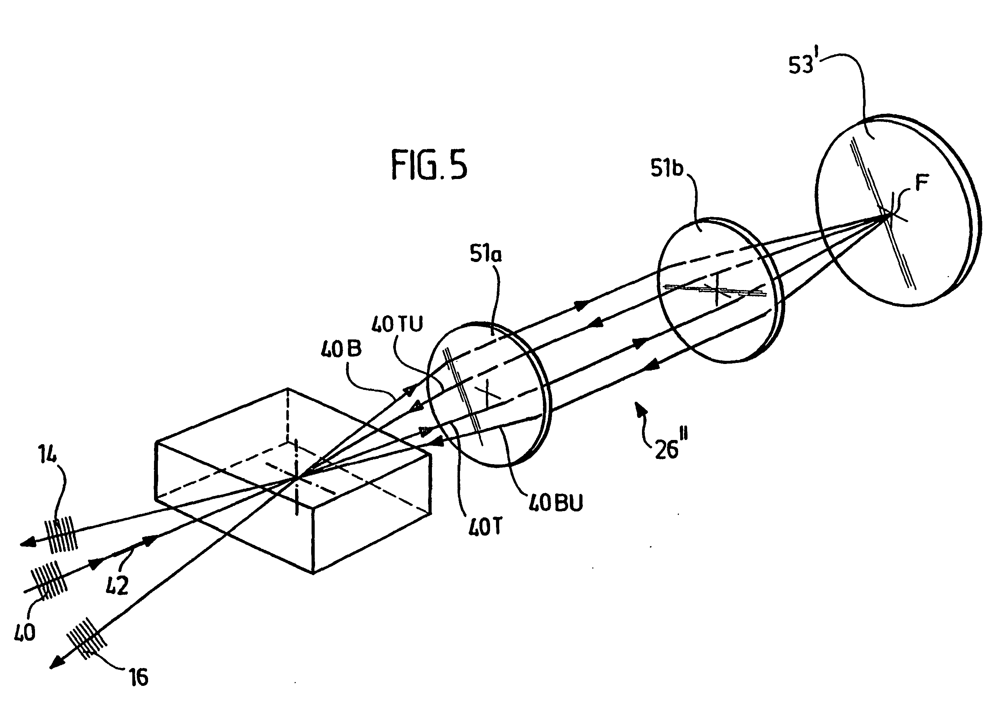

Ferner wird, wie in Fig. 5 dargestellt, das Strahlungsführungssystem 26" dabei so ausgebildet, daß es eine Linse 51a und eine Linse 51b, deren gemeinsame optische Achse die Schnittlinie schneidet, aufweist, die zunächst den gebeugten Ast 40B und den transmittierten Ast 40T, beispielsweise parallel zueinander verlaufen lassen und dann auf einen einzigen Reflektor 53' zu einem auf der Schnittlinie S liegenden Schnittpunkt F umlenken, wobei dann wiederum die Reflexion die umgelenkten Äste 40TU und 40BU entstehen, die nach Durchlaufen der beiden Linsen 51b und 51a in der zweiten Modulationsebene ME2 liegen.

Vorzugsweise bilden die Linsen 51a und 51b ein Teleskop dessen optische Achse sowohl durch den Schnittpunkt F als auch durch die Schnittlinie S verläuft.

Im übrigen erfolgen in der ersten Modulationsebene ME1 und in der zweiten Modulationsebene ME2 dieselben Aufteilungen in gebeugte und transmittierte Äste, wie sie bereits im Zusammenhang mit dem ersten und zweiten Ausführungsbeispiel beschrieben sind, so daß diesbezüglich vollinhaltlich auf das erste und zweite Ausführungsbeispiel Bezug genommen werden kann.

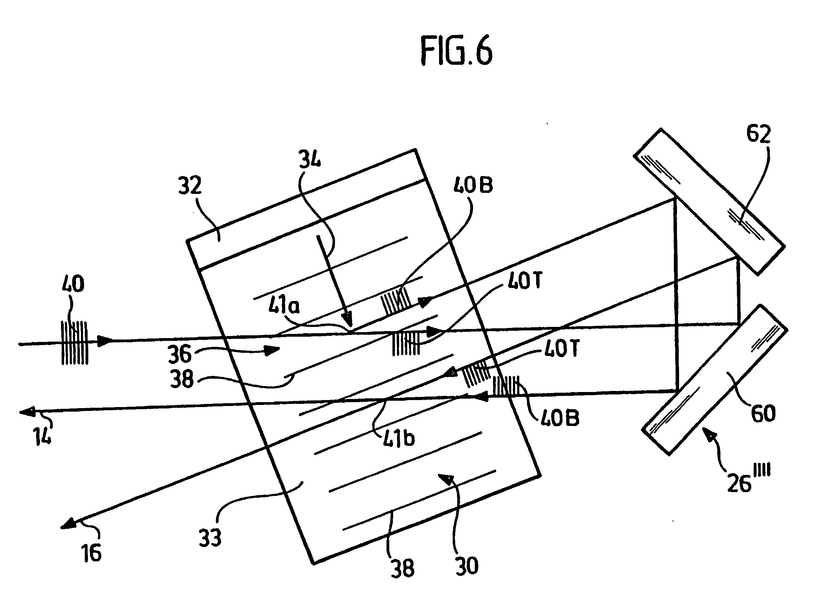

Bei einem vierten Ausführungsbeispiel, dargestellt in Fig. 6 fallen noch zusätzlich die erste Modulationsebene ME1 und die zweite Modulationsebene ME2 zusammen und liegen beide in der Zeichnungsebene, wobei allerdings der erste und zweite Verzweigungsbereich 41a bzw. 41b noch getrennt, und zwar in Schallausbreitungsrichtung 34 gegeneinander versetzt, angeordnet sind.

Im Gegensatz zu den bislang beschriebenen Strahlungsführungssystemen 26, 26' und 26" ist bei dem Strahlungsführungssystem 26'" gemäß dem vierten Ausführungsbeispiel ein erster Reflektor 60 und ein zweiter Reflektor 62 vorgesehen, welcher den transmittierten Ast 40T des einfallenden Strahlungsfeldes 40 so als umgelenkten transmittierten Ast 40TU in den akustooptischen Modulator 30 zurückführen, daß dieser umgelenkte transmittierte Ast 40TU zwar parallel zum gebeugten Ast 40B, jedoch in räumlichem Abstand von diesem und somit von diesem räumlich getrennt in den akustooptischen Modulator eintritt.

Ferner wird durch die zwei Reflektoren 60 und 62 der gebeugte Ast 40B so umgelenkt, daß er als umgelenkter gebeugter Ast 40BU auf den umgelenkten transmittierten Ast 40TU im Beugungswinkel erster Ordnung α verlaufend in den akustooptischen Modulator eintritt, jedoch im Abstand und parallel zum transmittierten Ast 40T verläuft, so daß die beiden umgelenkten Äste 40TU und 40BU sich in dem zweiten Verzweigungsbereich 40b des akustooptischen Modulators 30 schneiden, welcher ebenfalls im Abstand von dem Verzweigungsbereich 41a im akustooptischen Modulator 30 angeordnet ist.

Damit ist auch die Strahlachse des entstehenden ersten Austrittsstrahlungsfeldes 14 versetzt gegenüber der Strahlachse des einfallenden Strahlungsfeldes 40 und außerdem auch die Strahlachse des zweiten Austrittsstrahlungsfeldes 16 so ausgerichtet, daß diese im Beugungswinkel erster Ordnung α gegenüber dem ersten Austrittsstrahlungsfeld 14 verläuft.

Arbeitet nun der akustooptische Modulator 30 mit einer Beugungseffizienz von im wesentlichen 0%, so erfolgt keine Beugung des einfallenden Strahlungsfeldes 40 und dieses wird lediglich durch die Reflektoren 60 und 62 reflektiert, bildet den umgelenkten transmittierten Ast 40TU und dann das zweite Austrittsstrahlungsfeld 16, welches lediglich den transmittierten umgelenkten transmittierten Ast 40TUT umfaßt.

Ferner hat aufgrund der nicht auftretenden Beugung das erste Austrittsstrahlungsfeld die Intensität 0.

Wird nun allerdings der akustooptische Modulator 30 mit einer Beugungseffizienz von im wesentlichen 50% betrieben, so entsteht aufgrund der Beugung und Transmission der zurückgeführten Äste 40TU und 40BU im akustooptischen Modulator 30 das erste Austrittsstrahlungsfeld 14 mit maximaler Intensität, während das zweite Strahlungsfeld 16 aufgrund Interferenz die Intensität 0 hat, wie im Zusammenhang mit dem ersten Ausführungsbeispiel im Detail erläutert.

Bei dem vierten Ausführungsbeispiel sind beispielsweise die Reflektoren 60 und 62 vorzugsweise so angeordnet, daß die optischen Wege für die Äste 40B und 40T von dem ersten Verzweigungsbereich 41a zum zweiten Verzweigungsbereich 41b entweder gleich lang sind oder eine derartige Wegdifferenz aufweisen, daß die gewünschte Phasendifferenz zwischen den bei der zweiten akustooptischen Modulation erzeugten Ästen, die einerseits das erste Austrittsstrahlungsfeld 14 oder das zweite Austrittsstrahlungsfeld 16 ergeben sollen, die erforderlichen Werte einnimmt, wie sie im Zusammenhang mit dem ersten Ausführungsbeispiel beschrieben sind, das heißt, daß sich die Äste 40TUT und 40BUB aufgrund der Phasendifferenz bei von 0 verschiedener Amplitude beider Äste auslöschen sollen, während die Phasendifferenz zwischen den Ästen 40BUT und 40TUB im wesentlichen 0 sein sollen.

Das vierte Ausführungsbeispiel gemäß Fig. 6 hat gegenüber dem zweiten und dritten Ausführungsbeispiel neben dem Vorteil, daß nur ein einziger akustooptischer Modulator für die erste akustooptische Modulation und die zweite akustooptische Modulation erforderlich ist, den weiteren Vorteil, daß durch das Zusammenlegen der ersten Modulationsebene ME1 und der zweiten Modulationsebene ME2 sich der Justieraufwand für das Strahlungsführungssystem 26"' gegenüber den vorstehend beschriebenen Strahlungsführungssystemen 26, 26' und 26" weiter vereinfacht, da sämtliche Äste 40B und 40T sowie 40TU und 40BU in einer gemeinsamen Ebene verlaufen.

Im übrigen wird auf die grundlegenden Erläuterungen zum ersten Ausführungsbeispiel Bezug genommen.

Bei dem zweiten, dritten und vierten Ausführungsbeispiel lasen sich die Modulationsebenen ME1 und ME2 auch so anordnen, daß sie zusammenfallen.

Hierzu sind die optischen Elemente der Strahlungsrückführungssysteme 26', 26" und 26"' entsprechend anders anzuordnen.

Darüber hinaus läßt sich durch Änderung der optischen Elemente der Strahlungsrückführungssystem 26', 26" und 26"' auch das erste Strahlungsfeld 46 so legen, daß dessen Strahlachse ungefähr mit der des einfallenden Strahlungsfeldes 40 zusammenfällt.

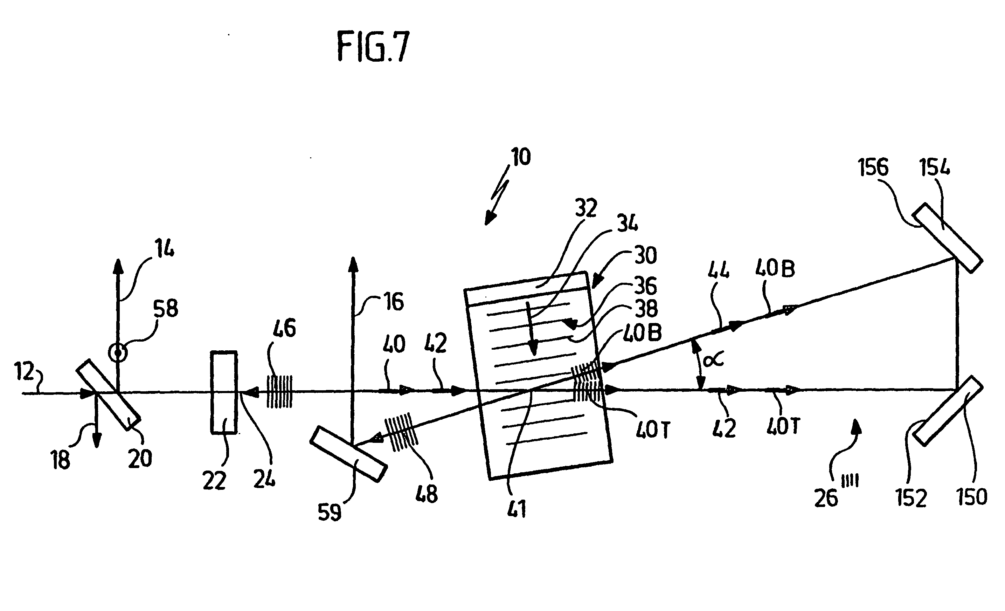

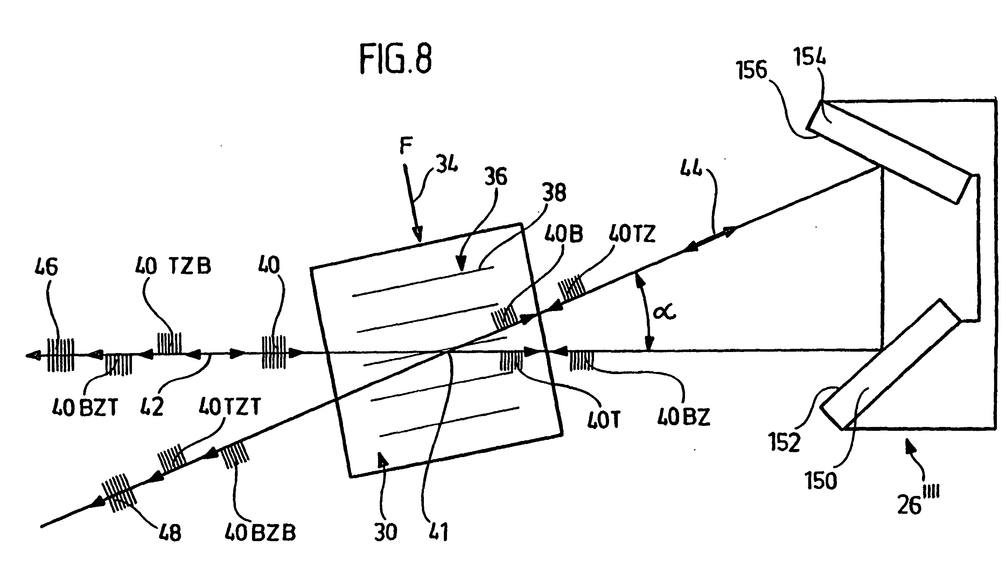

Bei einem fünften Ausführungsbeispiel, dargestellt in Fig. 7 und 8, ist das Strahlungsführungssystem 26"" hinsichtlich des Weges für die einzelnen Äste 40B und 40T noch weiter verbessert, so daß der optische Weg für die Äste 40B und 40T derselbe ist.

Im einzelnen funktioniert das fünfte Ausführungsbeispiel gemäß Fig. 7 und 8 wie folgt.

Das Eintrittsstrahlungsfeld 12 weist vorzugsweise eine in der in Fig. 1 dargestellten Zeichenebene liegende Polarisationsrichtung 18 auf und zumindest der in dieser Polarisationsrichtung 18 polarisierte Teil tritt durch einen Polarisator 20 hindurch, durchsetzt ein polarisationsbeeinflussendes Element 22 und breitet sich in diesem in Eintrittsrichtung 24 längs der Strahlachse 42 bis zu dem als Strahlungsrückführungssystem ausgebildeten Strahlungsführungssystem 26"" aus, welches mit dem zwischen dem polarisationsbeeinflussenden Element 22 und dem Strahlungsrückführungssystem 26 vorgesehenen akustooptischen Modulator 30 zusammenwirkt.

Aus dem das polarisationsbeeinflussende Element 22 durchsetzenden Eintrittsstrahlungsfeld 12 wird das in den akustooptischen Modulator 30 einfallendes Strahlungsfeld 40, welches sich längs der Strahlachse 42 ausbreitet und nach Eintritt in den akustooptischen Modulator 30 zur ersten akustooptischen Modulation auf das Gitter 38 aus Schallwellenfronten trifft. Dadurch wird das einfallende Strahlungsfeld 40 aufgeteilt in einen sich ausgehend von dem Verzweigungsbereich 41 längs der Strahlachse 42 weiter ausbreitenden transmittierten Ast 40T sowie den gegenüber der Richtung 42 um den Beugungswinkel α gebeugten und sich längs der Strahlachse 44 ausbreitenden, in der ersten Ordnung gebeugten Ast 40B, die sich beide innerhalb des akustooptischen Modulators 30 weiter in einer Austrittsrichtung zum Strahlungsrückführungssystem 26 hin ausbreiten, wobei aus Gründen der Anschaulichkeit die Brechung an den Grenzflächen des akustooptischen Modulators vernachlässigt ist.

Wie in Fig.7 und 8 dargestellt, umfaßt das Strahlungsrückführungssystem 26"' einen ersten Spiegel 150 mit einer ersten Spiegelfläche 152 sowie einen zweiten Spiegel 154 mit einer zweiten Spiegelfläche 156, wobei die Spiegelflächen 152, 156 so angeordnet sind, daß der sich in Richtung des Strahlungsrückführungssystem 26"" ausbreitende transmittierte Ast 40T auf die Spiegelfläche 152 auftrifft und der sich in Richtung des Strahlungsrückführungssystems 26"" ausbreitende gebeugte Ast 40B auf die zweite Spiegelfläche 156 auftrifft.

Ferner sind die Spiegelflächen 152, 156 noch relativ zueinander so angeordnet, daß der transmittierte Ast 40T von der ersten Spiegelfläche 152 auf die zweite Spiegelfläche 156 reflektiert wird und von dieser zum akustooptischen Modulator 30 zurückreflektiert wird und in Form eines umgelenkten transmittierten Astes, in diesem Fall als zurückgeführten transmittierten Ast 40TZ bezeichnet, sich wieder in Richtung des akustooptischen Modulators 30 ausbreitet, wobei die Strahlachse des zurückgeführten transmittierten Astes 40TZ mit der Strahlachse 44 im wesentlichen zusammenfällt, so daß der gebeugte Ast 40B und der zurückgeführte transmittierte Ast 40TZ sich im wesentlichen längs der Strahlachse 44, jedoch mit unterschiedlichen, insbesondere entgegengesetzten, Ausbreitungsrichtungen verlaufen.

Außerdem wird der gebeugte Ast 40B von der zweiten Spiegelfläche 156 auf die erste Spiegelfläche 152 so reflektiert, daß der umgelenkte Ast, in diesem Fall als zurückgeführter gebeugter Ast 40BZ bezeichnet, sich längs einer mit der der Strahlachse 42 im wesentlichen zusammenfallenden Strahlachse, jedoch mit einer entgegengesetzt zum transmittierten Ast 40T verlaufenden Richtung, ausbreitet und ebenfalls in den akustooptischen Modulator 30 eintritt.

Somit stellt das Strahlungsrückführungssystem 26"" ein Sonderfall des Strahlungsrückführungssystems 26"' dar, bei welchem der gebeugte Ast 40B und der transmittierte Ast 40T vom ersten Verzweigungsbereich 41a zum zweiten Verzweigungsbereich 41b dieselben optischen Wege durchlaufen.

Im akustooptischen Modulator 30 erfolgt nun ebenfalls bedingt durch das Beugungsgitter 38 die zweite akustooptische Modulation und somit die Aufteilung des zurückgeführten transmittierten Astes 40TZ in den sich weiter ungefähr parallel zu der Strahlachse 44 ausbreitenden und den akustooptischen Modulator 30 in Transmission durchsetzenden Ast 40TZT sowie den gebeugten Ast 40TZB, welcher entgegengesetzt zum einfallenden Strahlungsfeld 40 ungefähr parallel zur Strahlachse 42, vorzugsweise mit diesem zusammenfallend, sich in Richtung des polarisationsbeeinflussenden Elements 22 ausbreitet und aus dem akustooptischen Modulator 30 austritt.

In gleicher Weise erfolgt eine Aufteilung des zurückgeführten gebeugten Astes 40BZ in den den akustooptischen Modulator 30 in Transmission durchsetzenden Ast 40BZT, der sich ungefähr parallel zur Strahlachse 42, jedoch entgegengesetzt zum transmittierten Ast 40T ausbreitet und den gebeugten Ast 40BZB, welcher sich ungefähr parallel zu der Strahlachse 44 ausbreitet und aus dem akustooptischen Modulator 30 austritt.

Betrachtet man ferner noch die Phasen der Äste der Strahlungsfelder, so ergibt sich, daß bei einer Beugungseffizienz von 50% zwischen dem jeweils transmittierten Ast 40T und dem gebeugten Ast 40B erster Ordnung Verhältnisse analog denen eines Antiresonanten Ring Interferometers, welches in dem Artikel von E. Siegman in IEEE Journal of Quantum Electronics, February 1973, Seite 247 bis 250 beschrieben ist, vorliegen, die dazu führen, daß die "Reflektivität" 100% betragen kann, das heißt, daß sich die ein zweites aus der Modulationseinrichtung 10 austretendes Strahlungsfeld 48 bildenden Äste 40TZT und 40BZB durch destruktive Interferenz gegenseitig auslöschen können, während die aus der Modulationseinrichtung austretendes rücklaufendes erstes Strahlungsfeld 46 bildenden Äste 40BZT und 40TZB durch konstruktive Interferenz im wesentlichen die gesamte Leistung des einfallenden Strahlungsfeldes 40 umfassen können.

Existiert dagegen kein Gitter 38 im akustooptischen Modulator 30, so tritt das gesamte einfallende Strahlungsfeld 40 in Form des in diesem Fall nur den durch Reflexion entstandenen Ast 40TZT umfassenden zweiten Strahlungsfeldes 48 in der Beugungsrichtung erster Ordnung 44 aus, da keinerlei Beugung auftritt.

In allen Zwischenzuständen der Beugungseffizienz zwischen 0% und 50% erfolgt eine Aufteilung der Intensität des einfallenden Strahlungsfeldes 40 auf die unterschiedlichen Äste und somit auf das rücklaufende erste Strahlungsfeld 46 und das zweite Strahlungsfeld 48. Eine analoge Aufteilung in unterschiedliche Äste ist auch bei Beugungseffizienz zwischen 100% und 50% erhältlich.

Das rücklaufende erste Strahlungsfeld 46 durchsetzt nun, wie in Fig. 8 dargestellt, das polarisationsbeeinflussende Element 22 erneut und trifft auf den Polarisator 20.

Vorzugsweise ist das phasenbeeinflussende Element 22 so ausgebildet, daß es ein dieses durchsetzendes Strahlungsfeld bei zweimaligem Hindurchtreten jeweils in entgegengesetzten Richtungen um insgesamt 90° dreht, so daß die Polarisationsrichtung 18 des Eintrittsstrahlungsfeldes 12 beim zweimaligen Hindurchtreten durch das phasenbeeinflussende Element 22 um 90° gedreht ist und das rücklaufende erste Strahlungsfeld 46 eine Polarisationsrichtung 58 aufweist, welche senkrecht zur Polarisationsrichtung 18 verläuft. Trifft dieses erste Austrittsstrahlungsfeld 14 auf den Polarisator 20, so wird es von diesem reflektiert, da es durch diesen nicht hindurchtreten kann. Somit erfolgt am Polarisator 20 eine Trennung zwischen dem Eintrittsstrahlungsfeld 12, das mit der Polarisationsrichtung 18 durch diesen hindurchtritt, und dem ersten Austrittsstrahlungsfeldes 14, das mit der senkrecht dazu verlaufenden Polarisationsrichtung 58 von diesem reflektiert wird.

Außerdem wird aus dem zweiten Strahlungsfeld 48, das in dem Winkel α der Beugung erster Ordnung zu dem ersten Strahlungsfeld 46 aus dem akustooptischen Modulator 30 austritt das zweite Austrittsstrahlungsfeld 16 gebildet, welches durch einen Spiegel 49 beispielsweise so reflektiert wird, daß es ungefähr parallel zum ersten Austrittsstrahlungsfeld 14 verläuft.

Damit besteht bei der erfindungsgemäßen Modulatoreinheit 10 gemäß dem fünften Ausführungsbeispiel die Möglichkeit, je nach Betrieb des akustooptischen Modulators 30 das Eintrittsstrahlungsfeld 12 in das erste Austrittsstrahlungsfeld 14 oder das zweite Austrittsstrahlungsfeld 16 oder teilweise in beide einzukoppeln.

Im übrigen wird auf die Erläuterungen zum ersten Ausführungsbeispiel Bezug genommen.

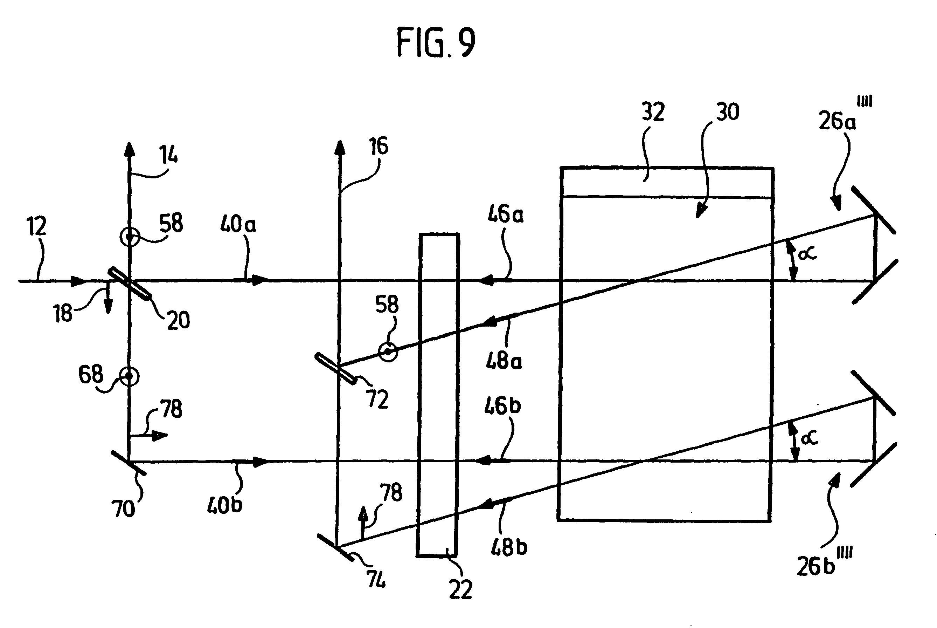

Bei einer ersten Variante des fünften Ausführungsbeispiels, dargestellt in Fig. 9, wird letztlich eine Verdoppelung der Vorgehensweise gemäß dem ersten, in Fig. 7 und 8 dargestellten Ausführungsbeispiel vorgenommen, so daß auch unpolarisiertes Licht im Eintrittsstrahlungsfeld 12 vollständig entweder in das erste Austrittsstrahlungsfeld 14 oder das zweite Austrittsstrahlungsfeld 16 eingekoppelt werden kann.

Hierzu wird vom Polarisator 20 das senkrecht zur Polarisationsrichtung 18 mit einer Polarisationsrichtung 68 polarisierte Licht auf einem Reflektor 70 reflektiert, welcher dieses dann in Form eines einfallenden Strahlungsfeldes 40 in Richtung des akustooptischen Modulators 30 reflektiert.

Somit breiten sich zwei einfallende Strahlungsfelder 40a und 40b in Richtung des akustooptischen Modulators 30 aus, wobei das einfallende Strahlungsfeld 40a Licht der Polarisationsrichtung 18 aufweist, während das einfallende Strahlungsfeld 40b Licht der Polarisationsrichtung 68 aufweist.

Beide einfallenden Strahlungsfelder 40a und 40b breiten sich parallel zueinander, jedoch im Abstand voneinander aus und durchsetzen auf ihrem Weg zum akustooptischen Modulator 30 das polarisationsbeeinflussende Element 22. Dem akustooptischen Modulator 30 sind nun zwei Strahlungsrückführungssysteme 26a"" und 26b"" zugeordnet, wobei das Strahlungsrückführungssystem 26a"" die aus dem einfallenden Strahlungsfeld 40a gebildeten Äste zurückführt, während das Strahlungsrückführungssystem 26b"" auf die vom einfallenden Strahlungsfeld 40b gebildeten Äste einwirkt, so daß jeweils aus dem akustooptischen Modulator 30 ein erstes Strahlungsfeld 46a und ein erstes Strahlungsfeld 46b austreten, wobei diese in Richtung des jeweiligen einfallenden Strahlungsfeldes 40a bzw. 40b zurücklaufen sowie ein zweites Strahlungsfeld 48a und 48b, die im Beugungswinkel erster Ordnung α zu dem jeweiligen ersten Strahlungsfeld 46a bzw. 46b verlaufen.

Die ersten Strahlungsfelder 46a bzw. 46b treten nun jeweils erneut durch das polarisationsbeeinflussende Element 22 hindurch, mit dem Effekt, daß eine Polarisationsdrehung bei insgesamt zweimaligem Durchgang durch das polarisationsbeeinflussende Element 22 um 90° erfolgt, so daß das erste Strahlungsfeld 46a vom Polarisator 20 aufgrund der um 90° gegenüber der Polarisationsrichtung gedrehten Polarisationsrichtung 58 vom Polarisator 20 reflektiert wird. Ferner wird auch die Polarisationsrichtung des ersten Strahlungsfeldes 46b um 90° gedreht, so daß dieses die Polarisationsrichtung 78 aufweist, die senkrecht auf der Polarisationsrichtung 68 steht und somit das erste Strahlungsfeld 46b nach Reflexion durch den Reflektor 70 durch den Polarisator 20 hindurchtritt und sich mit dem ersten Strahlungsfeld 46a überlagert und dabei das erste Austrittsstrahlungsfeld 14 bildet.

In gleicher Weise treten die zweiten Strahlungsfelder 48a, 48b erneut durch das polarisationsbeeinflussende Element 22 hindurch, wobei beide jeweils insgesamt bei zweimaligem Durchtritt durch das polarisationsbeeinflussende Element 22 um 90° gedreht werden.

Dies führt dazu, daß das zweite Strahlungsfeld 48a ebenfalls die Polarisationsrichtung 58 aufweist und sich durch einen parallel zur Polarisationsrichtung 58 ausgerichteten Polarisator 72 reflektieren läßt. Das zweite Strahlungsfeld 48b hat hingegen nach zweimaligem Hindurchtreten durch das polarisationsbeeinflussende Element 22 die Polarisationsrichtung 78, so daß nach einem Reflektieren an einem Reflektor 74 in Richtung des Polarisators 72 das zweite Strahlungsfeld 48b durch den Polarisator 72 hindurchtritt und sich somit insgesamt die zweiten Strahlungsfelder 48a und 48b zu dem zweiten Austrittsstrahlungsfeld 16 addieren.

Somit ist bei der ersten Variante des fünften Ausführungsbeispiels die Möglichkeit geschaffen, unpolarisierte Strahlung als Eintrittsstrahlungsfeld 12 in das erste und/oder zweite Austrittsstrahlungsfeld 14, 16 einzukoppeln.

Im übrigen wird auf die Erläuterungen zum ersten Ausführungsbeispiel Bezug genommen.

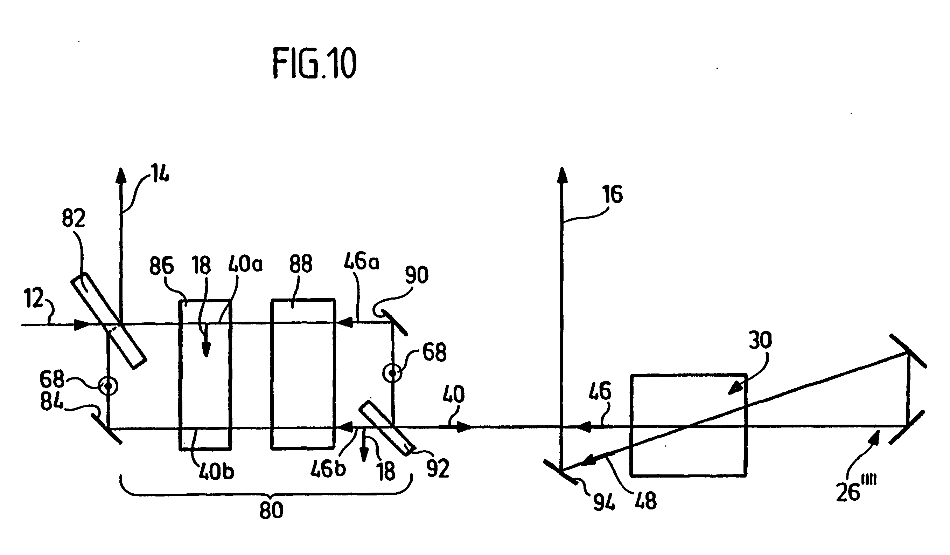

Bei einer zweiten Variante des fünften Ausführungsbeispiels, dargestellt in Fig. 10 ist der Aufbau entsprechend dem ersten Ausführungsbeispiel gemäß Fig. 7 und 8 gewählt.

Im Gegensatz zum fünften Ausführungsbeispiel werden beide Polarisationsrichtungen des Eintrittsstrahlungsfeldes 12 ausgenützt, so daß das einfallende Strahlungsfeld 40 ebenfalls beide Polarisationsrichtungen aufweist.

Das sich entgegengesetzt zum einfallenden Strahlungsfeld 40 ausbreitende erste Strahlungsfeld 46 wird vom einfallenden Strahlungsfeld 40 durch eine als Ganzes mit 80 bezeichnete optische Diode abgetrennt.

Diese optische Diode umfaßt beispielsweise einerseits einen dem Polarisator 20 entsprechenden Polarisator 82, auf welchen das Eintrittsstrahlungsfeld 12 auftrifft und welches ein einfallendes Strahlungsfeld 40a und ein einfallende Strahlungsfeld 40b ähnlich dem Polarisator 20 bei der ersten Variante erzeugt. Dabei hat das einfallende Strahlungsfeld 40b die Polarisationsrichtung 68, die senkrecht zur Polarisationsrichtung 18 des einfallenden Strahlungsfeldes 40a verläuft.

Ferner wird das einfallende Strahlungsfeld 40b von einem Reflektor 84 reflektiert und somit parallel zum Strahlungsfeld 40a durch ein erstes polarisationsbeeinflussendes Element 86 geführt, welches einen 45° Rotator darstellt und ein zweites polarisationsbeeinflussendes Element 88, welches einen 45° Faraday Rotator darstellt. Anschließend wird das einfallende Strahlungsfeld 40a durch einen Reflektor 90 zu einem Polarisator 92 reflektiert. Durch die beiden polarisationsbeeinflussenden Elemente 86 und 88 hat die Polarisationsrichtung 18 eine Drehung um 90° erfahren und entspricht somit der Polarisationsrichtung 68, während die Polarisationsrichtung 68 durch die beiden polarisationsbeeinflussenden Elemente ebenfalls um 90° gedreht wurde und somit der Polarisationsrichtung 18 entspricht. Ist nun der Polarisator 92, auf den die einfallenden Strahlungsfelder40a und 40b mit um 90° gedrehten Polarisationsrichtungen auftreffen parallel zur Polarisationsrichtung 68 ausgerichtet, so reflektiert der Polarisator 92 das einfallende Strahlungsfeld 40a und läßt das einfallende Strahlungsfeld 40b ungehindert hindurchtreten, so daß sich beide Strahlungsfelder 40a und 40b wiederum zum einfallenden, unpolarisierten Strahlungsfeld 40 addieren, das nun auf den akustooptischen Modulator 30 auftrifft und in im Zusammenhang mit der ersten Ausführungsform beschriebener Art und Weise in das erste Strahlungsfeld 46 und/oder das zweite Strahlungsfeld 48 je nach Modulationsgrad des akustooptischen Modulators 30 aufgeteilt wird.

Das entgegengesetzt zum einfallenden Strahlungsfeld 40 zurücklaufende erste Strahlungsfeld 46 tritt nun erneut in die optische Diode 80 ein und weist beide Polarisationsrichtungen auf. Durch den Polarisator 92 tritt derjenige Anteil des entsprechend der Polarisationsrichtung 18 polarisierten Strahlungsfeldes hindurch und der entsprechend des Polarisationsrichtung 68 polarisierte Strahlungsfeld wird von dem Polarisator 92 reflektiert, so daß wiederum eine Aufteilung des ersten Strahlungsfeldes 40 in die Strahlungsfelder 46a und 46b erfolgt.

Da nun das eine der polarisationsbeeinflussenden Elemente 86 und 88, beispielsweise das Element 88, ein Faraday-Rotator ist, dreht dieser die Polarisationsrichtung unabhängig von der Durchstrahlrichtung, während das andere polarisationsbeeinflussende Element, beispielsweise das polarisationsbeeinflussende Element 86, ein 45° Rotator ist, der abhängig von der Durchstrahlrichtung die Polarisationsrichtung ändert. Damit führt eine Umkehrung der Durchstrahlrichtung dazu, daß die ersten Strahlungsfelder 46a und 46b in Summe nach Durchtritt durch beide polarisationsbeeinflussenden Elemente 86 und 88 keine Polarisationsdrehung erfahren und somit das erste Strahlungsfeld 46b mit der Polarisationsrichtung 18 vom Reflektor 84 reflektiert wird und durch den Polarisator 82 hindurchtritt, während das erste Strahlungsfeld 46a mit der Polarisationsrichtung 68 vom Reflektor 90 reflektiert wird und vom Polarisator 82 ebenfalls reflektiert wird und beiden wiederum gemeinsam das erste Austrittsstrahlungsfeld 14 bilden, welches sich quer zum Eintrittsstrahlungsfeld 12 von dem Polarisator 82 weg ausbreitet.

Das zweite Austrittsstrahlungsfeld 16 wird in einfacher Weise durch Reflexion des zweiten, aus dem akustooptischen Modulator 30 austretenden Strahlungsfeldes 48 an einem Reflektor 94 gebildet.

Im übrigen wird auf die Erläuterungen zum ersten Ausführungsbeispiel Bezug genommen.

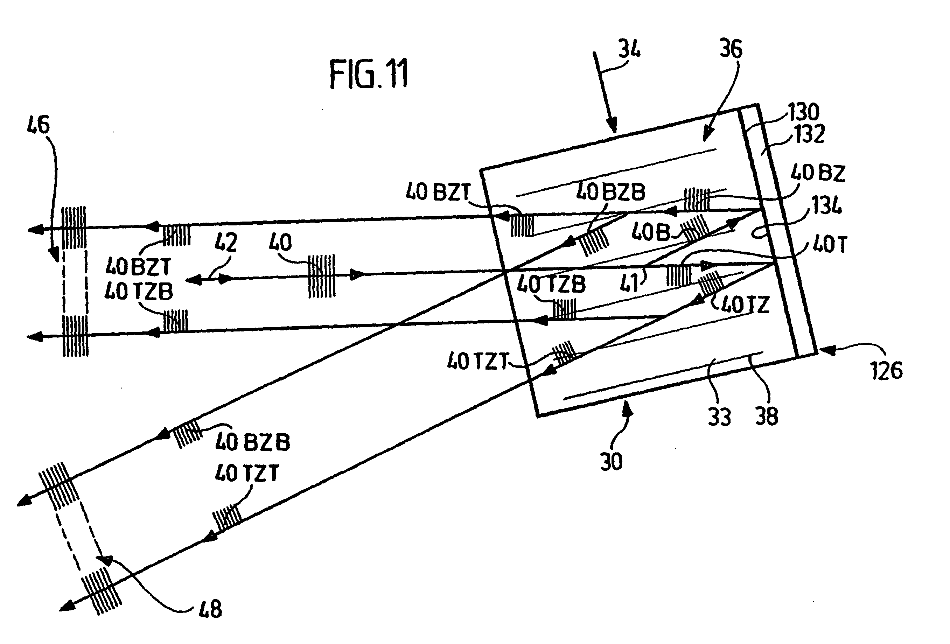

Bei einem sechsten Ausführungsbeispiel einer erfindungsgemäßen Modulationseinrichtung, ausschnittsweise dargestellt in Fig. 11 ist ein akustooptischer Modulator 30 vorgesehen, welcher in gleicher Weise ausgebildet ist und arbeitet wie beim zweiten bis fünften Ausführungsbeispiel.

Im Gegensatz zum fünften Ausführungsbeispiel ist das Strahlungsrückführungssystem 126 im einfachsten Fall als Reflektor ausgebildet, welcher durch eine auf einer für das einfallende Strahlungsfeld 40 austrittsseitigen Seitenfläche 130 des akustooptischen Modulators 30 angeordnete reflektierende Schicht 132 gebildet ist und eine Reflektorfläche 134 aufweist, die unmittelbar auf der Seitenfläche 130 des akustooptischen Modulators 30 aufliegt und damit im wesentlichen mit dieser zusammenfällt.

Wie in Fig. 11 dargestellt, erfolgt innerhalb des akustooptischen Modulators 30 ebenfalls eine Aufteilung des einfallenden Strahlungsfeldes 40 in einen transmittierten Ast 40T und einen gebeugten Ast 40B. Die Reflexion des transmittierten Astes 40T an der Reflektorfläche 134 führt zu dem zurückgeführten transmittierten Ast 40TZ, der allerdings in diesem Fall sich nicht mehr in dem akustooptischen Modulator 30 so ausbreitet, daß dessen Strahlachse mit der des gebeugten Astes 40B zusammenfällt, sondern die Strahlachse des Astes 40TZ verläuft nur noch parallel zu der des gebeugten Astes 40B.

In gleicher Weise erfolgt eine Reflexion des gebeugten Astes 40B unter Ausbildung eines zurückgeführten gebeugten Astes 40BZ, der sich ebenfalls nicht mehr in dem akustooptischen Modulator 30 mit einer Strahlachse ausbreitet, die mit der Strahlachse des transmittierten Astes 40T zusammenfällt, sondern nur noch parallel zur Strahlachse des transmittierten Astes 40T verläuft.

In gleicher Weise wie den vorangegangenen Ausführungsbeispielen erfahren die zurückgeführten Äste 40TZ und 40BZ bei der ersten akustooptischen Modulation wiederum eine Aufteilung in zwei Äste und zwar in einen gebeugten und einen transmittierten Ast. Aus dem Ast 40TZ entsteht bei der zweiten akustooptischen Modulation der Ast 40TZB, der sich parallel zur Strahlachse 42 des einfallenden Strahlungsfeldes 40, allerdings entgegengesetzt zu diesem ausbreitet und aus dem akustooptischen Modulator 30 austritt sowie der Ast 40TZT, der sich parallel zur Strahlachse 44 des gebeugten Astes 40B ausbreitet und in dieser Richtung aus dem akustooptischen Modulator 30 austritt.

In gleicher Weise erfolgt bei der zweiten akustooptischen Modulation eine Aufteilung des zurückgeführten gebeugten Astes 40BZ in einen sich parallel zur Strahlachse des gebeugten Astes 40B ausbreitenden Ast 40BZB und einen Ast 40BZT, der sich parallel zur Strahlachse 42, jedoch entgegengesetzt zu dem einfallenden Strahlungsfeld 40 ausbreitet. Die beiden Äste 40BZT und 40TZB ergeben das rücklaufende erste Strahlungsfeld 46 und die beiden Äste 40TZT und 40BZB das ausgekoppelte zweite Strahlungsfeld 48 in gleicher Weise wie beim fünften Ausführungsbeispiel, wobei allerdings die Äste 40TZT und 40BZB sowie 40BZT und 40TZB einen geringfügigen Versatz quer zu ihren Strahlachsen zueinander aufweisen, welcher insoweit unerheblich ist, als die Äste nach wie vor miteinander durch Interferenz wechselwirken können, so daß ebenfalls bei einer Beugungseffizienz von 50% eine vollständige Reflexion des einfallenden Strahlungsfeldes 40 in das sich entgegensetzt zu diesem ausbreitende rückreflektierte Strahlungsfeld 46 erfolgt.

Auch beim sechsten Ausführungsbeispiel erfolgt dann, wenn die Modulationsebenen ME1 und ME2 und auch der erste und zweite Verzweigungsbereich 41a, 41b im wesentlichen zusammenfallen, eine Trennung des Eintrittsstrahlungsfeldes 12 von dem ersten Austrittsstrahlungsfeld 14 in gleicher Weise wie in Fig. 7 oder 8 im Zusammenhang mit dem fünften Ausführungsbeispiel beschrieben, so daß auf die Ausführungen hierzu vollinhaltlich Bezug genommen wird.

Es ist aber auch möglich, wie beim dritten Ausführungsbeispiel gemäß Fig. 4 und 5 beschrieben, mit sich schneidende Modulationsebenen ME1 und ME2 zu arbeiten, wobei die Schnittlinie S dann vorzugsweise in der Reflektorfläche 134 liegt.

Im übrigen wird auf die Erläuterungen zum ersten Ausführungsbeispiel Bezug genommen.

Bei einem siebten Ausführungsbeispiel einer erfindungsgemäßen Modulationseinrichtung, welches der Einfachheit halber auf dem ersten Ausführungsbeispiel basiert, ist nicht nur das Eintrittsstrahlungsfeld 12 vorgesehen, sondern ein in der ersten Modulationsebene ME1 mit einer Eintrittsrichtung 24' im Beugungswinkel erster Ordnung einfallendes weiteres Eintrittsstrahlungsfeld 12', welches ein einfallendes Strahlungsfeld 40' bildet, das sich mit seiner Strahlachse 42' ebenfalls im Beugungswinkel erster Ordnung zur Strahlachse 42 in der ersten Modulationsebene ME1 ausbreitet und somit die Strahlachse 42 im ersten Verzweigungsbereich 41a schneidet.

Somit entsteht neben den bereits im Zusammenhang mit dem ersten Ausführungsbeispiel erläuterten Ästen 40B und 40T noch zusätzlich durch Beugung des einfallenden Strahlungsfeldes 40' ein transmittierter Ast 40'T und ein gebeugter Ast 40'B, wobei der transmittierte Ast 40'T sich mit seiner Strahlachse so ausbreitet, daß diese ungefähr parallel, vorzugsweise zusammenfallend mit der Strahlachse 44 des gebeugten Astes 40B verläuft, während sich der gebeugte Ast 40'B so ausbreitet, daß dessen Strahlachse 44' ungefähr parallel, vorzugsweise zusammenfallend mit der Strahlachse 42 verläuft.

Durch Reflexion an den Spiegelflächen 52 und 56 erfolgt die Bildung der Äste 40'TU und 40'BU, die in der zweiten Modulationsebene ME2 ebenfalls wieder durch Beugung einerseits die Äste 40'BUT und 40'TUB erzeugen, welche das erste Strahlungsfeld 46' ergeben, das sich ungefähr mit derselben Ausrichtung der Strahlachse ausbreitet, wie das zweite Strahlungsfeld 48.

Andererseits werden die Äste 40'TUT und 40'BUB erzeugt, welche das zweite Strahlungsfeld 48' ergeben, das sich im wesentlichen mit einer Strahlachse ausbreitet, die mit der des ersten Strahlungsfeldes 46 zusammenfällt.

Hinsichtlich der Einzelheiten kann vollinhaltlich auf die Erläuterungen zum ersten Ausführungsbeispiel im Zusammenhang mit dem einfallenden Strahlungsfeld 40 verwiesen werden, wobei allerdings bei der ersten akustooptischen Modulation eine Beugung in Vorwärtsrichtung erfolgt, so daß der gebeugte Ast 40'B die Frequenz F₀+F aufweist und auch bei der zweiten akustooptischen Modulation zur Erzeugung des Astes 40'TUB eine Beugung in Vorwärtsrichtung auftritt, so daß beide Äste 40BUT und 40'TUB die Frequenz F₀+F aufweisen und somit eine einheitliche Frequenzverschiebung jedoch um die Frequenz +F und nicht, wie beim ersten Ausführungsbeispiel um die Frequenz -F, aufweisen.

Bei dem Ast 40'BUB hebt sich wiederum die Frequenzverschiebung dadurch auf, daß einmal eine Beugung in Vorwärtsrichtung und das zweite mal eine Beugung in Rückwärtsrichtung erfolgt, analog den Betrachtungen beim ersten Ausführungsbeispiel.

Bei dem siebten Ausführungsbeispiel besteht nun die Möglichkeit, die erfindungsgemäße Modulationseinrichtung entweder für das Eintrittsstrahlungsfeld 12 oder das Eintrittsstrahlungsfeld 12' einzusetzen und entsprechend der Ansteuerung der akustooptischen Modulatoren 30a und 30b entweder die Strahlungsfelder 46 und 48 oder die Strahlungsfelder 46' und 48' zu erzeugen, wobei auch ein Umschalten zwischen den Strahlungsfeldern 46und 48 oder 46' und 48' in der bereits im Zusammenhang mit dem ersten Ausführungsbeispiel beschriebenen Art und Weise möglich ist.

Darüber hinaus besteht aber bei dem siebten Ausführungsbeispiel der erfindungsgemäßen Modulationseinrichtung auch die Möglichkeit, mit beiden Eintrittsstrahlungsfeldern 12 und 12' zu arbeiten und nicht nur zwischen den Strahlungsfeldern 46 und 48 bzw. 46' und 48' umzuschalten, sondern auch dem Strahlungsfeld 48 das Strahlungsfeld 46' zu überlagern oder dem Strahlungsfeld 46 das Strahlungsfeld 48'.

Damit kann beispielsweise die Laserstrahlung zweier Laser überlagert werden, je nachdem mit welcher Beugungseffizienz die akustooptischen Modulatoren 30a und 30b betrieben werden.

Dieselben Betriebsmodalitäten, die im Zusammenhang mit dem siebten Ausführungsbeispiel basierend auf den Ausführungen zum ersten Ausführungsbeispiel erläutert wurden, lassen sich auch mit den übrigen vorstehend beschriebenen Ausführungsbeispielen der erfindungsgemäßen Modulationseinrichtung realisieren, wobei die vorstehenden Erläuterungen zum siebten Ausführungsbeispiel analog für die übrigen Ausführungsbeispiele anwendbar sind.

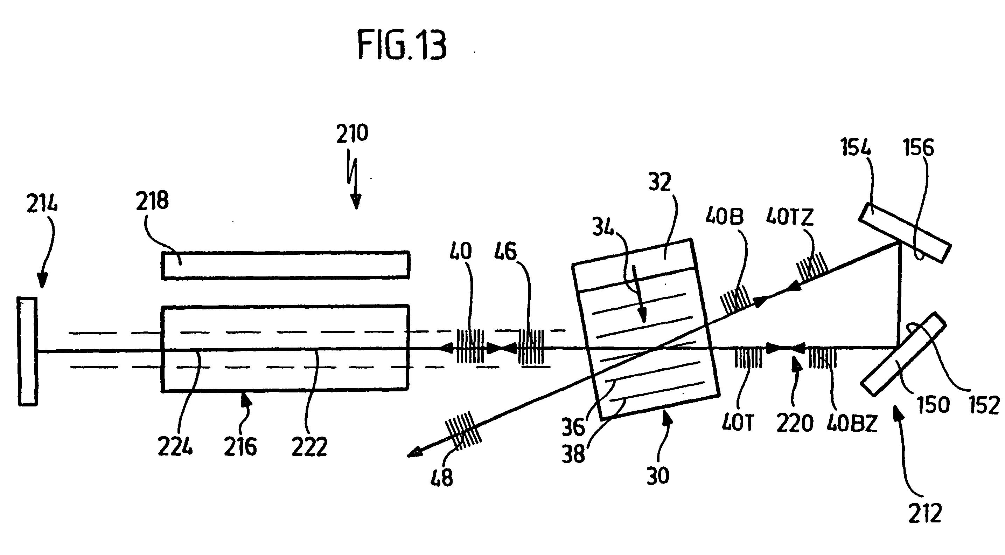

Ein erstes Ausführungsbeispiel eines erfindungsgemäßen Laserverstärkersystems, dargestellt in Fig. 13, umfaßt einen als Resonator 210 ausgebildeten rückgekoppelten Verstärker mit einem ersten Verstärkerstrahlungsrückführsystem 212 und einem zweiten Verstärkerstrahlungsrückführsystem 214. Ferner ist in dem Resonator 210 ein laseraktives Medium 216 vorgesehen, welches beispielsweise durch eine Pumplichtquelle 218 gepumpt wird.

Als Resonator im Sinne der vorliegenden Erfindung wird ein optisches System mit Rückkopplung der Strahlungsfelder angesehen, wobei auch eine mit der Rückkopplung verbundene Frequenzverschiebung des Strahlungsfeldes zugelassen wird. Der Begriff Resonator ist also nicht auf Resonanzbedingungen, die aus der frequenzselektiven Vielstrahlinterferenz resultieren, wie dies von Fabry-Perrot-Resonatoren oder Ringresonatoren bekannt ist, eingeschränkt.

Unter diese Resonatordefinition fällt beispielsweise auch der Betrieb in Anlehnung eines regenerativen Verstärkers, indem ein von extern eingekoppeltes Strahlungsfeld oder auch die interne spontane Emission in einer begrenzten Anzahl von Durchlaufen verstärkt wird, wobei die Anzahl der Umläufe entweder durch ein Schalten der Rückkopplung oder aber durch die o.a. Frequenzverschiebung in Verbindung mit der Frequenzabhängigkeit der Verstärkung oder der Verluste eingeschränkt wird.

Zwischen den Verstärkerstrahlungsrückführungssystemen 212 und 214 erstreckt sich ein optisch aktiver Volumenbereich 220, welcher auch das laseraktive Medium 216 durchsetzt und innerhalb von welchem ein Verstärkerstrahlungsfeld 222 erzeugbar ist, welches beispielsweise, wie in Fig. 13 dargestellt, im Bereich nahe einer optischen Achse 224 des Resonators 210 erzeugt wird.

Ferner ist in dem Resonator 210 noch ein akustooptischer Modulator 30 vorgesehen.

Der akustooptische Modulator 30 und das Verstärkerstrahlungsrückführungssystem 212 bilden eine Modulationseinrichtung, welche hinsichtlich des Zusammenwirkens des akustooptischen Modulators 30 und des Verstärkerstrahlungsrückführungssystems dem vorstehend beschriebenen fünften Ausführungsbeispiel der erfindungsgemäßen Modulationseinrichtung entspricht, allerdings ohne daß die beim fünften Ausführungsbeispiel eingesetzten Polarisatoren erforderlich sind.

Ein vom zweiten Verstärkerstrahlungsrückführsystem 214, welches im einfachsten Fall einen Reflektor mit möglichst hohem Reflexionsgrad umfaßt, kommendes und sich in einer Richtung 242 ungefähr parallel zur optischen Achse 224 zum ersten Verstärkerstrahlungsrückführungssystem 212 hin ausbreitendes und in den akustooptischen Modulator 30 einfallendes Verstärkerstrahlungsfeld 240 entspricht dem vorstehend beschriebenen einfallenden Strahlungsfeld 40 und wird nach Eintritt in den akustooptischen Modulator 30 in einen sich längs der Strahlachse 42 ausbreitenden transmittierten Ast 40T sowie einen gegenüber der Strahlachse 42 um einen Beugungswinkel α gebeugten und sich in einer Beugungsrichtung erster Ordnung mit der Strahlachse 44 ausbreitenden, gebeugten Ast 40B aufgeteilt, die sich beide innerhalb des akustooptischen Modulators 30 weiter zum ersten Verstärkerstrahlungsrückführsystem 212 hin ausbreiten (Fig. 13), welches hinsichtlich Aufbau und Funktion mit Strahlungsführungssystem 26"" identisch ist.

Hinsichtlich des Zustandekommens des ersten Strahlungsfeldes 46 und des zweiten Strahlungsfeldes 48 kann somit vollinhaltlich auf die Ausführungen zum fünften und ersten Ausführungsbeispiel der Modulationseinrichtung Bezug genommen werden.

Betrachtet man ferner noch die Phasen der Strahlungsfelder, so ergibt sich, daß bei einer Beugungseffizienz von 50% zwischen dem jeweils transmittierten Ast 40T und dem gebeugten Ast 40B erster Ordnung Verhältnisse analog denen eines antiresonanten Ringinterferometers, welches in dem Artikel von E. Siegman in IEEE Journal of Quantum Elektronics, February 1973, Seite 247 bis 250 beschrieben ist, vorliegen, die dazu führen, daß die "Reflektivität" 100% betragen kann, das heißt, daß sich die das zweite Strahlungsfeld 48 bildenden Äste 40TZT und 40BZB durch destruktive Interferenz gegenseitig auslöschen können, während die das rücklaufende erste Strahlungsfeld 46 bildenden Äste 40BZT und 40TZB durch konstruktive Interferenz im wesentlichen die gesamte Intensität des einfallenden Strahlungsfeldes 40 umfassen können.

Existiert dagegen kein Gitter 38 im akustooptischen Modulator 30, so tritt das gesamte einfallende Strahlungsfeld 40 in Form des in diesem Fall nur den durch Reflexion entstandenen Ast 40TZT umfassenden zweiten Strahlungsfeldes 48 in der Beugungsrichtung erster Ordnung 44 aus, da keinerlei Beugung auftritt.

In allen Zwischenzuständen der Beugungseffizienz zwischen 0% und 50% erfolgt eine Aufteilung der Intensität des einfallenden Strahlungsfeldes 40 auf die unterschiedlichen Äste und somit auf das rücklaufende erste Strahlungsfeld 46 und das ausgekoppelte zweite Strahlungsfeld 48. Eine analoge Aufteilung in unterschiedliche Äste ist auch bei Beugungseffizienz zwischen 100% und 50% erhältlich.

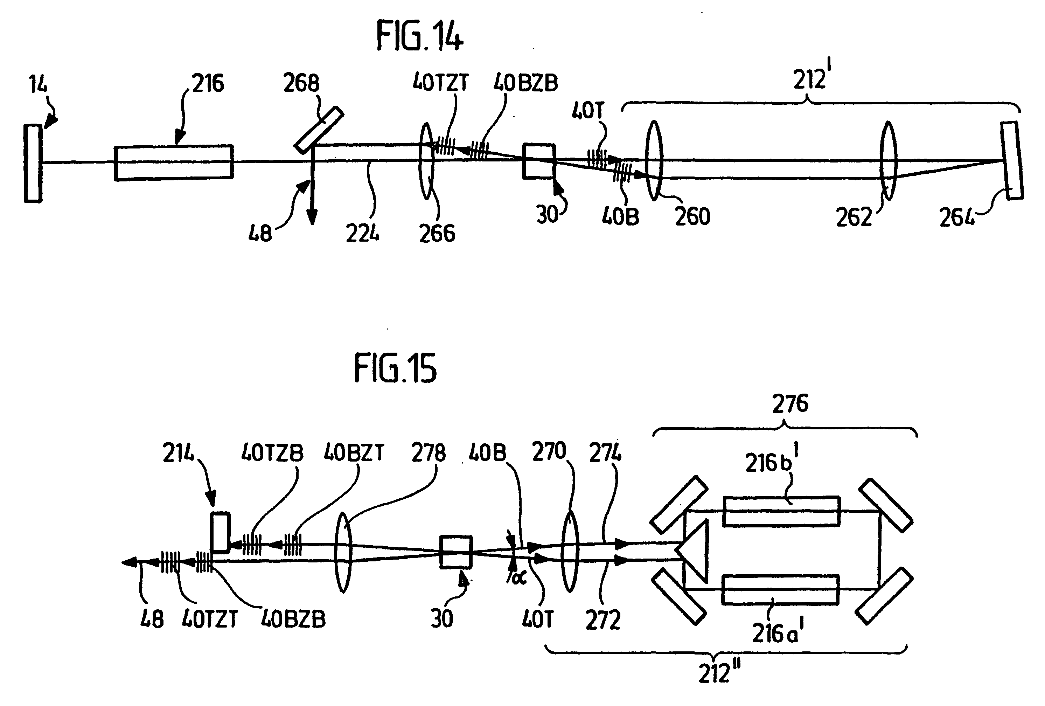

Bei einer ersten Variante des ersten Ausführungsbeispiels des Laserverstärkersystems, dargestellt in Fig. 14, ist das erste Verstärkerstrahlungsrückführungssystem 212' ähnlich dem Strahlungsrückführungssystem 26" des dritten Ausführungsbeispiels (Fig. 5) der erfindungsgemäßen Modulationseinrichtung aufgebaut und umfaßt anstelle von zwei Spiegeln zwei Linsen 260 und 262 sowie einen Reflexionsspiegel 264, wobei die Linsen 260 und 262 den transmittierten Ast 40T und den gebeugten Ast 40B so auf den Reflexionsspiegel 264 abbilden, daß durch Reflexion am Reflexionsspiegel 264 und Abbildung der Linsen 262 und 260 der zurückgeführte gebeugte Ast 40BZ und der zurückgeführte transmittierte Ast 40TZ in gleicher Ausrichtung wieder in den akustooptischen Modulator 30 eintreten wie beim ersten Ausführungsbeispiel des Laserverstärkersystems.

Zum Ausleiten des ausgekoppelten Strahlungsfeldes 48, umfassend die Äste 40TZT und 40BZB, sind noch eine weitere Linse 266 und ein Reflexionsspiegel 268 vorgesehen, welcher letztlich für einen Verlauf des ausgekoppeltes Strahlungsfeld 48 quer zur optischen Achse 224 sorgt.

Die übrigen Komponenten der ersten Variante des ersten Ausführungsbeispiels, dargestellt in Fig. 14 sind mit denselben Bezugszeichen versehen, so daß hinsichtlich der Beschreibung derselben vollinhaltlich auf die Ausführungen zum ersten Ausführungsbeispiel des Laserverstärkersystems Bezug genommen wird.

Bei einer zweiten Variante des ersten Ausführungsbeispiels des Laserverstärkersystems, dargestellt in Fig. 15, umfaßt das erste Strahlungsrückführsystem 212", eine Linse 270, welche den transmittierten Ast 40T und den gebeugten Ast 40B, welche im Winkel α zueinander aus dem akustooptischen Modulator 30 austreten beispielsweise in zwei parallel zueinander verlaufende Äste 272 und 274 abbildet, welche dann durch ein insgesamt mit 276 bezeichnetes Spiegelsystem wechselseitig ineinander übergeführt werden, wobei innerhalb des optischen Weges des Spiegelsystems das laseraktive Medium 216a' und 216b' angeordnet ist.

Dieses Ausführungsbeispiel zeigt, daß die Anordnung des laseraktiven Mediums an beliebiger Stelle im Verstärkerstrahlungsfeld erfolgen kann.

Das zweite Strahlungsrückführsystem 214 ist als einfacher Reflektor ausgebildet, wobei diesem noch eine Linse 278 zugeordnet ist, die die Äste 40TZB und 40BZT mit ungefähr parallelem Verlauf zu den Ästen 40TZT und 40BZB auf das Rückführungssystem 214 auftreffen läßt, während die Äste 40TZT und 40BZB als ausgekoppeltes Strahlungsfeld 48 austreten.

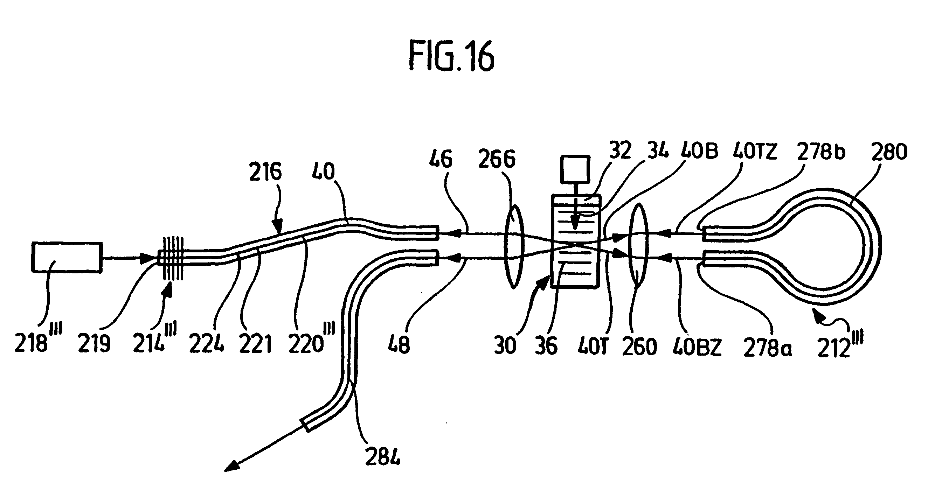

Bei einer dritten Variante des ersten Ausführungsbeispiels des Laserverstärkersystems, dargestellt in Fig. 16, ist das laseraktive Medium 220"' durch die Dotierung einer optischen Faser221 gebildet, welche beispielsweise durch eine an einem Ende angekoppelte Pumplaserstrahlung einer Pumplichtquelle 218"' gepumpt wird und zur Ausbildung des Strahlungsfeldes 40 führt, welches sich längs der optischen Achse 224 der Faser 221 ausbreitet. Dabei ist das zweite Strahlungsrückführsystem 214"' beispielsweise als Bragg-Reflektionsgitter ausgebildet, welches nahe dem Ende 219 angeordnet ist und die Laserstrahlung zum Pumpen des laseraktiven Mediums 220"' hindurchtreten läßt.

Das Strahlungsfeld 40 wird dabei über eine Linse entsprechend der Linse 266 der ersten Variante in den akustooptischen Modulator 30 eingekoppelt und in diesem in einen sich in Austrittsrichtung ausbreitenden transmittierten Ast 40T und einen in erster Ordnung gebeugten Ast 40B aufgeteilt, die aus dem akustooptischen Modulator 30 austreten und durch eine der Linse 260 entsprechende Linse in zwei Enden 278a und 278b eines Lichtleiters 280 eingekoppelt werden, welcher den transmittierten Ast 40T und den gebeugten Ast 40B wiederum in Richtung des akustooptischen Modulators 30 zurückführt, und zwar so, daß der zurückgeführte transmittierte Ast 40TZ parallel zum gebeugten Ast 40B in den akustooptischen Modulator 30 eintritt und der zurückgeführte gebeugte Ast 40BZ parallel, vorzugsweise deckungsgleich zum transmittierten Ast 40T in den akustooptischen Modulator 30 eintritt, so daß, wie in Zusammenhang mit den voranstehenden Varianten erläutert, aus dem akustooptischen Modulator 30 insgesamt das rücklaufende erste Strahlungsfeld 46 und das zweite Strahlungsfeld 48 austreten, wobei das zweite Strahlungsfeld 48 beispielsweise ebenfalls über einen Lichtleiter, vorzugsweise in Form einer Glasfaser 284, ausgekoppelt wird.

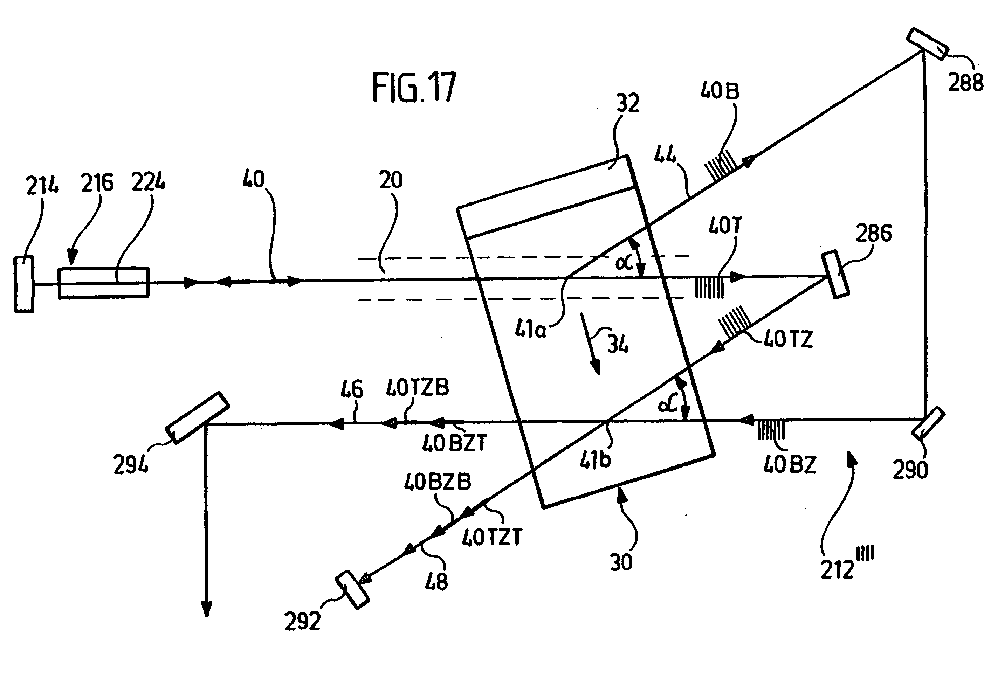

Eine vierte Variante des ersten Ausführungsbeispiels des Laserverstärkersystems, dargestellt in Fig. 17, ist vom grundsätzlichen Aufbau des rückgekoppelten Verstärkers her gesehen ähnlich dem ersten Ausführungsbeispiel des Laserverstärkersystems aufgebaut, wobei das laseraktive Medium 216 und das zweite Strahlungsrückführsystem 214 identisch aufgebaut und angeordnet sind.

Im Gegensatz zum ersten Ausführungsbeispiel ist jedoch bei der vierten Variante des ersten Ausführungsbeispiels das erste Strahlungsrückführsystem 212"" so ausgebildet, daß es den transmittierten Ast 40T des einfallenden Strahlungsfeldes 40 mittels eines ersten Reflektors 286 so in den akustooptischen Modulator 30 zurückführt, daß dieses zwar parallel zum gebeugten Ast 40B, jedoch in räumlichem Abstand von diesem und somit räumlich getrennt als zurückgeführter transmittierter Ast 40TZ in den akustooptischen Modulator 30 eintritt. Ferner wird durch zwei weitere Reflektoren 288 und 290 der gebeugte Ast 40B so umgelenkt, daß er als zurückgeführter gebeugter Ast 40BZ auf den zurückgeführten transmittierten Ast 40TZ im Beugungswinkel α zu verlaufend in den akustooptischen Modulator 30 eintritt, jedoch im Abstand und parallel zum transmittierten Ast 40T verläuft, so daß sich beide im zweiten Verzweigungsbereich 41b im akustooptischen Modulator 30 schneiden, welcher ebenfalls im Abstand von dem ersten Verzweigungsbereich 41a im akustooptischen Modulator 30 angeordnet ist, so daß das im akustooptischen Modulator 30 aus dem zurückgeführten transmittierten Ast 40TZ und dem zurückgeführten gebeugten Ast 40BZ gebildete rücklaufende erste Strahlungsfeld 46 parallel zum einfallenden Strahlungsfeld 40, jedoch ebenfalls im Abstand zu diesem versetzt und räumlich von diesem getrennt, aus dem akustooptischen Modulator 30 austritt und das zweite Strahlungsfeld 48 ebenfalls parallel zum gebeugten Ast 40B und somit zur Beugungsrichtung erster Ordnung 44 parallelversetzt aus dem akustooptischen Modulator 30 austritt.

Damit entspricht diese Variante hinsichtlich ihrer Funktion dem vierten Ausführungsbeispiel der erfindungsgemäßen Modulationseinrichtung, auf deren Erläuterung hiermit Bezug genommen wird.

Bei der vierten Variante ist ferner noch ein weiterer Reflektor 292 vorgesehen, welcher das zweite Strahlungsfeld 48, welches aus dem akustooptischen Modulator 30 austritt, in sich zurückreflektiert, so daß dieses über den Reflektor 286 sowie die Reflektoren 288 und 290 des ersten Verstärkerstrahlungsrückführungssystems 212"" in das laseraktive Medium 216 zurückkoppelbar ist.

Arbeitet nun der akustooptische Modulator mit einer Beugungseffizienz von im wesentlichen 0%, so erfolgt keine Beugung des einfallenden Strahlungsfeldes 40 und dieses wird lediglich durch den Reflektor 286 reflektiert, bildet den zurückgeführten transmittierten Ast 40TZ und dann das zweite Strahlungsfeld 48, welches lediglich den Ast 40TZT umfaßt. Dieses zweite Strahlungsfeld 48 wird durch den Reflektor 292 in sich zurückreflektiert, somit von dem Reflektor 286 ebenfalls wieder in entgegengesetzter Richtung zum einfallenden Strahlungsfeld 40 in das laseraktive Medium 216 zurückreflektiert, so daß bei einer Beugungseffizienz des akustooptischen Modulators 30 von im wesentlichen 0% ein in sich geschlossener Resonator mit dem ersten Strahlungsrückführsystem 214 als einem Endspiegel und dem Reflektor 292 als anderem Endspiegel vorliegt.

Ferner hat aufgrund der nicht auftretenden Beugung im ersten Strahlungsfeld 46 die Leistung 0.

Wird allerdings der akustooptische Modulator 30 mit einer Beugungseffizienz von im wesentlichen 50% betrieben, so entsteht aufgrund der Beugung und Transmission der zurückgeführten Äste 40TZ und 40BZ im akustooptischen Modulator 30 das erste Strahlungsfeld 46, welches im wesentlichen die gesamte Leistung des einfallenden Strahlungsfeldes 40 umfaßt, da sich die beiden Äste 40BZB und 40TZT konstruktiv überlagern, während das zweite Strahlungsfeld 48 aufgrund der Auslöschung der Äste 40BZB und 40TZT keine Intensität führt, wobei hierzu die Weglängendifferenz, die die jeweiligen Äste von der ersten akustooptischen Modulation bis zur Überlagerung zum ersten Strahlungsfeld und zum zweiten Strahlungsfeld aufweisen, angepaßt sein muß.

Da das erste Strahlungsfeld 46 parallelversetzt zum einfallenden Strahlungsfeld 40 und räumlich getrennt von diesem aus dem akustooptischen Modulator 30 austritt, läßt sich dieses mit einem zusätzlichen Auskoppelspiegel 294 in einfacher Weise auskoppeln und als ausgekoppeltes Strahlungsfeld einsetzen, wobei in diesem Fall das ausgekoppelte Strahlungsfeld eine Frequenzverschiebung von F₀ - F aufweist, wie bereits im Zusammenhang mit dem ersten Ausführungsbeispiel des Laserverstärkersystems und dem ersten Ausführungsbeispiel der Modulationseinrichtung erläutert.

Das heißt, daß bei der vierten Variante des ersten Ausführungsbeispiels das wiederum zum laseraktiven Medium 216 zurückgekoppelte Strahlungsfeld das zweite Strahlungsfeld 48 ist, welches die Frequenz F₀ aufweist und somit im Gegensatz zum ersten Ausführungsbeispiel eine volle Rückkopplung besteht, da die Frequenzen des einfallenden Strahlungsfeldes 40 und des zurückgekoppelten Strahlungsfeldes 48 identisch sind.

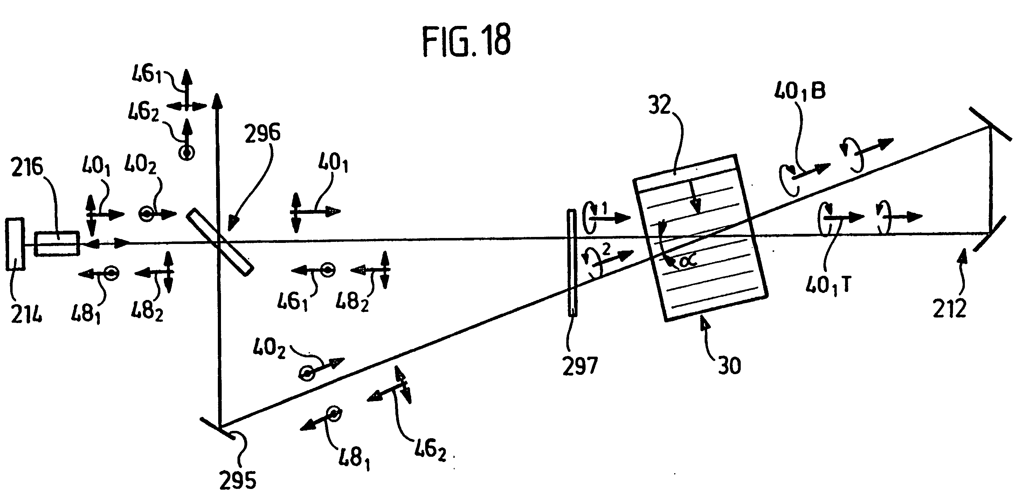

Bei einer fünften Variante des ersten Ausführungsbeispiels des Laserverstärkersystems, dargestellt in Fig. 18, ist ein Aufbau entsprechend dem ersten Ausführungsbeispiel gewählt, allerdings mit dem Unterschied, daß das aus dem akustooptischen Modulator 30 austretende zweite Strahlungsfeld 48 mittels eines Reflektors 295 zu einem strahlteilenden Polarisator 296 geführt ist, auf welchen auch das einfallende Strahlungsfeld 40 auftrifft.

Mit dieser fünften Variante des ersten Ausführungsbeispiels wird aufgezeigt, daß sich durch den Einsatz zusätzlicher polarisationsbeeinflussender Elemente, die Ausnutzung polarisationsbeeinflussender Effekte der eingesetzten Elemente oder aber eine Kombination polarisationsbeeinflussender Eigenschaften weitere vielfältige Anwendungsmöglichkeiten von Ausführungen des erfindungsgemäßen Laserverstärkersystemen ergeben.

Umfaßt das einfallende Strahlungsfeld 40 beispielsweise zwei senkrecht zueinander polarisierte Komponenten 40₁ und 40₂, so ist der strahlteilende Polarisator 296 beispielsweise so angeordnet, daß im wesentlichen die Komponente 40₁ möglichst nahezu vollständig durch diesen hindurchtritt und sich in Richtung des akustooptischen Modulators 30 ausbreitet, während die Komponente 40₂ im wesentlichen und möglichst nahezu vollständig durch diesen abgelenkt wird.

Die erste Komponente 40₁ des einfallenden Strahlungsfeldes 40 wird nun in gleicher Weise wie im Zusammenhang mit dem ersten Ausführungsbeispiel des Laserverstärkersystems für das einfallende Strahlungsfeld 40 erläutert, in eine erste Komponente des rücklaufenden ersten Strahlungsfeldes 46₁ sowie eine erste Komponente des zweiten Strahlungsfeldes 48₁ aufgeteilt, wobei die erste Komponente des zweiten Strahlungsfeldes 48₁ durch den Reflektor 295 zu dem strahlteilenden Polarisator 296 hin reflektiert wird.

Die zweite Komponente des einfallenden Strahlungsfeldes 40₂ wird durch den strahlteilenden Polarisator 296 nach Austreten aus dem laseraktiven Medium 216 auf den Reflektor 295 reflektiert und verläuft somit im wesentlichen deckungsgleich, jedoch in entgegengesetzter Richtung wie die erste Komponente des zweiten Strahlungsfeldes 48₁.

Diese zweite Komponente des einfallenden Strahlungsfeldes 40₂ tritt nun in den akustooptischen Modulator 30 in dem Beugungswinkel erster Ordnung α zur ersten Komponente des einfallenden Strahlungsfeldes 40₁ ein und erfährt, wie im Zusammenhang mit dem ersten Ausführungsbeispiel beschrieben, eine Aufteilung in eine zweite Komponente des zurücklaufenden ersten Strahlungsfeldes 46₂, welche sich in gleicher Weise wie die erste Komponente des zweiten Strahlungsfeldes 48₁ ausbreitet, und eine zweite Komponente des zweiten Strahlungsfeldes 48₂, welche sich in gleicher Richtung wie die erste Komponente des zurücklaufenden ersten Strahlungsfeldes 46₁ ausbreitet.

Befindet sich in dem Lichtweg, den die Strahlungsfelder auf dem Weg vom einfallenden Strahlungsfeld 40 nach Aufteilung in die Komponenten 40₁ und 40₂ am strahlteilenden Polarisator 296 und bevor das erste Strahlungsfeld mit den Komponenten 46₁ und 46₂ und das zweite Strahlungsfeld mit den Komponenten 48₁und 48₂ den strahlteilenden Polarisator 296 wieder erreichen, ein Element oder eine Kombination von Elementen, die eine Polarisationsdrehung der Komponenten 46₁und 48₁ relativ zur Komponente 40₁ sowie der Komponenten 46₂und 48₂ relativ zur Komponente 40₂ um ±90° bewirkt, so wird die Komponente 48₁ den strahlteilenden Polarisator 296 im wesentlichen vollständig durchlaufen und die Komponente 48₂ am strahlteilenden Polarisator 296 im wesentlichen vollständig abgelenkt, während die Komponente 46₂ den strahlteilenden Polarisator 296 im wesentlichen vollständig durchläuft und die Komponente 46₁ am strahlteilenden Polarisator 296 im wesentlichen vollständig abgelenkt wird, so daß die beiden Komponenten 48₁ und 48₂ des zweiten Strahlungsfeldes in nahezu entgegengesetzter Richtung zum einfallenden Strahlungsfeld 40 verläuft und so in das laseraktive Medium zurückgekoppelt wird.

Damit erfolgt insgesamt eine Rückkopplung der ersten Komponente des zweiten Strahlungsfeldes 48₁ und der zweiten Komponente des zweiten Strahlungsfeldes 48₂ in das laseraktive Medium, während die erste Komponente des zurücklaufenden ersten Strahlungsfeldes 46₁ und die zweite Komponente des zurücklaufenden ersten Strahlungsfeldes 46₂ ausgekoppelt werden.

Allerdings ist dies keine Rückkopplung eines identischen Strahlungsfeldes, da die erste Komponente des zweiten Strahlungsfeldes 48₁ eine Polarisation aufweist, die senkrecht zur ersten Komponente des einfallenden Strahlungsfeldes 40₁ steht, und die zweite Komponente des zweiten Strahlungsfeldes 48₂ eine Polarisation aufweist, die senkrecht zur zweiten Komponente des einfallenden Strahlungsfeldes 40₂ verläuft.

Bei der in Fig. 18 dargestellten fünften Variante des ersten Ausführungsbeispiels wird zwischen dem akustooptischen Modulator 30 einerseits und dem Polarisator 296 bzw. dem Reflektor 295 andererseits beispielhaft ein nach zweimaligem Durchlauf die Polarisation der Komponenten 40₁und 40₂ des einfallenden Strahlungsfeldes um 90° drehendes Element eingesetzt, so daß im wesentlichen das aus Überlagerung der beiden Komponenten 48₁und 48₂ gebildete zweite, frequenzidentische Strahlungsfeld in nahezu entgegengesetzter Richtung zum einfallenden Strahlungsfeld 40 zurückgekoppelt wird.

Dabei muß die zur Rückkopplung des zweiten Strahlungsfeldes 48₁und 48₂ erforderliche Polarisationsdrehung nicht durch das Element 297 erfolgen, denkbar sind auch andere Lösungen, z.B. durch Nutzung polarisationsbeeinflussender Eigenschaften des akustooptischen Modulators 30, durch zusätzliche Elemente zwischen akustooptischen Modulator 30 und ersten Verstärkerstrahlungsrückführsystem 212, durch zusätzliche Elemente im ersten Verstärkerstrahlungsrückführsystem 212, durch Nutzung polarisationsbeeinflussender Eigenschaften der Komponenten bei geeignetem Aufbau des ersten Verstärkerstrahlungsrückführungssystems 212 oder eine Kombination aus verschiedenen polarisationsbeeinflussenden Eigenschaften von im Laserverstärkersystem befindlichen Elementen.

Weitere Möglichkeiten bei der fünften Variante des ersten Ausführungsbeispiels ergeben sich unter Ausnutzung der Tatsache, daß die polarisationsbeeinflussenden Eigenschaften im Allgemeinen von der Ausrichtung der Polarisationskomponenten der Strahlungsfelder zu den Hauptachsen der polarisationsbeeinflussenden Elemente abhängen. Wird die für die Rückkopplung des zweiten Strahlungsfeldes 48₁und 48₂ gewünschte Polarisationsdrehung beispielsweise durch ein doppelbrechendes Element 297, das die lineare Polarisation der zwei Komponenten 40₁und 40₂ des einfallenden Strahlungsfeldes bei einer Ausrichtung der Hauptachsen der Doppelbrechung in 45° zur Polarisationsrichtung der Komponente 40₁ und 40₂ in jeweils weitestgehend in zirkulare Polarisation überführt, erzielt, so ergibt sich zusätzlich die Möglichkeit, durch Drehung des Elements 297 derart, daß deren Ausrichtung der Doppelbrechungshauptachsen mit den Polarisationsrichtungen der Komponente 40₁ und 40₂ übereinstimmt, so daß die Polarisation der Komponenten der Strahlungsfelder nicht geändert wird, das aus den Komponenten 46₁ und 46₂ gebildete erste, frequenzverschobene Strahlungsfeld zurückzukoppeln.

Damit erlaubt die fünfte Variante des ersten Ausführungsbeispiels ein Umschalten zwischen zwei unterschiedlichen Funktionsweisen ohne aufwendiges Betreiben und mit einfachen Mitteln.

Bei einer ersten Funktionsweise der fünften Variante des ersten Ausführungsbeispiels des Laserverstärkersystems, dargestellt in Fig. 18, erfolgt eine Rückkopplung des einfallenden Strahlungsfeldes 40 in das laseraktive Medium 216 dann, wenn die Beugungseffizienz des akustooptischen Modulators 30 im Bereich von 0 liegt, da dann die erste Komponente des zweiten Strahlungsfeldes 48₁ und die zweite Komponente des zweiten Strahlungsfeldes 48₂ jeweils die maximale Intensität führen, während bei einer Beugungseffizienz im Bereich von 50% aufgrund der im Zusammenhang mit dem ersten Ausführungsbeispiel ausführlich erläuterten Effekte, die erste Komponente des zweiten Strahlungsfeldes 48₁ und die zweite Komponente des zweiten Strahlungsfeldes 48₂ nahezu keine Leistung aufweisen, während nahezu die gesamte Leistung durch die erste Komponente des ersten Strahlungsfeldes 46₁ und die zweite Komponente des ersten Strahlungsfeldes 46₂ geführt und in diesem Fall ausgekoppelt wird. Bei der ersten Funktionsweise sind die Polarisationseinrichtungen der Komponenten 48₁und 48₂ des zurückgekoppelten zweiten Strahlungsfeldes sowie die Komponenten 46₁ und 46₂ des ausgekoppelten ersten Strahlungsfeldes gegenüber den Komponenten 40₁und 40₂ des einfallenden Strahlungsfeldes um 90° gedreht und es erfolgt im wesentlichen die Auskopplung des frequenzverschobenen Strahlungsfeldes und die Rückkopplung des frequenzidentischen Strahlungsfeldes.

Bei der zweiten Funktionsweise der fünften Variante des ersten Ausführungsbeispiels erfolgt eine maximale Rückkopplung des einfallenden Strahlungsfeldes 40 in das laseraktive Medium 216 dann, wenn die Beugungseffizienz des akustooptischen Modulators 30 im Bereich 50% liegt, da dann die Komponenten 46₁und 46₂ des ersten Strahlungsfeldes die jeweils die maximale Leistung führen, während bei einer Beugungseffizienz im Bereich von 0% die Komponenten 46₁ und 46₂ des ersten Strahlungsfeldes nahezu keine Leistung aufweisen. Bei der zweiten Funktionsweise sind die Polarisationsrichtungen der Komponenten 48₁und 48₂ des zurückgekoppelten zweiten Strahlungsfeldes sowie die Komponenten 46₁ und 46₂ des ausgekoppelten ersten Strahlungsfeldes gegenüber den Komponenten 40₁ und 40₂ des einfallenden Strahlungsfeldes nicht gedreht und es erfolgt im wesentlichen die Auskopplung des frequenzidentischen Strahlungsfeldes sowie die Rückkopplung des frequenzverschobenen Strahlungsfeldes.

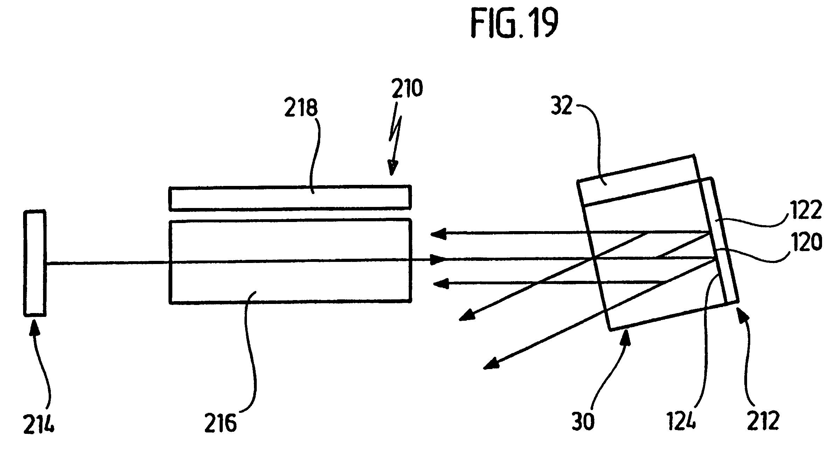

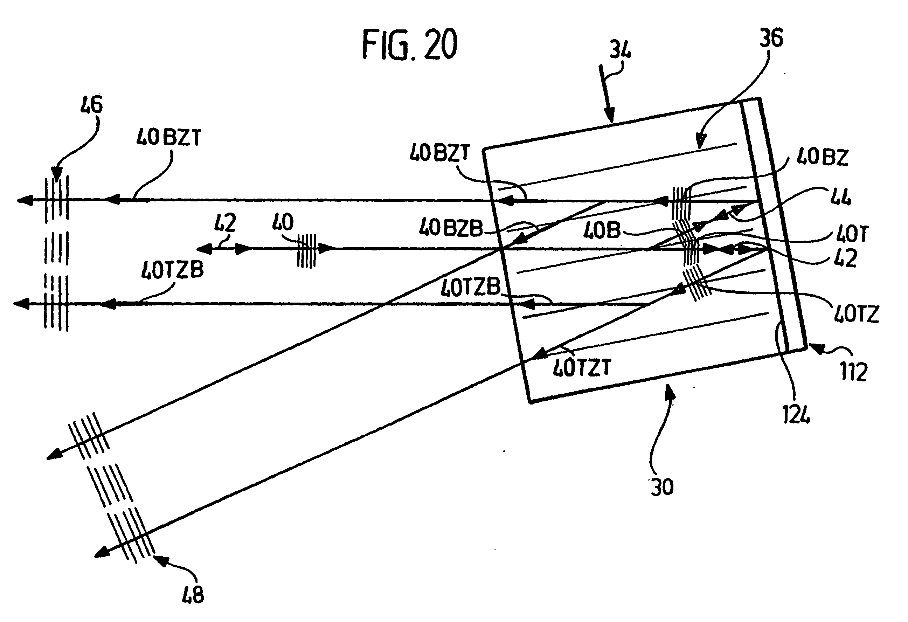

Bei einem zweiten Ausführungsbeispiel eines erfindungsgemäßen Laserverstärkersystems, dargestellt in Fig. 19 und 20, ist ebenfalls ein Laserresonator 210 vorgesehen, welcher ein erstes Strahlungsrückführsystem 212 und ein zweites Strahlungsrückführsystem 214 umfaßt, sowie ein innerhalb des Resonators 210 angeordnetes laseraktives Medium 216. Dabei ist das laseraktive Medium 216 ebenfalls durch eine Pumpquelle 218 pumpbar.

Vorzugsweise sind das laseraktive Medium 216, die Pumpquelle 218 und das zweite Strahlungsrückführsystem 214 in gleicher Weise ausgebildet wie beim ersten Ausführungsbeispiel des Laserverstärkersystems.

Darüber hinaus ist in dem Resonator 210 ebenfalls ein akustooptischer Modulator 30 vorgesehen, welcher in gleicher Weise ausgebildet ist und arbeitet wie beim ersten Ausführungsbeispiel des Laserverstärkersystems und wie im Zusammenhang mit dem achten Ausführungsbeispiel der erfindungsgemäßen Modulationseinrichtung beschrieben, so daß hierauf vollinhaltlich Bezug genommen wird.

Im Gegensatz zum ersten Ausführungsbeispiel des Laserverstärkersystems ist das erste Verstärkerstrahlungsrückführsystem 212 im einfachsten Fall als Reflektor ausgebildet, welcher durch eine auf einer für das einfallende Strahlungsfeld 40 austrittsseitigen Seitenfläche 120 des akustooptischen Modulators angeordnete reflektierende Schicht 122 gebildet ist und eine Reflektorfläche 124 aufweist, die unmittelbar auf der Seitenfläche 120 des akustooptischen Modulators 30 aufliegt und damit im wesentlichen mit dieser zusammenfällt.

Die beiden durch die erste und die zweite akustooptische Modulation entstandenen Äste 40BZT und 40TZB ergeben das sich in Richtung des zweiten Verstärkerstrahlungsrückführsystems 214 ausbreitende rücklaufende Strahlungsfeld 46 und die beiden durch die erste und die zweite akustooptische Modulation entstandenen Äste 40TZT und 40BZB ergeben das erste ausgekoppelte zweite Strahlungsfeld 48 in gleicher Weise wie beim ersten Ausführungsbeispiel, wobei allerdings die Äste 40TZT und 40BZB sowie 40BZT und 40TZB einen geringfügigen Versatz zueinander aufweisen, welcher insoweit unerheblich ist, als die Äste nach wie vor miteinander wechselwirken, so daß ebenfalls bei einer Beugungseffizienz von 50% eine vollständige Reflexion des einfallenden Strahlungsfeldes 40 in das sich entgegensetzt zu diesem in Richtung des zweiten Verstärkerstrahlungsrückführungssystems 214 ausbreitende rückreflektierte Strahlungsfeld 46 erfolgt.

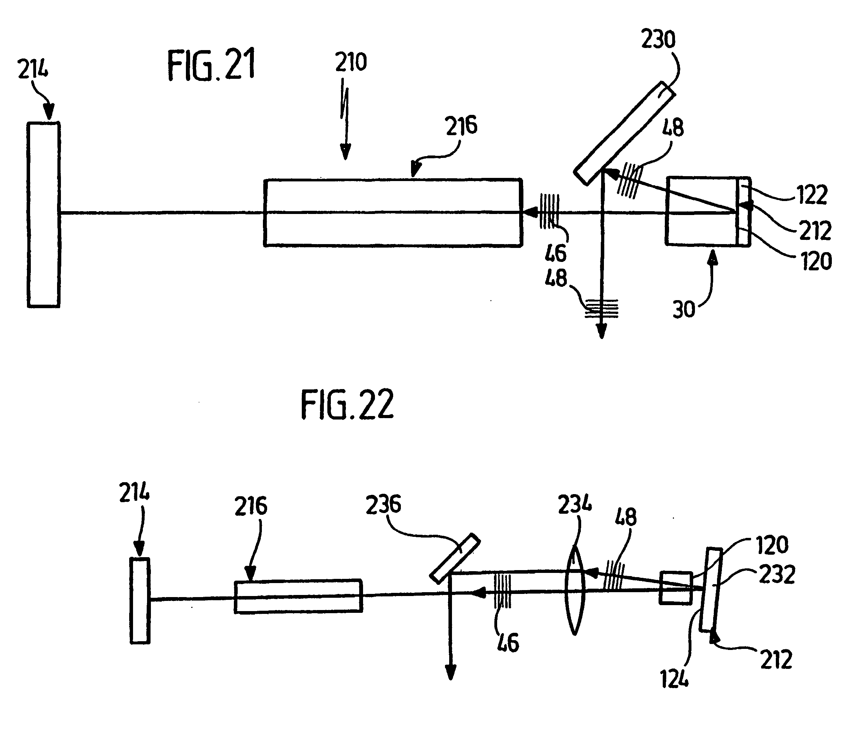

Bei einer ersten Variante des zweiten Ausführungsbeispiels des Laserverstärkersystems, dargestellt in Fig. 21 sind diejenigen Elemente, die mit denen des zweiten Ausführungsbeispiels des Laserverstärkersystems identisch sind, mit denselben Bezugszeichen versehen, so daß hinsichtlich der Beschreibung derselben vollinhaltlich auf die Ausführungen zum zweiten Ausführungsbeispiel Bezug genommen werden kann.

Im Gegensatz zum zweiten Ausführungsbeispiel ist für das ausgekoppelte Strahlungsfeld 48 noch ein zusätzlicher Reflektor 230 vorgesehen, welcher dieses so reflektiert, daß es sich quer zu dem zurückreflektierten Strahlungsfeld 46 ausbreitet.

Im übrigen kann vollinhaltlich auf die Ausführungen zum zweiten Ausführungsbeispiel Bezug genommen werden.

Bei einer zweiten Variante des zweiten Ausführungsbeispiels des Laserverstärkersystems, dargestellt in Fig. 22, ist das erste Verstärkerstrahlungsrückführsystem 212 als separater Spiegel 232 ausgebildet, welcher im Abstand von der Seitenfläche 120 des akustooptischen Modulators 30 angeordnet ist, jedoch in der im Zusammenhang mit dem zweiten Ausführungsbeispiel in Fig. 18 erläuterten Art und Weise den transmittierten Ast 40 und den gebeugten Ast 40B reflektiert, wobei der Querversatz zwischen diesen noch größer ist als bei dem in Fig. 18 und 19 dargestellten und beschriebenen zweiten Ausführungsbeispiel des Laserverstärkersystems.

Im übrigen ist zusätzlich noch eine Linse 234 vorgesehen, welche das ausgekoppelte Strahlungsfeld 48 parallel zum rückreflektierten Strahlungsfeld 46 so lange führt, bis das ausgekoppelte Strahlungsfeld auf einen Reflektor 236 trifft, der dieses dann quer zum rückreflektierten Strahlungsfeld 46 umlenkt.

Im übrigen sind diejenigen Elemente, die mit denen des zweiten Ausführungsbeispiels des Laserverstärkersystems identisch sind, mit denselben Bezugszeichen versehen, so daß vollinhaltlich auf die Ausführungen zum zweiten Ausführungsbeispiel Bezug genommen werden kann.

Mit den erfindungsgemäßen Ausführungsbeispielen eines Laserverstärkersystems lassen sich alle bislang bekannten Betriebsmodi ebenfalls realisieren, mit dem großen Vorteil, daß bereits bei Erreichen einer Beugungseffizienz von ungefähr 50% des akustooptischen Modulators 30 ein Auskopplungsgrad von ungefähr 0 oder 100% erreichbar ist und bei Abschalten der akustischen Leistung ein Auskopplungsgrad von ungefähr 100% bzw. 0, so daß alle bekannten Betriebsmodi wie Mode locking, Güteschaltung, zeitabhängige Modulation der Aufteilung und somit der Auskopplung und cavity dumping mit höherer Effizienz durchführbar sind.

## Patentansprüche

1. Optische Modulationseinrichtung zur Kopplung eines Eintrittsstrahlungsfeldes (12) mit mindestens einem von zwei Austrittsstrahlungsfeldern (14, 16), umfassend einen akustooptischen Modulator (30a), durch dessen akustooptisch aktives Medium (33a) ein erstes Schallwellenfeld (36a) in einer Schallausbreitungsrichtung (34a) hindurchwandert und mittels einer ersten akustooptischen Modulation ein in einer Eintrittsrichtung (24) einfallendes mit dem Eintrittsstrahlungsfeld (12) gekoppeltes Strahlungsfeld (40) im wesentlichen in einen sich in Richtung der Strahlachse (42) des einfallenden Strahlungsfeldes (40) ausbreitenden transmittierten Ast (40T) und einen mit seiner Strahlachse (44) in einem Beugungswinkel erster Ordnung (α) zur Strahlachse (42) des transmittierten Astes (40T) verlaufenden gebeugten Ast (40B) aufteilt, wobei eine Winkelhalbierende (W) zwischen der Strahlachse (42) des einfallenden Strahlungsfeldes (40) und der Strahlachse (44) des gebeugten Astes (40B) ungefähr parallel zur ersten Schallausbreitungsrichtung (34a) des Schallwellenfeldes (36a) verläuft,
**dadurch gekennzeichnet, daß** ein Strahlungsführungssystem (26, 126) vorgesehen ist, welches den bei der ersten akustooptischen Modulation entstandenen gebeugten Ast (40B) und den transmittierten Ast (40T) so umlenkt, daß diese mit ihren Strahlachsen (43, 45) ungefähr im Beugungswinkel erster Ordnung (α) relativ zueinander verlaufend mit einem wandernden, ungefähr dieselbe Frequenz wie das erste Schallwellenfeld (36a) aufweisenden zweiten Schallwellenfeld (36b) zur Erzeugung einer zweiten akustooptischen Modulation wechselwirken, wodurch aus dem umgelenkten gebeugten Ast (40BU, 40 BZ) und dem umgelenkten transmittierten Ast (40TU, 40TZ) jeweils ein gebeugter und ein transmittierter Ast entstehen, daß die Ausbreitungsrichtung (34b) des zweiten Schallwellenfelds (36b) relativ zu dem umgelenkten gebeugten Ast (40BU, 40BZ) und dem umgelenkten transmittierten Ast (40TU, 40TZ) so ausgerichtet ist, daß der aus dem umgelenkten gebeugten Ast (40BU, 40BZ) entstehende transmittierte Ast (40BUT, 40BZT)und der aus dem umgelenkten transmittierten Ast (40TU, 40TZ) entstehende gebeugte Ast (40TUB, 40TZB) sich in ungefähr derselben Richtung ausbreiten, sich zumindest teilweise überlagern und dabei im wesentlichen dieselbe Frequenz (F₀-F) aufweisen, so daß diese sich zumindest teilweise überlagernden Äste (40BUT, 40TUB, 40BZT, 40TZB) durch im wesentlichen konstruktive Interferenz ein erstes Strahlungsfeld (46) bilden, und außerdem der aus dem umgelenkten transmittierten Ast (40TU, 40TZ) entstehende. transmittierte Ast (40TUT, 40TZT) und der aus dem umgelenkten gebeugten Ast (40BU, 40BZ) entstehende gebeugte Ast (40BUB, 40BZB) sich in derselben Richtung ausbreiten, sich zumindest teilweise überlagern und dabei im wesentlichen dieselbe Frequenz (F₀) aufweisen, so daß diese sich zumindest teilweise überlagernden Äste durch im wesentlichen destruktive Interferenz ein zweites Strahlungsfeld (48) bilden, und daß das erste Strahlungsfeld (46) mit dem ersten Austrittsstrahlungsfeld (14) und das zweite Strahlungsfeld (48) mit dem zweiten Austrittsstrahlungsfeld (16) gekoppelt ist.

2. Modulationseinrichtung nach Anspruch 1, **dadurch gekennzeichnet, daß** sich die das erste Strahlungsfeld (46) bildenden Äste (40TUB, 40BUT, 40BZT, 40TZB)in wesentlichen Teilen überlagern.

3. Modulationseinrichtung nach Anspruch 1 oder 2, **dadurch gekennzeichnet, daß** sich die das zweite Strahlungsfeld (48) bildenden Äste (40TUT, 40BUB, 40TZT, 40BZB) in wesentlichen Teilen überlagern.

4. Modulationseinrichtung nach einem der voranstehenden Ansprüche, **dadurch gekennzeichnet, daß** die Erzeugung des ersten und des zweiten Schallwellenfeldes (36a, 36b) mit einem einzigen Schallfrequenzgenerator (31) erfolgt.

5. Modulationseinrichtung nach Anspruch 4, **dadurch gekennzeichnet, daß** das erste und das zweite Schallwellenfeld (36a, 36b) im wesentlichen gleich große Amplituden aufweisen.

6. Modulationseinrichtung nach einem der voranstehenden Ansprüche, **dadurch gekennzeichnet, daß** die erste akustooptische Modulation und die zweite akustooptische Modulation in getrennten akustooptischen Modulatoren (30a, 30b) erfolgen.

7. Modulationseinrichtung nach einem der Ansprüche 1 bis 5,
**dadurch gekennzeichnet, daß** die erste akustooptische Modulation und die zweite akustooptische Modulation in demselben akustooptischen Modulator (30) erfolgen.

8. Modulationseinrichtung nach Anspruch 7, **dadurch gekennzeichnet, daß** die erste akustooptische Modulation und die zweite akustooptische Modulation in demselben akustooptischen Modulator (30) im wesentlichen räumlich (41a, 41b) getrennt erfolgen.

9. Modulationseinrichtung nach Anspruch 7, **dadurch gekennzeichnet, daß** die erste akustooptische Modulation und die zweite akustooptische Modulation im wesentlichen in demselben Volumenbereich (41) des akustooptischen Modulators (30) erfolgen.

10. Modulationseinrichtung nach einem der voranstehenden Ansprüche, **dadurch gekennzeichnet, daß** eine Strahlachse (42) des einfallenden Strahlungsfeldes (40) und eine Strahlachse (44) des bei der ersten akustooptischen Modulation entstehenden gebeugten Astes (40B) sowie eine Strahlachse (42) des transmittierten Astes (40T) eine zur ersten Schallausbreitungsrichtung (34a) ungefähr parallele erste Modulationsebene (ME1) aufspannen und daß bei der zweiten akustooptischen Modulation die Strahlachsen (43, 45) der aus dem gebeugten Ast (40BU, 40BZ) und dem transmittierten Ast (40TU, 40TZ) entstehenden gebeugten und transmittierten Äste (40BUT, 40TUB, 40BZT, 40TZB) eine zur zweiten Schallausbreitungsrichtung (34b) ungefähr parallele zweite Modulationsebene (ME2) aufspannen.

11. Modulationseinrichtung nach Anspruch 10, **dadurch gekennzeichnet, daß** die erste und die zweite Modulationsebene (ME1, ME2) in einer gemeinsamen Ebene liegen.

12. Modulationseinrichtung nach Anspruch 10, **dadurch gekennzeichnet, daß** die erste und die zweite Modulationsebene (ME1, ME2) parallel versetzt zueinander angeordnet sind.

13. Modulationseinrichtung nach Anspruch 10, **dadurch gekennzeichnet, daß** die erste Modulationsebene (ME1) und die zweite Modulationsebene (ME2) in einem Winkel zueinander verlaufen.

14. Modulationseinrichtung nach Anspruch 13,
**dadurch gekennzeichnet, daß** die erste Modulationsebene (ME1) und die zweite Modulationsebene (ME2) sich schneiden und eine im wesentlichen parallel zur Schallausbreitungsrichtung (34) des Schallwellenfeldes (36) verlaufende Schnittlinie (S) aufweisen.

15. Modulationseinrichtung nach einem der Ansprüche 10 bis 14, **dadurch gekennzeichnet, daß** das Strahlungsführungssystem (26, 126) den bei der ersten akustooptischen Modulation entstehenden gebeugten Ast (40B) und den transmittierten Ast (40T) von der ersten Modulationsebene (ME1) in die zweite Modulationsebene (ME2) umsetzt.

16. Modulationseinrichtung nach einem der voranstehenden Ansprüche, **dadurch gekennzeichnet, daß** das Strahlungsführungssystem als Strahlungsrückführungssystem (26' bis 26"", 126) ausgebildet ist, welches den bei der ersten akustooptischen Modulation entstehenden gebeugten Ast (40B) und den transmittierten Ast (40T) in denselben akustooptischen Modulator (30) zurückführt.

17. Modulationseinrichtung nach Anspruch 16, **dadurch gekennzeichnet, daß** zu der zweiten akustooptischen Modulation der gebeugte Ast (40BU, 40BZ) ungefähr parallel zu dem bei der ersten akustooptischen Modulation entstehenden transmittierten Astes (40T) verläuft.

18. Modulationseinrichtung nach Anspruch 16 oder 17, **dadurch gekennzeichnet, daß** zu der zweiten akustooptischen Modulation der transmittierte Ast (40TU, 40TZ) ungefähr parallel zum bei der ersten akustooptischen Modulation entstehenden gebeugten Ast (40B) verläuft.

19. Modulationseinrichtung nach einem der voranstehenden Ansprüche, **dadurch gekennzeichnet, daß** das Strahlungsführungssystem (26, 126) so ausgebildet ist, daß ein optischer Weg zwischen der ersten akustooptischen Modulation und der zweiten akustooptischen Modulation für den gebeugten Ast (40B) und den transmittierten Ast (40T) ungefähr gleich groß ist.

20. Modulationseinrichtung nach einem der voranstehenden Ansprüche, **dadurch gekennzeichnet, daß** das Strahlungsführungssystem (26) die umgelenkten Äste (40TZ, 40BZ) so ausrichtet, daß diese in dem akustooptischen Modulator (30) aufeinanderzu verlaufen.

21. Modulationseinrichtung nach einem der voranstehenden Ansprüche, **dadurch gekennzeichnet**, daB das Strahlungsführungssystem (26) mindestens zwei Strahlumlenkungen (52, 56; 152, 156; 60, 62) aufweist, welche die nach der ersten akustooptischen Modulation mit dem Beugungswinkel (α) auseinanderlaufenden Äste (40T, 40B) als umgelenkte Äste (40TZ, 40BZ) zur zweiten akustooptischen Modulation mit dem Beugungswinkel (α) aufeinanderzu laufen läßt.

22. Modulationseinrichtung nach Anspruch 21, **dadurch gekennzeichnet, daß** die Strahlumlenkungen durch reflektierende Flächen (52, 56) gebildet sind.

23. Modulationseinrichtung nach einem der Ansprüche 20 bis 22, **dadurch gekennzeichnet, daß** das Strahlungsführungssystem (26) die umgelenkten Äste (40TU, 40BU; 40TZ, 40BZ) so in den akustooptischen Modulator (30) verlaufen läßt, daß diese sich in einem Verzweigungsbereich (41) innerhalb des zweiten Schallwellenfelder (36b) zumindest teilweise schneiden.

24. Modulationseinrichtung nach einem der Ansprüche 1 bis 19, **dadurch gekennzeichnet, daß** das Strahlungsführungssystem (126) die umgelenkten Äste (40TZ, 40BZ) als in dem akustooptischen Modulator (30) mit dem Beugungswinkel (α) auseinanderlaufende Äste zurückführt.

25. Modulationseinrichtung nach Anspruch 24, **dadurch gekennzeichnet, daß** das Strahlungsführungssystem (126) einen einzigen Reflektor (122) aufweist.

26. Modulationseinrichtung nach Anspruch 25, **dadurch gekennzeichnet, daß** der Reflektor (122) so ausgerichtet ist, daß ein auf diesen auftreffender Ast (40T, 40B) in einem Rückreflexionswinkel zurückreflektiert wird, welcher ungefähr dem Beugungswinkel (α) zwischen dem transmittierten Ast (40T) und dem gebeugten Ast (40B) entspricht.

27. Modulationseinrichtung nach Anspruch 25 oder 26, **dadurch gekennzeichnet, daß** der Reflektor (122, 132) eine ebene Reflektorfläche (124) aufweist.

28. Modulationseinrichtung nach einem der Ansprüche 25 bis 27, **dadurch gekennzeichnet, daß** der akustooptische Modulator (30) auf einer für das in diesen einfallende Strahlungsfeld (40) austrittsseitigen Seitenfläche (120) den Reflektor (122) trägt.

29. Modulationseinrichtung nach Anspruch 28, **dadurch gekennzeichnet, daß** der Reflektor (122) als auf die Seitenfläche (120) des akustooptischen Modulators (30) aufgetragene Reflektorschicht ausgebildet ist.

30. Modulationseinrichtung nach einem der voranstehenden Ansprüche, **dadurch gekennzeichnet, daß** das Strahlungsführungssystem (26, 126) und der akustooptische Modulator (30) so zusammenwirken, daß das erste Strahlungsfeld (46) und das zweite Strahlungsfeld (48) sich in Richtungen mit einer entgegengesetzt zur Ausbreitungsrichtung des einfallenden Strahlungsfeldes (40) verlaufenden Richtungskomponente ausbreiten.

31. Modulationseinrichtung nach Anspruch 30, **dadurch gekennzeichnet, daß** das aus dem akustooptischen Modulator (30) auf einer dem Strahlungsführungssystem (26, 126) gegenüberliegenden Seite austretende erste Strahlungsfeld (46) ungefähr parallel zum einfallenden Strahlungsfeld (40) verläuft und daß das zweite Strahlungsfeld (48) in einem Beugungswinkel erster Ordnung (α) gegenüber dem ersten Strahlungsfeld (46) verläuft.

32. Modulationseinrichtung nach einem der voranstehenden Ansprüche, **dadurch gekennzeichnet, daß** aus dem Eintrittsstrahlungsfeld (12) zwei getrennte einfallende Strahlungsfelder (40a, b) mit senkrecht zueinander stehenden Polarisationsrichtungen (18, 68) erzeugbar sind.

33. Modulationseinrichtung nach Anspruch 32, **dadurch gekennzeichnet, daß** die aus dem Eintrittsstrahlungsfeld (12) entstehenden polarisierten Strahlungsfelder (40) bis zur Bildung des Austrittsstrahlungsfeldes (14) eine Polarisationsdrehung um insgesamt 90° erfahren.

34. Modulationseinrichtung nach Anspruch 33, **dadurch gekennzeichnet, daß** die Polarisationsdrehung dadurch erreicht wird, daß das jeweilige einfallende Strahlungsfeld (40) in einem polarisationsbeeinflussenden Element (22) eine Polarisationsdrehung um 45° erfährt und das aus dem akustooptischen Modulator (30) austretende erste Strahlungsfeld (46) durch dasselbe polarisationsbeeinflussende Element (22) eine weitere Drehung um 45° erfährt.

35. Modulationseinrichtung nach Anspruch 33, **dadurch gekennzeichnet, daß** polarisationsbeeinflussende Elemente vorgesehen sind, die die Polarisationsrichtung des einfallenden Strahlungsfeldes (40) um 90° drehen und die Polarisationsrichtung des diese durchsetzenden ersten Strahlungsfeldes (46) unbeeinflusst lassen.

36. Modulationseinrichtung nach einem der voranstehenden Ansprüche, **dadurch gekennzeichnet, daß** eine optische Diode (80) vorgesehen ist, auf welche das Eintrittsstrahlungsfeld (12) trifft und welche das zurücklaufende erste Strahlungsfeld (46) in eines der Austrittsstrahlungsfelder (14) einkoppelt.

37. Modulationseinrichtung nach einem der voranstehenden Ansprüche, **dadurch gekennzeichnet, daß** die erste akustooptische Modulation mit einer Beugungseffizienz innerhalb eines Bereichs, der von ungefähr 0 % bis ungefähr 50 % reicht, betreibbar ist.

38. Modulationseinrichtung nach einem der voranstehenden Ansprüche, **dadurch gekennzeichnet, daß** die zweite akustooptische Modulation mit einer Beugungseffizienz innerhalb eines Bereichs, der von ungefähr 0 % bis ungefähr 50 % reicht, betreibbar ist.

39. Verwendung der Modulationseinrichtung nach einem der voranstehenden Ansprüche in einem Verstärkerstrahlungsfeld (222).

40. Verwendung der Modulationseinrichtung nach einem der Ansprüche 1-39 in einem Verstärkerstrahlungsfeld (222) eines Laserverstärkersystems.

41. Verwendung der Modulationseinrichtung nach einem der Ansprüche 1-39 in einem rückgekoppelten Laserverstärkersystems.

42. Verwendung der Modulationseinrichtung nach Anspruch 41, **dadurch gekennzeichnet, daß** das Strahlungsführungssystem (26, 126) ein Verstärkerstrahlungsrückführsystem (212) ist.

43. Laserverstärkersystem umfassend einen rückgekoppelten optischen Verstärker (210) mit zwei Verstärkerstrahlungsrückführungssystemen (212, 214), einen sich zwischen den Verstärkerstrahlungsrückführungssystemen (212, 214) erstreckenden und ein laseraktives Medium (216) durchsetzenden optisch aktiven Volumenbereich (220), innerhalb von welchem sich ein Verstärkerstrahlungsfeld (222) ausbildet, eine Modulationseinrichtung (10) mit einem von dem Verstärkerstrahlungsfeld (222) durchsetzten akustooptischen Modulator (30), in welchem sich akustische Wellenfronten in einer Schallausbreitungsrichtung (34) ausbreiten und ein Gitter (38) erzeugen, mittels welchem ein einfallendes Verstärkerstrahlungsfeld (222) jeweils in einen transmittierten Ast (40T) und einem zum transmittierten Ast (40T) in einem Beugungswinkel erster Ordnung (α) verlaufenden gebeugten Ast (40B)aufteilbar ist,
**dadurch gekennzeichnet, daß** die Modulationseinrichtung (10) nach einem der voranstehenden Ansprüche ausgebildet ist, wobei deren Strahlungsführungssystem (26, 126) das erste Verstärkerstrahlungsrückführsystem (212) bildet und deren einfallendes Strahlungsfeld (40) das Verstärkerstrahlungsfeld (222) ist.

44. Laserverstärkersystem nach Anspruch 43, **dadurch gekennzeichnet, daß** eines der Austrittstrahlungsfelder (14, 16) in den optischen Verstärker (210) rückkoppelbar ist.

45. Laserverstärkersystem nach Anspruch 44, **dadurch gekennzeichnet, daß** das andere der Austrittstrahlungsfelder (16, 14) aus dem Laserverstärkersystem auskoppelbar ist.

46. Laserverstärkersystem nach einem der Ansprüche 43 bis 45 **dadurch gekennzeichnet, daß** ein erstes der Verstärkerstrahlungsrückführsysteme (212) die sich im akustooptischen Modulator (30) längs ihrer Strahlachsen (42, 44) ausbreitenden und in das erste Verstärkerstrahlungsrückführsystem (212) einfallenden Äste (40T, 40B) derart zum akustooptischen Modulator (30) zurückführt, daß ein Winkel zwischen diesen ungefähr dem Beugungswinkel erster Ordnung entspricht, daß das erste Verstärkerstrahlungsrückführsystem (212) so angeordnet ist, daß es den sich im akustooptischen Modulator (30) bei der ersten akustooptischen Modulation gebildeten transmittierten Ast (40T) und den entsprechenden gebeugten Ast (40B) so in den akustooptischen Modulator (30) zurückführt, daß der zurückgeführte transmittierte Ast (40TZ) ungefähr denselben Winkel mit der Schallausbreitungsrichtung (34) einschließt wie der bei der ersten akustooptischen Modulation gebildete gebeugte Ast (40B) und der zurückgeführte gebeugte Ast (40BZ) ungefähr denselben Winkel mit der Schallausbreitungsrichtung (34) einschließt wie der bei der ersten akustooptischen Modulation gebildete transmittierte Ast (40T) und daß der zurückgeführte transmittierte Ast (40TZ) und der zurückgeführte gebeugte Ast (40BZ) so in dem akustooptischen Modulator (30) verlaufen, daß die aus dem zurückgeführten transmittierten Ast (40TZ) und dem zurückgeführten gebeugten Ast (40BZ) jeweils entstehenden transmittierten und gebeugten Äste (40TZT, 40TZB, 40BZT, 40BZB) sich zu einem ersten Strahlungsfeld (46) und zu einem zweiten Strahlungsfeld (48) überlagern.

47. Laserverstärkersystem nach Anspruch 46, **dadurch gekennzeichnet, daß** der transmittierte Ast (40T) und der gebeugte Ast (40B) in einer zur Schallausbreitungsrichtung (34) ungefähr parallelen ersten Modulationsebene (ME1) liegen.

48. Laserverstärkersystem nach Anspruch 47, **dadurch gekennzeichnet, daß** der zurückgeführte transmittierte Ast (40TZ) und der zurückgeführte gebeugte Ast (40BZ) in einer zur Schallausbreitungsrichtung (34) ungefähr parallelen zweiten Modulationsebene (ME2) liegen.

49. Laserverstärkersystem nach Anspruch 48 **dadurch gekennzeichnet, daß** die erste Modulationsebene (ME1) und die zweite Modulationsebene (ME2) ungefähr parallel zueinander verlaufen.

50. Laserverstärkersystem nach einem der Ansprüche 43 bis 49, **dadurch gekennzeichnet, daß** der zurückgeführte transmittierte Ast (40TZ) ungefähr parallel zum bei der ersten akustooptischen Modulation gebildeten gebeugten Ast (40B) und der zurückgeführte gebeugte Ast (40BZ) ungefähr parallel zum bei der ersten akustooptischen Modulation gebildeten transmittierten Ast (40T) verlaufen.

51. Laserverstärkersystem nach einem der Ansprüche 43 bis 50, **dadurch gekennzeichnet, daß** eine Rückführung des ersten Strahlungsfeldes (46) zu dem laseraktiven Medium (216) erfolgt.

52. Laserverstärkersystem nach Anspruch 51, **dadurch gekennzeichnet, daß** das erste Strahlungsfeld (46) durch die das einfallende Strahlungsfeld (40) zu dem akustooptischen Modulator (30) führenden optischen Elemente zu dem laseraktiven Medium (216) zurückgeführt ist.

53. Laserverstärkersystem nach einem der Ansprüche 43 bis 50, **dadurch gekennzeichnet, daß** eine Rückführung des zweiten Strahlungsfeldes (48) zu dem laseraktiven Medium (216) erfolgt.

54. Laserverstärkersystem nach Anspruch 53, **dadurch gekennzeichnet, daß** das zweite Strahlungsfeld (48) durch Rückführung zum akustooptischen Modulator (30) und über diesen sowie das erste Verstärkerstrahlungsrückführsystem (212) in das laseraktive Medium (216) zurückgeführt ist.

55. Laserverstärkersystem nach Anspruch 54, **dadurch gekennzeichnet, daß** das zweite Strahlungsfeld (48) durch Rückreflexion in sich selbst in das laseraktive Medium (216) zurückgeführt ist.

56. Laserverstärkersystem nach einem der Ansprüche 43 bis 55, **dadurch gekennzeichnet, daß** das erste oder das zweite Strahlungsfeld (46, 48) das zu dem laseraktiven Medium (216) zurückgeführte Strahlungsfeld bildet und daß das jeweils andere Strahlungsfeld (48, 46) das ausgekoppelte Strahlungsfeld bildet.

57. Laserverstärkersystem nach einem der Ansprüche 43 bis 56, **dadurch gekennzeichnet, daß** das erste Strahlungsrückführsystem (212"') einen Lichtleiter (280) umfaßt.

58. Laserverstärkersystem nach einem der Ansprüche 43 bis 57, **dadurch gekennzeichnet, daß** das erste Verstärkerstrahlungsrückführsystem (212) mindestens zwei Strahlumlenkungen (152, 156; 260, 262, 264; 270, 276) aufweist, welche die mit dem Beugungswinkel (α) auseinanderlaufenden Äste (40T, 40B) als zurückgeführte Äste (40TZ, 40BZ) wieder mit dem Beugungswinkel (α) aufeinanderzu laufen läßt.

59. Laserverstärkersystem nach Anspruch 58, **dadurch gekennzeichnet, daß** die Strahlumlenkungen als reflektierende Flächen (152, 156) ausgebildet sind.

60. Laserverstärkersystem nach Anspruch 57 oder 58, **dadurch gekennzeichnet, daß** die Strahlumlenkungen Linsen (260, 262, 270) und Reflektoren (264, 276) umfassen.

61. Laserverstärkersystem nach einem der Ansprüche 43 bis 60, **dadurch gekennzeichnet, daß** das erste Verstärkerstrahlungsrückführsystem (212) die zurückgeführten Äste (40TZ, 40BZ) so ausrichtet, daß diese in dem akustooptischen Modulator (30) aufeinanderzu verlaufen.

62. Laserverstärkersystem nach Anspruch 61, **dadurch gekennzeichnet, daß** das erste Verstärkerstrahlungsrückführsystem (212) die zurückgeführten Äste (40TZ und 40BZ) so in den akustooptischen Modulator (30) verlaufen läßt, daß diese sich ungefähr im Verzweigungsbereich (41) zumindest teilweise schneiden.

63. Laserverstärkersystem nach einem der Ansprüche 43 bis 60, **dadurch gekennzeichnet, daß** das erste Verstärkerstrahlungsrückführsystem (212) die zurückgeführten Äste (40TZ und 40BZ) als in dem akustooptischen Modulator (30) mit dem Beugungswinkel (α) auseinanderlaufende Äste zurückführt.

64. Laserverstärkersystem nach Anspruch 63, **dadurch gekennzeichnet, daß** das erste Verstärkerstrahlungsrückführsystem (212) einen einzigen Reflektor (122, 132) aufweist.

65. Laserverstärkersystem nach Anspruch 64, **dadurch gekennzeichnet, daß** der Reflektor (122, 132) so ausgerichtet ist, daß ein auf diesen auftreffender Ast (40T, 40B) in einem Rückreflexionswinkel zurückreflektiert wird, welcher ungefähr dem Beugungswinkel (α) zwischen dem transmittierten Ast (40T) und dem gebeugten Ast (40B) entspricht.

66. Laserverstärkersystem nach Anspruch 64 oder 65, **dadurch gekennzeichnet, daß** der Reflektor (122, 132) eine ebene Reflektorfläche (124) aufweist.

67. Laserverstärkersystem nach einem der Ansprüche 64 bis 66, **dadurch gekennzeichnet, daß** der Reflektor (132) vom akustooptischen Modulator (30) getrennt angeordnet ist.

68. Laserverstärkersystem nach einem der Ansprüche 64 bis 66, **dadurch gekennzeichnet, daß** der akustooptische Modulator (30) auf einer für das in diesen einfallende Strahlungsfeld (40) austrittsseitigen Seitenfläche (120) den Reflektor (122) trägt.

## Claims

1. Optical modulation device for coupling an entering radiation field (12) to at least one of two exiting radiation fields (14, 16), comprising an acousto-optical modulator (30a), a first sound wave field (36a) migrating through the acousto-optically active medium (33a) of said modulator in a sound propagation direction (34a) and by means of a first acousto-optical modulation dividing a radiation field (40) incident in an entry direction (24) and coupled to the entering radiation field (12) essentially into a transmitted branch (40T) propagating in the direction of the beam axis (42) of the incident radiation field (40) and a diffracted branch (40B) extending with its beam axis (44) at an angle of diffraction of the first order (α) in relation to the beam axis (42) of the transmitted branch (40T), wherein an angle bisector (W) between the beam axis (42) of the incident radiation field (40) and the beam axis (44) of the diffracted branch (40B) extends approximately parallel to the first sound propagation direction (34a) of the sound wave field (36a),
**characterized in that** a radiation guide system (26, 126) is provided for deflecting the diffracted branch (40B) resulting during the first acousto-optical modulation and the transmitted branch (40T) such that with their beam axes (43, 45) extending approximately at the angle of diffraction of the first order (α) relative to one another they interact with a migrating second sound wave field (36b) having approximately the same frequency as the first sound wave field (36a) in order to generate a second acousto-optical modulation, whereby a diffracted and a transmitted branch respectively result from the deflected, diffracted branch (40BU, 40BZ) and the deflected, transmitted branch (40TU, 40TZ), that the direction of propagation (34b) of the second sound wave field (36b) is aligned relative to the deflected, diffracted branch (40BU, 40BZ) and to the deflected, transmitted branch (40TU, 40TZ) such that the transmitted branch (40BUT, 40BZT) resulting from the deflected, diffracted branch (40BU, 40BZ) and the diffracted branch (40TUB, 40TZB) resulting from the deflected, transmitted branch (40TU, 40TZ) propagate in approximately the same direction, are at least partially superimposed and thereby have essentially the same frequency (F₀-F) so that these at least partially superimposed branches (40BUT, 40TUB, 40BZT, 40TZB) form a first radiation field (46) as a result of essentially constructive interference, and in addition the transmitted branch (40TUT, 40TZT) resulting from the deflected, transmitted branch (40TU, 40TZ) and the diffracted branch (40BUB, 40BZB) resulting from the deflected, diffracted branch (40BU, 40BZ) propagate in the same direction, are at least partially superimposed and thereby have essentially the same frequency (F₀) so that these at least partially superimposed branches form a second radiation field (48) as a result of essentially destructive interference, and that the first radiation field (46) is coupled to the first exiting radiation field (14) and the second radiation field (48) to the second exiting radiation field (16).

2. Modulation device as defined in claim 1, **characterized in that** the branches (40TUB, 40BUT, 40BZT, 40TZB) forming the first radiation field (46) are superimposed in essential parts.

3. Modulation device as defined in claim 1 or 2, **characterized in that** the branches (40TUT, 40BUB, 40TZT, 40BZB) forming the second radiation field (48) are superimposed in essential parts.

4. Modulation device as defined in any one of the preceding claims, **characterized in that** the first and the second sound wave fields (36a, 36b) are generated with a single sound frequency generator (31).

5. Modulation device as defined in claim 4, **characterized in that** the first and the second sound wave fields (36a, 36b) have amplitudes of essentially the same size.

6. Modulation device as defined in any one of the preceding claims, **characterized in that** the first acousto-optical modulation and the second acousto-optical modulation take place in separate acousto-optical modulators (30a, 30b).

7. Modulation device as defined in any one of claims 1 to 5, **characterized in that** the first acousto-optical modulation and the second acousto-optical modulation take place in the same acousto-optical modulator (30).

8. Modulation device as defined in claim 7, **characterized in that** the first acousto-optical modulation and the second acousto-optical modulation take place in the same acousto-optical modulator (30) essentially separated spatially (41a, 41b).

9. Modulation device as defined in claim 7, **characterized in that** the first acousto-optical modulation and the second acousto-optical modulation take place essentially in the same volume area (41) of the acousto-optical modulator (30).

10. Modulation device as defined in any one of the preceding claims, **characterized in that** a beam axis (42) of the incident radiation field (40) and a beam axis (44) of the diffracted branch (40B) resulting during the first acousto-optical modulation as well as a beam axis (42) of the transmitted branch (40T) define a first plane of modulation (ME1) approximately parallel to the first sound propagation direction (34a) and that during the second acousto-optical modulation the beam axes (43, 45) of the diffracted and transmitted branches (40BUT, 40TUB, 40BZT, 40TZB) resulting from the diffracted branch (40BU, 40BZ) and the transmitted branch (40TU, 40TZ) define a second plane of modulation (ME2) approximately parallel to the second sound propagation direction (34b).

11. Modulation device as defined in claim 10, **characterized in that** the first and the second planes of modulation (ME1, ME2) are located in a common plane.

12. Modulation device as defined in claim 10, **characterized in that** the first and the second planes of modulation (ME1, ME2) are arranged so as to be offset parallel to one another.

13. Modulation device as defined in claim 10, **characterized in that** the first plane of modulation (ME1) and the second plane of modulation (ME2) extend at an angle to one another.

14. Optical modulation device as defined in claim 13, **characterized in that** the first plane of modulation (ME1) and the second plane of modulation (ME2) intersect and have a line of intersection (S) extending essentially parallel to the sound propagation direction (34) of the sound wave field (36).

15. Modulation device as defined in any one of claims 10 to 14, **characterized in that** the radiation guide system (26, 126) diverts the diffracted branch (40B) resulting during the first acousto-optical modulation and the transmitted branch (40T) from the first plane of modulation (ME1) into the second plane of modulation (ME2).

16. Modulation device as defined in any one of the preceding claims, **characterized in that** the radiation guide system is designed as a radiation return system (26' to 26"", 126) returning the diffracted branch (40B) resulting during the first acousto-optical modulation and the transmitted branch (40T) to the same acousto-optical modulator (30).

17. Modulation device as defined in claim 16, **characterized in that** the diffracted branch (40BU, 40BZ) runs to the second acousto-optical modulation approximately parallel to the transmitted branch (40T) resulting during the first acousto-optical modulation.

18. Modulation device as defined in claim 16 or 17, **characterized in that** the transmitted branch (40TU, 40TZ) runs to the second acousto-optical modulation approximately parallel to the diffracted branch (40B) resulting during the first acousto-optical modulation.

19. Modulation device as defined in any one of the preceding claims, **characterized in that** the radiation guide system (26, 126) is designed such that an optical path between the first acousto-optical modulation and the second acousto-optical modulation is approximately of the same size for the diffracted branch (40B) and the transmitted branch (40T).

20. Modulation device as defined in any one of the preceding claims, **characterized in that** the radiation guide system (26) aligns the deflected branches (40TZ, 40BZ) such that they extend towards one another in the acousto-optical modulator (30).

21. Modulation device as defined in any one of the preceding claims, **characterized in that** the radiation guide system (26) has at least two beam deflections (52, 56; 152, 156; 60, 62) causing the branches (40T, 40B) running apart from one another at the angle of diffraction (α) following the first acousto-optical modulation to run towards one another at the angle of diffraction (α) to the second acousto-optical modulation as deflected branches (40TZ, 40BZ).

22. Modulation device as defined in claim 21, **characterized in that** the beam deflections are formed by reflecting surfaces (52, 56).

23. Modulation device as defined in any one of claims 20 to 22, **characterized in that** the radiation guide system (26) causes the deflected branches (40TU, 40BU; 40TZ, 40BZ) to run into the acousto-optical modulator (30) such that they intersect one another at least partially in a junction area (41) within the second sound wave field (36b).

24. Modulation device as defined in any one of claims 1 to 19, **characterized in that** the radiation guide system (126) returns the deflected branches (40TZ, 40BZ) as branches running apart from one another in the acousto-optical modulator (30) at the angle of diffraction (α).

25. Modulation device as defined in claim 24, **characterized in that** the radiation guide system (126) has a single reflector (122).

26. Modulation device as defined in claim 25, **characterized in that** the reflector (122) is aligned such that a branch (40T, 40B) impinging on it is reflected back at an angle of return reflection corresponding approximately to the angle of diffraction (α) between the transmitted branch (40T) and the diffracted branch (40B).

27. Modulation device as defined in claim 25 or 26, **characterized in that** the reflector (122, 132) has a flat reflector surface (124).

28. Modulation device as defined in any one of claims 25 to 27, **characterized in that** the acousto-optical modulator (30) bears the reflector (122) on a side surface (120) on the exit side for the radiation field (40) incident in it.

29. Modulation device as defined in claim 28, **characterized in that** the reflector (122) is designed as a reflector layer applied to the side surface (120) of the acousto-optical modulator (30).

30. Modulation device as defined in any one of the preceding claims, **characterized in that** the radiation guide system (26, 126) and the acousto-optical modulator (30) interact such that the first radiation field (46) and the second radiation field (48) propagate in directions having a directional component extending in the opposite direction to the direction of propagation of the incident radiation field (40).

31. Modulation device as defined in claim 30, **characterized in that** the first radiation field (46) exiting from the acousto-optical modulator (30) on a side located opposite the radiation guide system (26, 126) extends approximately parallel to the incident radiation field (40) and that the second radiation field (48) extends at an angle of diffraction of the first order (α) in relation to the first radiation field (46).

32. Modulation device as defined in any one of the preceding claims, **characterized in that** two separate incident radiation fields (40a, b) with directions of polarization (18, 68) at right angles to one another are generatable from the entering radiation field (12).

33. Modulation device as defined in claim 32, **characterized in that** the polarized radiation fields (40) resulting from the incident radiation field (12) experience a rotation of polarization through altogether 90° until the exiting radiation field (14) is formed.

34. Modulation device as defined in claim 33, **characterized in that** the rotation of polarization is achieved **in that** the respective incident radiation field (40) experiences a rotation of polarization through 45° in a polarization-influencing element (22) and the first radiation field (46) exiting from the acousto-optical modulator (30) experiences a further rotation through 45° as a result of the same polarization-influencing element (22).

35. Modulation device as defined in claim 33, **characterized in that** polarization-influencing elements are provided for turning the direction of polarization of the incident radiation field (40) through 90° and leaving unaffected the direction of polarization of the first radiation field (46) passing through them.

36. Modulation device as defined in any one of the preceding claims, **characterized in that** an optical diode (80) is provided, the incident radiation field (12) impinging on said diode and said diode coupling the returning first radiation field (46) into one of the exiting radiation fields (14).

37. Modulation device as defined in any one of the preceding claims, **characterized in that** the first acousto-optical modulation is operable with a diffraction efficiency within a range reaching from approximately 0 % to approximately 50 %.

38. Modulation device as defined in any one of the preceding claims, **characterized in that** the second acousto-optical modulation is operable with a diffraction efficiency within a range reaching from approximately 0 % to approximately 50 %.

39. Use of the modulation device as defined in any one of the preceding claims in an amplifying radiation field (222).

40. Use of the modulation device as defined in any one of claims 1 to 39 in an amplifying radiation field (222) of a laser amplifying system.

41. Use of the modulation device as defined in any one of claims 1 to 39 in a feedback laser amplifying system.

42. Use of the modulation device as defined in claim 41, **characterized in that** the radiation guide system (26, 126) is an amplifying radiation return system (212).

43. Laser amplifying system comprising a feedback optical amplifier (210) with two amplifying radiation return systems (212, 214), an optically active volume area (220) extending between the amplifying radiation return systems (212, 214) and passing through a laser-active medium (216), an amplifying radiation field (222) being formed within said volume area, a modulation device (10) with an acousto-optical modulator (30) having the amplifying radiation field (222) passing through it, acoustic wave fronts propagating in said modulator in a sound propagation direction (34) and generating a grating (38), an incident amplifying radiation field (222) being divisible by means of said grating into a respective transmitted branch (40T) and a respective diffracted branch (40B) extending at an angle of diffraction of the first order (α) in relation to the transmitted branch (40T), **characterized in that** the modulation device (10) is designed as defined in any one of the preceding claims, wherein its radiation guide system (26, 126) forms the first amplifying radiation return system (212) and its incident radiation field (40) is the amplifying radiation field (222).

44. Laser amplifying system as defined in claim 43, **characterized in that** one of the exiting radiation fields (14, 16) is adapted to be coupled back into the optical amplifier (210).

45. Laser amplifying system as defined in claim 44, **characterized in that** the other one of the exiting radiation fields (16, 14) is adapted to be coupled out of the laser amplifying system.

46. Laser amplifying system as defined in any one of claims 43 to 45, **characterized in that** a first one of the amplifying radiation return systems (212) returns the branches (40T, 40B) incident in the first amplifying radiation return system (212) and propagating in the acousto-optical modulator (30) along their beam axes (42, 44) to the acousto-optical modulator (30) in such a manner that an angle between them corresponds approximately to the angle of diffraction of the first order, that the first amplifying radiation return system (212) is arranged such that it returns the transmitted branch (40T) formed in the acousto-optical modulator (30) during the first acousto-optical modulation and the corresponding diffracted branch (40B) to the acousto-optical modulator (30) such that the returned transmitted branch (40TZ) forms approximately the same angle with the sound propagation direction (34) as the diffracted branch (40B) formed during the first acousto-optical modulation and the returned diffracted branch (40BZ) forms approximately the same angle with the sound propagation direction (34) as the transmitted branch (40T) formed during the first acousto-optical modulation and that the returned transmitted branch (40TZ) and the returned diffracted branch (40BZ) extend in the acousto-optical modulator (30) such that the transmitted and diffracted branches (40TZT, 40TZB, 40BZT, 40BZB) respectively resulting from the returned transmitted branch (40TZ) and the returned diffracted branch (40BZ) are superimposed to form a first radiation field (46) and a second radiation field (48).

47. Laser amplifying system as defined in claim 46, **characterized in that** the transmitted branch (40T) and the diffracted branch (40B) are located in a first plane of modulation (ME1) approximately parallel to the sound propagation direction (34).

48. Laser amplifying system as defined in claim 47, **characterized in that** the returned transmitted branch (40TZ) and the returned diffracted branch (40BZ) are located in a second plane of modulation (ME2) approximately parallel to the sound propagation direction (34).

49. Laser amplifying system as defined in claim 48, **characterized in that** the first plane of modulation (ME1) and the second plane of modulation (ME2) extend approximately parallel to one another.

50. Laser amplifying system as defined in any one of claims 43 to 49, **characterized in that** the returned transmitted branch (40TZ) extends approximately parallel to the diffracted branch (40B) formed during the first acousto-optical modulation and the returned diffracted branch (40BZ) extends approximately parallel to the transmitted branch (40T) formed during the first acousto-optical modulation.

51. Laser amplifying system as defined in any one of claims 43 to 50, **characterized in that** the first radiation field (46) is returned to the laser-active medium (216).

52. Laser amplifying system as defined in claim 51, **characterized in that** the first radiation field (46) is returned to the laser-active medium (216) by means of the optical elements guiding the incident radiation field (40) to the acousto-optical modulator (30).

53. Laser amplifying system as defined in any one of claims 43 to 50, **characterized in that** the second radiation field (48) is returned to the laser-active medium (216).

54. Laser amplifying system as defined in claim 53, **characterized in that** the second radiation field (48) is returned to the laser-active medium (216) by being returned to the acousto-optical modulator (30) and via this as well as the first amplifying radiation return system (212).

55. Laser amplifying system as defined in claim 54, **characterized in that** the second radiation field (48) is returned to the laser-active medium (216) due to reflection back into itself.

56. Laser amplifying system as defined in any one of claims 43 to 55, **characterized in that** the first or the second radiation field (46, 48) forms the radiation field returned to the laser-active medium (216) and that the respectively other radiation field (48, 46) forms the radiation field coupled out.

57. Laser amplifying system as defined in any one of claims 43 to 56, **characterized in that** the first radiation return system (212"') comprises a light guide (280).

58. Laser amplifying system as defined in any one of claims 43 to 57, **characterized in that** the first amplifying radiation return system (212) has at least two beam deflections (152, 156; 260, 262, 264; 270, 276) causing the branches (40T, 40B) running apart from one another at the angle of diffraction (α) to run towards one another again at the angle of diffraction (α) as returned branches (40TZ, 40BZ).

59. Laser amplifying system as defined in claim 58, **characterized in that** the beam deflections are designed as reflecting surfaces (152, 156).

60. Laser amplifying system as defined in claim 57 or 58, **characterized in that** the beam deflections comprise lenses (260, 262, 270) and reflectors (64, 76).

61. Laser amplifying system as defined in any one of claims 43 to 60, **characterized in that** the first amplifying radiation return system (212) aligns the returned branches (40TZ, 40BZ) such that they extend towards one another in the acousto-optical modulator (30).

62. Laser amplifying system as defined in claim 61, **characterized in that** the first amplifying radiation return system (212) causes the returned branches (40TZ and 40BZ) to run into the acousto-optical modulator (30) such that they intersect one another at least partially approximately in the junction area (41).

63. Laser amplifying system as defined in any one of claims 43 to 60, **characterized in that** the first amplifying radiation return system (212) returns the returned branches (40TZ and 40BZ) as branches running apart from one another in the acousto-optical modulator (30) at the angle of diffraction (α).

64. Laser amplifying system as defined in claim 63, **characterized in that** the first amplifying radiation return system (212) has a single reflector (122, 132).

65. Laser amplifying system as defined in claim 64, **characterized in that** the reflector (122, 132) is aligned such that a branch (40T, 40B) impinging on it is reflected back at an angle of return reflection corresponding approximately to the angle of diffraction (α) between the transmitted branch (40T) and the diffracted branch (40B).

66. Laser amplifying system as defined in claim 64 or 65, **characterized in that** the reflector (122, 132) has a flat reflector surface (124).

67. Laser amplifying system as defined in any one of claims 64 to 66, **characterized in that** the reflector (132) is arranged separately from the acousto-optical modulator (30).

68. Laser amplifying system as defined in any one of claims 64 to 66, **characterized in that** the acousto-optical modulator (30) bears the reflector (122) on a side surface (120) on the exit side for the radiation field (40) incident in it.

## Revendications

1. Unité de modulation optique pour le couplage d'un champ de rayonnement d'entrée (12) avec au moins un champ de rayonnement de sortie parmi deux (14, 16), comprenant un modulateur acousto-optique (30a), à travers le milieu acousto-optique actif (33a) duquel un premier champ d'ondes sonores (36a) passe selon une direction de propagation des sons (34a) et répartit, au moyen d'une première modulation acousto-optique, un champ de rayonnement (40), qui arrive en incidence selon une direction d'entrée (24) et qui est couplé avec le champ de rayonnement d'entrée (12), sensiblement en une branche transmise (40 T) se propageant en direction de l'axe de rayonnement (42) du champ de rayonnement incident (40) et en une branche diffractée (40B) s'étendant avec son axe de rayonnement (44) selon un angle de diffraction de premier ordre (α) vers l'axe de rayonnement (42) de la branche transmise (40T), alors qu'une bissectrice (W) entre l'axe de rayonnement (42) du champ de rayonnement incident (40) et l'axe de rayonnement (44) de la branche diffractée (40B) s'étend à peu près parallèlement à la première direction de propagation du son (34a) du champ d'ondes sonores (36a), **caractérisée en ce qu'**il est prévu un système de guidage du rayonnement (26, 126) qui dévie de telle façon la branche diffractée (40B) qui s'est constituée lors de la première modulation acousto-optique et la branche transmise (40T) que, pour constituer une deuxième modulation acousto-optique, celles-ci, en s'étendant l'une par rapport à l'autre à peu près selon l'angle de diffraction de premier ordre (α), soient en action réciproque avec leurs axes de rayonnement (43, 45) avec un deuxième champ d'ondes sonores progressif (36b) ayant à peu près la même fréquence que le premier champ d'ondes sonores (36a), en fonction de quoi une branche diffractée et une branche transmise sont constituées respectivement à partir de la branche déviée diffractée (40BU, 40BZ) et de la branche déviée transmise (40TU, 40TZ), **en ce que** la direction de propagation (34b) du deuxième champ d'ondes sonores (36b) est orientée de telle façon par rapport à la branche déviée diffractée (40BU, 40BZ) et à la branche déviée transmise (40TU, 40TZ) que la branche transmise (40BUT, 40BZT) constituée à partir de la branche déviée diffractée (40BU, 40BZ) et la branche diffractée (40TUB, 40TZB) constituée à partir de la branche déviée transmise (40TU, 40TZ) se propagent à peu près dans la même direction, se superposent au moins partiellement et ont ainsi sensiblement la même fréquence (F₀-F), de sorte que ces branches (40BUT, 40TUB, 40BZT, 40TZB), qui se superposent au moins partiellement, forment par une interférence sensiblement constructive un premier champ de rayonnement (46) et qu'en outre la branche transmise (40TUT, 40TZT) constituée à partir de la branche déviée transmise (40TU, 40TZ) et la branche diffractée (40BUB, 40BZB) constituée à partir de la branche déviée diffractée (40BU, 40BZ) se propagent dans la même direction, se superposent au moins partiellement et ont ainsi sensiblement la même fréquence (F₀), de sorte que ces branches qui se superposent au moins partiellement forment par une interférence sensiblement destructrice un deuxième champ de rayonnement (48) et **en ce que** le premier champ de rayonnement (46) est couplé avec le premier champ de rayonnement de sortie (14) et le deuxième champ de rayonnement (48) est couplé avec le deuxième champ de rayonnement de sortie (16).

2. Unité de modulation selon la revendication 1, **caractérisée en ce que** les branches (40 TUB, 40BUT, 40BZT, 40TZB) formant le premier champ de rayonnement (46) se superposent dans des parties essentielles.

3. Unité de modulation selon la revendication 1 ou 2, **caractérisée en ce que** les branches (40 TUT, 40BUB, 40TZT, 40BZB) formant le deuxième champ de rayonnement (48) se superposent dans des parties essentielles.

4. Unité de modulation selon l'une quelconque des revendications précédentes, **caractérisée en ce que** la constitution du premier et du deuxième champs d'ondes sonores (36a, 36b) a lieu avec un seul générateur de fréquences sonores (31).

5. Unité de modulation selon la revendication 4, **caractérisée en ce que** le premier et le deuxième champs d'ondes sonores (36a, 36b) ont des amplitudes sensiblement de la même importance.

6. Unité de modulation selon l'une quelconque des revendications précédentes, **caractérisée en ce que** la première modulation acousto-optique et la deuxième modulation acousto-optique ont lieu dans des modulateurs acousto-optiques séparés (30a, 30b).

7. Unité de modulation selon l'une quelconque des revendications 1 à 5, **caractérisée en ce que** la première modulation acousto-optique et la deuxième modulation acousto-optique ont lieu dans le même modulateur acousto-optique (30).

8. Unité de modulation selon la revendication 7, **caractérisée en ce que** la première modulation acousto-optique et la deuxième modulation acousto-optique ont lieu dans le même modulateur acousto-optique (30) en faisant sensiblement l'objet d'une séparation dans l'espace (41a, 41b)

9. Unité de modulation selon la revendication 7, **caractérisée en ce que** la première modulation acousto-optique et la deuxième modulation acousto-optique ont lieu sensiblement dans la même zone de volume (41) du modulateur acousto-optique (30).

10. Unité de modulation selon l'une quelconque des revendications précédentes, **caractérisée en ce qu'**un axe de rayonnement (42) du champ de rayonnement incident (40) et un axe de rayonnement (44) de la branche diffractée (40B) constituée lors de la première modulation acousto-optique ainsi qu'un axe de rayonnement (42) de la branche transmise (40T) projettent un premier plan de modulation (ME1) à peu près parallèle à la première direction de propagation du son (34a) et **en ce que**, lors de la deuxième modulation acousto-optique, les axes de rayonnement (43, 45) des branches diffractées et transmises (40BUT, 40TUB, 40BZT, 40TZB) constituées à partir de la branche diffractée (40BU, 40BZ) et à partir de la branche transmise (40TU, 40TZ) projettent un deuxième plan de modulation (ME2) à peu parallèle à la deuxième direction de propagation du son (34b).

11. Unité de modulation selon la revendication 10, **caractérisée en ce que** le premier et le deuxième plans de modulation (ME1, ME2) se trouvent sur un plan commun.

12. Unité de modulation selon la revendication 10, **caractérisée en ce que** le premier et le deuxième plans de modulation (ME1, ME2) sont disposés en parallèle en étant décalés entre eux.

13. Unité de modulation selon la revendication 10, **caractérisée en ce que** le premier plan de modulation (ME1) et le deuxième plan de modulation (ME2) s'étendent en formant un angle entre eux.

14. Unité de modulation optique selon la revendication 13, **caractérisée en ce que** le premier plan de modulation (ME1) et le deuxième plan de modulation (ME2) se coupent et comprennent une ligne d'intersection (S) s'étendant sensiblement en parallèle avec la direction de propagation du son (34) du champ d'ondes sonores (36).

15. Unité de modulation selon l'une quelconque des revendications 10 à 14, **caractérisée en ce que** le système de guidage du rayonnement (26, 126) transpose du premier plan de modulation (ME1) dans le deuxième plan de modulation (ME2) la branche diffractée (40B), qui s'est constitué lors de la première modulation acousto-optique, ainsi que la branche transmise (40T).

16. Unité de modulation selon l'une quelconque des revendications précédentes, **caractérisée en ce que** le système de guidage du rayonnement est configuré comme système de réinjection du rayonnement (26' à 26"", 126), lequel ramène la branche diffractée (40B) qui s'est constituée lors de la première modulation acousto-optique et la branche transmise (40T) dans le même modulateur acousto-optique (30).

17. Unité de modulation selon la revendication 16, **caractérisée en ce que** pour la deuxième modulation acousto-optique, la branche diffractée (40BU, 40BZ) s'étend à peu près parallèlement à la branche transmise (40T) se constituant lors de la première modulation acousto-optique.

18. Unité de modulation selon la revendication 16 ou 17, **caractérisée en ce que** pour la deuxième modulation acousto-optique, la branche transmise (40TU, 40TZ) s'étend à peu près parallèlement à la branche diffractée (40B) se constituant lors de la première modulation acousto-optique.

19. Unité de modulation selon l'une quelconque des revendications précédentes, **caractérisée en ce que** le système de guidage du rayonnement (26, 126) est configuré de telle façon qu'un trajet optique entre la première modulation acousto-optique et la deuxième modulation acousto-optique est à peu près de même importance pour la branche diffractée (40B) et pour la branche transmise (40T).

20. Unité de modulation selon l'une quelconque des revendications précédentes, **caractérisée en ce que** le système de guidage du rayonnement (26) oriente de telle façon les branches déviées (40TZ, 40BZ) que celles-ci soient dirigées l'une vers l'autre dans le modulateur acousto-optique (30).

21. Unité de modulation selon l'une quelconque des revendications précédentes, **caractérisée en ce que** le système de guidage du rayonnement (26) comprend au moins deux déviations de rayonnement (52, 56, ; 152, 156 ; 60, 62) qui font se diriger l'une vers l'autre avec l'angle de diffraction (α) et comme branches déviées (40TZ, 40BZ) pour la deuxième modulation acousto-optique les branches (40T, 40B) s'écartant l'une de l'autre avec l'angle de diffraction (α) après la première modulation acousto-optique.

22. Unité de modulation selon la revendication 21, **caractérisée en ce que** les déviations de rayonnement sont constituées par des surfaces réfléchissantes (52, 56).

23. Unité de modulation selon l'une quelconque des revendications 20 à 22, **caractérisée en ce que** le système de guidage du rayonnement (26) fait s'étendre de telle façon les branches déviées (40TU, 40BU ; 40TZ, 40BZ) dans le modulation acousto-optique (30) que celles-ci se coupent au moins partiellement dans une zone de ramification (41) à l'intérieur du deuxième champ d'ondes sonores (36b).

24. Unité de modulation selon l'une quelconque des revendications 1 à 19, **caractérisée en ce que** le système de guidage du rayonnement (126) réinjecte les branches déviées (40TZ, 40BZ) en tant que branches qui, dans le modulateur acousto-optique (30), s'écartent l'une de l'autre avec l'angle de diffraction (α).

25. Unité de modulation selon la revendication 24, **caractérisée en ce que** le système de guidage du rayonnement (126) comprend un seul réflecteur (122).

26. Unité de modulation selon la revendication 25, **caractérisée en ce que** le réflecteur (122) est orienté de telle façon qu'une branche (40T, 40B) qui arrive en incidence sur lui est réfléchie en retour avec un angle de réflexion en retour qui correspond approximativement à l'angle de diffraction (α) entre la branche transmise (40T) et la branche diffractée (40B).

27. Unité de modulation selon la revendication 25 ou 26, **caractérisée en ce que** le réflecteur (122, 132) comprend une surface de réflecteur plane (124).

28. Unité de modulation selon l'une quelconque des revendications 25 à 27, **caractérisée en ce que** le modulateur acousto-optique (30) porte le réflecteur (122) sur une surface latérale (120) située du côté sortie pour le champ de rayonnement (40) en incidence sur celui-ci.

29. Unité de modulation selon la revendication 28, **caractérisée en ce que** le réflecteur (122) est configuré comme couche de réflexion appliquée sur la surface latérale (120) du modulateur acousto-optique (30).

30. Unité de modulation selon l'une quelconque des revendications précédentes, **caractérisée en ce que** le système de guidage du rayonnement (26, 126) et le modulateur acousto-optique (30) sont en interaction telle que le premier champ de rayonnement (46) et le deuxième champ de rayonnement (48) se propagent dans des directions avec une composante de direction s'étendant dans le sens contraire à la direction de propagation du champ de rayonnement incident (40).

31. Unité de modulation selon la revendication 30, **caractérisée en ce que** le premier champ de rayonnement (46) sortant du modulateur acousto-optique (30) sur un côté opposé au système de guidage du rayonnement (26, 126) s'étend à peu près parallèlement au champ de rayonnement incident (40) et **en ce que** le deuxième champ de rayonnement (48) s'étend avec un angle de diffraction de premier ordre (α) par rapport au premier champ de rayonnement (46).

32. Unité de modulation selon l'une quelconque des revendications précédentes, **caractérisée en ce qu'**à partir du champ de rayonnement d'entrée (12) peuvent être constitués deux champs de rayonnement incidents séparés (40a, b) avec des directions de polarisation (18, 68) perpendiculaires entre elles.

33. Unité de modulation selon la revendication 32, **caractérisée en ce que** les champs de rayonnement polarisés (40) se constituant à partir du champ de rayonnement d'entrée (12) sont, jusqu'à la formation du champs de rayonnement de sortie (14), soumis à une rotation de la polarisation dont la valeur totale est de 90°.

34. Unité de modulation selon la revendication 33, **caractérisée en ce que** la rotation de la polarisation est obtenue par le fait que le champ de rayonnement respectivement incident (40) est soumis dans un élément influençant la polarisation (22) à une rotation de la polarisation de 45° et que le premier champ de rayonnement (46) sortant du modulateur acousto-optique (30) est soumis à une rotation supplémentaire de 45° par le même élément influençant la polarisation (22).

35. Unité de modulation selon la revendication 33, **caractérisée en ce que** sont prévus des éléments influençant la polarisation qui assurent une rotation de 90° de la direction de polarisation du champ de rayonnement incident (40) et qui n'exercent aucune influence sur la direction de polarisation du premier champ de rayonnement (46) qui les traverse.

36. Unité de modulation selon l'une quelconque des revendications précédentes, **caractérisée en ce qu'**est prévue une diode optique (80) sur laquelle arrive le champ de rayonnement d'entrée (12) et qui injecte le premier champ de rayonnement en retour (46) dans un des champs de rayonnement de sortie (14).

37. Unité de modulation selon l'une quelconque des revendications précédentes, **caractérisée en ce que** la première modulation acousto-optique peut être exploitée avec une efficacité de diffraction située à l'intérieur d'une plage s'étendant d'environ 0% jusqu'à environ 50%.

38. Unité de modulation selon l'une quelconque des revendications précédentes, **caractérisée en ce que** la deuxième modulation acousto-optique peut être exploitée avec une efficacité de diffraction située à l'intérieur d'une plage s'étendant d'environ 0% jusqu'à environ 50%.

39. Utilisation de l'unité de modulation selon l'une quelconque des revendications précédentes dans un champ de rayonnement d'amplificateur (222).

40. Utilisation de l'unité de modulation selon l'une quelconque des revendications 1-39 dans un champ de rayonnement d'amplificateur (222) d'un système d'amplification à laser.

41. Utilisation de l'unité de modulation selon l'une quelconque des revendications 1-39 dans un système d'amplificateur à laser couplé en retour.

42. Utilisation de l'unité de modulation selon la revendication 41, **caractérisée en ce que** le système de guidage du rayonnement (26, 126) est un système de réinjection du rayonnement d'amplificateur (212).

43. Système d'amplification à laser comprenant un amplificateur optique couplé en retour (210) avec deux systèmes de réinjection du rayonnement d'amplificateur (212, 214), avec une zone de volume (220) optiquement active qui s'étend entre les systèmes de réinjection du rayonnement d'amplificateur (212, 214), qui traverse un milieu actif pour le laser (216) et à l'intérieur de laquelle se constitue un champ de rayonnement d'amplificateur (222), avec un dispositif de modulation (10) avec un modulateur acousto-optique (30) traversé par le champ de rayonnement d'amplificateur (222) et dans lequel des fronts d'ondes acoustiques se propagent dans une direction de propagation des sons (34) en formant une grille (38), à l'aide de laquelle un champ de rayonnement d'amplificateur incident (222) peut être réparti respectivement en une branche transmise (40T) et en une branche diffractée (40B) s'étendant selon un angle de diffraction de premier ordre (α) par rapport à la branche transmise (40T), **caractérisé en ce que** le dispositif de modulation (10) est configuré selon l'une quelconque des revendications précédentes, alors que son système de guidage du rayonnement (26, 126) constitue le premier système de réinjection du rayonnement d'amplificateur (212) et que son champ de rayonnement incident (40) est le champ de rayonnement d'amplificateur (222).

44. Système d'amplification à laser selon la revendication 43, **caractérisé en ce que** l'un des champs de rayonnement de sortie (14, 16) peut être couplé en retour dans l'amplificateur optique (210).

45. Système d'amplification à laser selon la revendication 44, **caractérisé en ce que** l'autre des champs de rayonnement de sortie (16, 14) peut être découplé du système d'amplification à laser.

46. Système d'amplification à laser selon l'une quelconque des revendications 43 à 45, **caractérisé en ce qu'**un premier des systèmes de réinjection du rayonnement d'amplificateur (212) réinjecte de telle façon vers le modulateur acousto-optique (30) les branches (40T, 40B) s'étendant dans le modulateur acousto-optique (30) le long de leurs axes de rayonnement (42, 44) et arrivant en incidence dans le premier système de réinjection du rayonnement d'amplificateur (212) qu'un angle entre celles-ci correspond approximativement à l'angle de diffraction de premier ordre, **en ce que** le premier système de réinjection du rayonnement d'amplificateur (212) est disposé de telle manière qu'il réinjecte de telle façon dans le modulateur acousto-optique (30) la branche transmise (40T) qui s'est constituée dans le modulateur acousto-optique (30) lors de la première modulation acousto-optique et la branche diffractée correspondante (40B) que la branche réinjectée transmise (40TZ) inscrit avec la direction de propagation du son (34) à peu près le même angle que la branche diffractée (40B) constituée lors de la première modulation acousto-optique et que la branche réinjectée diffractée (40BZ) inscrit avec la direction de propagation du son (34) à peu près le même angle que la branche transmise (40T) constituée lors de la première modulation acousto-optique et **en ce que** la branche réinjectée transmise (40TZ) et la branche réinjectée diffractée (40BZ) s'étendent de telle façon dans le modulateur acousto-optique (30) que les branches transmises et les branches diffractées (40TZT, 40TZB, 40BZT, 40BZB), qui sont constituées respectivement à partir de la branche réinjectée transmise (40TZ) et de la branche réinjectée diffractée (40BZ), se superposent pour constituer un premier champ de rayonnement (46) et un deuxième champ de rayonnement (48).

47. Système d'amplification à laser selon la revendication 46, **caractérisé en ce que** la branche transmise (40T) et la branche diffractée (40B) sont situées dans un premier plan de modulation (ME1) à peu près parallèle à la direction de propagation du son (34).

48. Système d'amplification à laser selon la revendication 47, **caractérisé en ce que** la branche réinjectée transmise (40TZ) et la branche réinjectée diffractée (40BZ) sont situées dans un deuxième plan de modulation (ME2) à peu près parallèle à la direction de propagation du son (34).

49. Système d'amplification à laser selon la revendication 48, **caractérisé en ce que** le premier plan de modulation (ME1) et le deuxième plan de modulation (ME2) s'étendent à peu près parallèlement l'un par rapport à l'autre.

50. Système d'amplification à laser selon l'une quelconque des revendications 43 à 49, **caractérisé en ce que** la branche réinjectée transmise (40TZ) s'étend à peu près parallèlement à la branche diffractée (40B) constituée lors de la première modulation acousto-optique et que la branche réinjectée diffractée (40BZ) s'étend à peu près parallèlement à la branche transmise (40T) constituée lors de la première modulation acousto-optique.

51. Système d'amplification à laser selon l'une quelconque des revendications 43 à 50, **caractérisé en ce qu'**a lieu une réinjection du premier champ de rayonnement (46) dans le milieu actif pour le laser (216).

52. Système d'amplification à laser selon la revendication 51, **caractérisé en ce que** le premier champ de rayonnement (46) est réinjecté dans le fluide actif pour le laser (216) par les éléments optiques conduisant le champ de rayonnement incident (40) vers le modulateur acousto-optique (30).

53. Système d'amplification à laser selon l'une quelconque des revendications 43 à 50, **caractérisé en ce qu'**a lieu une réinjection du deuxième champ de rayonnement (48) dans le milieu actif pour le laser (216).

54. Système d'amplification à laser selon la revendication 53, **caractérisé en ce que**, par une réinjection vers le modulateur acousto-optique (30) et par l'intermédiaire de celui-ci ainsi que du premier système de réinjection du rayonnement d'amplificateur (212, le deuxième champ de rayonnement (48) est réinjecté dans le milieu actif pour le laser (216)).

55. Système d'amplification à laser selon la revendication 54, **caractérisé en ce que** le deuxième champ de rayonnement (48) est réinjecté dans le milieu actif pour le laser (216) par une réflexion en retour dans lui-même.

56. Système d'amplification à laser selon l'une quelconque des revendications 43 à 55, **caractérisé en ce que** le premier ou le deuxième champ de rayonnement (46, 48) constitue le champ de rayonnement réinjecté dans le milieu actif pour le laser (216) et **en ce que** l'autre champ de rayonnement respectif (48, 46) constitue le champ de rayonnement découplé.

57. Système d'amplification à laser selon l'une quelconque des revendications 43 à 56, **caractérisé en ce que** le premier système de réinjection du rayonnement (212''') comprend une fibre optique (280).

58. Système d'amplification à laser selon l'une quelconque des revendications 43 à 57, **caractérisé en ce que** le premier système de réinjection du rayonnement d'amplificateur (212) comprend au moins deux déviations de rayons (152, 156 ; 260, 262, 264 ; 270, 276) qui font à nouveau se diriger l'une vers l'autre en tant que branches réinjectées (40TZ, 40BZ) et avec l'angle de diffraction (α) les branches (40T, 40B) s'écartant avec l'angle de diffraction (α).

59. Système d'amplification à laser selon la revendication 58, **caractérisé en ce que** les déviations de rayons sont configurées comme surfaces réfléchissantes (152, 156).

60. Système d'amplification à laser selon la revendication 57 ou 58, **caractérisé en ce que** les déviations de rayons comprennent des lentilles (260, 262, 270) et des réflecteurs (64, 76).

61. Système d'amplification à laser selon l'une quelconque des revendications 43 à 60, **caractérisé en ce que** le premier système de réinjection du rayonnement d'amplificateur (212) oriente les branches réinjectées (40TZ, 40BZ) de telle façon que celles-ci s'étendent l'une vers l'autre dans le modulateur acousto-optique (30).

62. Système d'amplification à laser selon la revendication 61, **caractérisé en ce que** le premier système de réinjection du rayonnement d'amplificateur (212) fait s'étendre les branches réinjectées (40TZ et 40BZ) de telle façon dans le modulateur acousto-optique (30) que celles-ci se coupent au moins partiellement à peu près dans la zone de ramification (41).

63. Système d'amplification à laser selon l'une quelconque des revendications 43 à 60, **caractérisé en ce que** le premier système de réinjection du rayonnement d'amplificateur (212) réinjecte les branches réinjectées (40TZ et 40BZ) en tant que branches qui, dans le modulateur acousto-optique (30), s'écartent avec l'angle de diffraction (α).

64. Système d'amplification à laser selon la revendication 63, **caractérisé en ce que** le premier système de réinjection du rayonnement d'amplificateur (212) comprend un seul réflecteur (122, 132).

65. Système d'amplification à laser selon la revendication 64, **caractérisé en ce que** le réflecteur (122, 132) est orienté de telle façon qu'une branche (40T, 40B) arrivant en incidence sur lui est réfléchie en retour avec un angle de réflexion en retour qui correspond à peu près à l'angle de diffraction (α) entre la branche transmise (40T) et la branche diffractée (40B).

66. Système d'amplification à laser selon la revendication 64 ou 65, **caractérisé en ce que** le réflecteur (122, 132) comprend une surface de réflecteur plane (124).

67. Système d'amplification à laser selon l'une quelconque des revendications 64 à 66, **caractérisé en ce que** le réflecteur (132) est disposé en étant séparé du modulateur acousto-optique (30).

68. Système d'amplification à laser selon l'une quelconque des revendications 64 à 66, **caractérisé en ce que** le modulateur acousto-optique (30) porte le réflecteur (122) sur une surface latérale (120) située du côté sortie pour le champ de rayonnement (40) en incidence sur celui-ci.
